# EUROPÄISCHE PATENTSCHRIFT

(11) **EP 2 934 854 B1**
(45) Veröffentlichungstag und Bekanntmachung des Hinweises auf die Patenterteilung: **30.08.2017**
(21) Anmeldenummer: 12815996.9
(22) Anmeldetag: 20.12.2012
(51) Int. Cl.: B29C 55/20

(54) **RECKANLAGE**
STRETCHING UNIT
INSTALLATION D'ÉTIRAGE

(43) Veröffentlichungstag der Anmeldung: 28.10.2015
(73) Patentinhaber: Brückner Maschinenbau GmbH & Co. KG, 83313 Siegsdorf (DE)
(72) Erfinder: BAUMEISTER, Michael, 83278 Traunstein (DE); GIAPOULIS, Anthimos, 83278 Traunstein (DE); UNTERREINER, Markus, 83250 Marquartstein (DE); HÄUSL, Tobias, 83278 Traunstein (DE); KULINYAK, Emmerich, 83346 Bergen (DE); MURNER, Georg, 83346 Bergen (DE)
(74) Vertreter: Flach, Dieter Rolf Paul
(86) Internationale Anmeldenummer: PCT/EP2012/005317
(87) Internationale Veröffentlichungsnummer: WO 2014/094803

(56) Entgegenhaltungen:
- DE-A1- 2 749 119
- US-A- 5 797 172

## Beschreibung

Die Erfindung betrifft eine Reckanlage nach dem Oberbegriff des Anspruchs 1.

Reckanlagen finden insbesondere bei der Kunststofffolien-Herstellung Anwendung. Bekannt sind sogenannte Simultan- Reckanlagen, in welchen ein Kunststofffilm gleichzeitig in Quer- und Längsrichtung gereckt werden kann. Bekannt sind ebenso sequentielle Reckanlagen, bei denen ein Kunststofffilm in zwei aufeinander folgenden Stufen gereckt wird, beispielsweise zunächst in Längsrichtung und dann in Querrichtung (oder umgekehrt).

Eine gattungsbildende Querreckanlage oder Querreckstufe innerhalb einer Reckanlage ist aus der US 5 797 172 bekannt geworden. Gemäß dieser Vorveröffentlichung wird eine zu reckende Materialbahn, in der Regel also ein Kunststofffilm, mittels Kluppen erfasst, die an Ketten befestigt sind, und die auf beiden Seiten der zu reckenden Materialbahn auf umlaufendenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer gewissen Relaxation und/ oder Wärmenachbehandlung unterzogen werden kann.

Diese Querreck-Anlage umfasst eine Führungsschiene längs der die Transportkette geführt wird, wobei unterhalb dieser Führungsschiene eine weitere Tragkonstruktion mit einer Tragschiene vorgesehen ist, auf welcher sich das Gewicht der umlaufenden Kette im Bereich der Kluppen abstützen kann. Die Transportkette im Allgemeinen und die Kluppenkörper im Besonderen, die an den Kettengliedern in Längsrichtung der Transportkette versetzt liegend ausgebildet sind, weisen jeweils ein oben liegendes und ein demgegenüber tiefer liegendes Paar von aufeinander zu ausgerichteten Gleitelementen auf, die mit der Kluppe mit bewegt werden, und die an den beiden gegenüberliegenden, voneinander weg weisenden, vertikal und zueinander parallel ausgerichteten Lauf- und Gleitflächen anliegen. Dadurch können sich die Querkräfte an der Führungsschiene abstützen, also u.a. auch die Reckkräfte, die Fliehkräfte sowie die Kettenkräfte etc.. Darüber hinaus sollen durch dieses Konstruktionsprinzip an der sogenannten Führungsschiene auch die entsprechenden, auf die Kluppen und damit auf die Transportkette eingeleiteten Kippmomente aufgenommen und abgestützt werden. Sowohl die Schwerkraft-Ebene, die Kettenlängskraft-Ebene als auch die Reckkraft-Ebene liegen bei dieser Konstruktion weit auseinander und verursachen auch ohne externe Kraftangriffe, wie etwa der Reckkraft, Kippmomente, die einseitige Belastungen der Gleitlager, insbesondere der Führungsschiene-Gleitlager bewirken.

Eine Breitreck-Anlage mit einer Führungsschiene ist grundsätzlich z.B. aus der EP 0 471 052 B1 bekannt geworden. Eine umlaufende Transportkette wird hier über Kluppenwagen an der Führungsschiene verschiebbar geführt und abgestützt. Dazu sind an den beiden gegenüberliegenden Vertikalflächen der im Querschnitt rechteckförmigen Führungsschiene jeweils zwei um eine Vertikalachse rotierende Stütz- oder Führungsräder vorgesehen. Weitere Stützräder drehen um eine Horizontalachse und sind so angeordnet, dass das Gewicht der Transportkette und der Kluppen auf der oben liegenden, horizontal ausgerichteten Schmalseite der Führungsschiene abgestützt wird.

Eine Führungseinrichtung für zu einer endlosen Kette zusammengefasste, gleitend geführte Spannkluppen in einem Spannrahmen ist auch aus der DE 27 49 119 A1 bekannt geworden. Das Transportsystem zeichnet sich durch ein Schienensystem mit einer oberen und unteren Trag- und Führungsschiene aus, die in Vertikalrichtung übereinander beabstandet angeordnet sind. Als Transportsystem ist hier ferner eine Doppelkette vorgesehen, nämlich - bezogen auf die Trag- und Führungsschiene - mit zum einen oben und zum anderen unten liegenden Kettengliedern, die sich zwischen den vertikal nach oben bzw. vertikal nach unten weisenden Gleitflächen des Schienensystems abstützen. Der Kluppentisch zum Festklemmen einer Folie ist in einer Höhe angeordnet, die mittig zu dem Schienen- und Kettensystem liegt. Dadurch kann ein mittiger Kraftangriff an dem Kettensystem realisiert werden, und zwar auch dann, wenn die Transportkette mit den Kluppen die Reckzone durchläuft, währenddessen also entsprechende Reckkräfte durch die Folie auf die umlaufende Transportkette mit den Kluppen eingeleitet werden. Der Schwerpunkt liegt hier außerhalb der Führungsschiene und bewirkt dadurch eine Verkippung der Anordnung. Das gesamte Gewicht der Anordnung wird nur auf der kleinen Gleitfläche des Elementes abgestützt.

Eine mittige Krafteinleitung bei einem Transportkettensystem ist grundsätzlich auch aus der DE 33 39 149 A1 als bekannt zu entnehmen. Die Abstützung der umlaufenden Kette erfolgt hier zwischen einem oberen und einem im Abstand dazu tiefer liegenden Gleitstück in einem im Querschnitt U-förmigen Profilrahmen, wodurch die Bahn der fortbewegten Kette definiert ist. Ferner ist noch ein drittes Gleitstück vorgesehen, welches zu den beiden erstgenannten horizontal ausgerichteten und in einem vertikalen Abstand zueinander angeordneten Gleitstücken in Querrichtung versetzt liegt, nämlich in Richtung eines sogenannten Nadelleistentragarmes, an welchem sich die quer in Richtung des Nadelleistentragarmes wirkenden Kräfte abstützen können.

Eine kombinierte Spannkluppe ist aus der DE 22 25 337 zu entnehmen. Sie umfasst einen als Nadelleiste bezeichneten Kluppenhebel mit einem unterhalb des Klemmtisches vorzugsweise in einem 45° verlaufenden Nadelleistenträger. Auf der zur Materialbahn abgewandt liegenden Außenseite ist in einem im Querschnitt C-förmigen Schienenträger, in der dadurch definierten Führungsbahn, der Kluppenkörper gelagert. Der Krafteingriff der an den Kluppenkörpern angreifenden zu behandelnden Materialbahn wird dabei mittig in die umlaufende Transportkette eingeleitet, wobei der Kluppenkörper mittels einer Gleitlagerung in dem im Querschnitt C-förmigen Führungsschienensystem verfahrbar ist. Die C-Schienenkonstruktion ist insbesondere an Gelenken für Hochgeschwindigkeitssysteme nicht geeignet.

Ferner sind aber auch eine Reihe von Transportsystemen zur Behandlung einer Materialbahn und insbesondere von Querreck-Anlagen mit umlaufenden Transportketten und daran ausgebildeten Kluppen bekannt, die ebenfalls mittels einer Gleitlagerung an einem Schienenträgersystem abgestützt sind, wobei allerdings hier die horizontal an den Kluppenkörpern über die Materialbahn angreifenden Kräfte nicht mittig in das Transportketten-Abstützsystem eingeleitet werden.

Derartige Systeme sind beispielsweise aus der DE 35 03 612 bekannt geworden. Das System wird über einer Tragschiene mit einer Gleitlagerung abgestützt gehalten, wobei die Transportkette zur Aufnahme von Kippmomenten über eine zum Rand der zu behandelnden Materialbahn entfernt liegende vertikale Gleitschiene abgestützt ist. Die Schwerkraft-Ebene liegt auch hier weit außerhalb der Reckkraft-Ebene und verursacht damit ein Kippmoment. Zudem kann durch die Querkraft, verursacht durch die Kettenlängskraft, nicht hinreichend abgestützt werden.

Ein insoweit ähnliches Prinzip ist aus der DE 11 77 803 als bekannt zu entnehmen, welches eine Abstützung der Transportkette gegenüber einem horizontalen Gleitlager zeigt. Zur Aufnahme der Reckkräfte in dem Breitstreckrahmen ist ferner eine Drehmomentstütze vorgesehen.

Ein ebenfalls vergleichbares Prinzip ist auch in der JP 07 108 599 dargestellt. Aber auch in der EP 0 138 177 B1 ist eine Spannkette für Spannrahmentrockner zu entnehmen, bei welcher die Glieder der Transportkette, d.h. insbesondere die Kluppenkörper über ein sogenanntes Grundkontaktelement gegenüber einer horizontalen Tragfläche und über ein Seitenkontaktelement an einem vertikal ausgerichteten und mit der Oberfläche von der Behandlungsbahn weg weisenden Seitenkontaktelement gehalten sind, worüber sich die Transportkette abstützt. Ferner ist eine Drehmomentstütze vorgesehen, die in einer nutförmigen Ausnehmung des Tragschienensystems auf der zur Behandlungsbahn entfernt liegenden Seite der Transportkette eingreift. Die über die Behandlungsbahn eingeleiteten Reckkräfte greifen dabei etwa mittig an dem Transportkettensystem an. Die gezeigten und beschriebenen Kontaktelemente, die an den Kettengliedern vorgesehen sind, sollen dabei beispielsweise aus mit Kohlenstoff gefülltem, reibungsvermindernden Polytetrafluorethylen bestehen.

Eine von der Gleit- und Abstützeinrichtung vergleichbare Anordnung ist dabei ferner aus dem durch die US 4,882,820 bekannten Gleitreckrahmen zu entnehmen. Auch hier ist eine vollfläche Gleitlagerung zur Abstützung der Transportkette gezeigt. Zur Abstützung der u.a. auch durch die Reckkräfte eingeleiteten Kippmomente ist eine Drehmomentstütze auf der zum reckenden Film entfernt liegenden Außenseite des Kluppenkörpers vorgesehen.

Schließlich ist auch aus der US 4,926,529 ein Breitreckrahmen gezeigt, der ebenso wie in der zuvor erläuterten US 4,882,820 auf eine Ölschmierung verzichtet. Die Gleitelemente liegen hier in einer Wanne, wobei sich die Kluppenkörper, die mit der Transportkette fortbewegt werden, an einer horizontalen Trag- und einer vertikalen Abstütz- und Lauffläche gleitend abstützen. Ebenfalls ist wieder eine rückwärtige Drehmomentstütze vorgesehen, um die insbesondere nicht mittig in das Abstützsystem eingeleiteten Reckkräfte aufzunehmen.

Aufgabe der vorliegenden Erfindung ist es, ausgehend von diesem Stand der Technik ein verbessertes Transportsystem zum Recken einer Materialbahn, insbesondere eines Kunststofffolienfilms in Querrichtung zu schaffen, welches insgesamt reibungsärmer und damit verschleißfreier unter Benötigung weniger Energie bezüglich einer vorgegebenen Anlagengeschwindigkeit betreibbar ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird eine extrem optimierte Ausgestaltung eines entsprechenden Transportkettensystems mit zugehörigen Kluppen zum Einspannen, Halten, Fortbewegen und Recken einer Materialbahn geschaffen, wodurch erhebliche Vorteile realisierbar sind. Dabei kann das erfindungsgemäße System mit deutlich höheren Geschwindigkeiten betrieben werden, ohne dass dies zu einer Überhitzung oder auch zum Entstehen zu großer Reibkräfte führen würde.

Der Kern der Erfindung liegt darin begründet, dass die an der Kluppe und/oder an der Transportkette angreifenden Kräfte wie Reckkräfte, Fliehkräfte etc. sowie die durch die Transportkette insbesondere im Kurvenbereich eingeleiteten Kettenquerkräfte oder Seitenführungskräfte etc. von den Gewichtskräften quasi völlig entkoppelt sind. Mit anderen Worten ist die Konstruktion der Transportkette und der Kluppen so umgesetzt, dass die an der Transportkette und insbesondere den Kluppenkörper ansetzenden Gewichtskräfte zu den
weiteren, beispielsweise auch während des Reckprozesses eingeleiteten Reckkräften senkrecht zueinander stehen.

In den größten Abschnitten des Umlaufweges des Transportsystems treten nur Gewichtskräfte auf. Von daher ist eine durchgehende Kühlung im Umlaufweg allenfalls nur für die Gewichtskraft notwendig, während eine Entlastung bzw. Kühlung der Seitenführungsschiene nur in bestimmten Bereichen notwendig ist.

Wenn eine Kühlung vorgesehen sein soll, so kann dies im Rahmen der Erfindung in Form einer direkten Kühlung realisiert werden.

Die Konstruktion führt dazu, dass die zusätzlich an der Transportkette und den Kluppen-Ketteneinheiten ansetzenden Querkräfte keine Kippmomente verursachen oder zumindest gegenüber herkömmlichen Lösungen minimiert werden, denn derartige beim Stand der Technik auftretende Kippkräfte führen zu einer Erhöhung der Reibkräfte bezüglich der Gleitlagerung der Transportkette.

Mit anderen Worten kann auf eine wie im Stand der Technik notwendige Drehmomentstütze verzichtet werden, da Dreh- oder Kippbewegungen des Kluppenkörpers um eine in Vorschubrichtung der Transportkette verlaufende Kippachse nicht mehr oder nicht in relevantem Maß auftreten.

Im Rahmen der Erfindung erzeugt also das Gewicht des Kluppen-Kettensystems keine zusätzlichen Abstützkräfte. Vielmehr trägt der mehr oder weniger ideal gelegte Schwerpunkt dazu bei, dass keine weiteren Kippmomente entstehen, die an der Führungsschiene und/oder an der Gewichts- oder Tragschiene abgestützt und aufgenommen werden müssen. Dies ist ein wichtiger Unterschied zum Stand der Technik, wie er beispielsweise aus der US 5 797 172 zu entnehmen ist. Denn dort setzen die Kräfte an dem Kluppen- Transportteil so an, dass noch ein Überhöhungsfaktor erzeugt wird. Ein sogenannter Überhöhungsfaktor tritt dann auf, wenn die auf den Kluppenkörper, d.h. das Kluppen-Transportteil, also das Kluppen-Kettenteil eingeleiteten Kräfte nicht direkt in die Führungsfläche der Führungsschiene eingebracht werden. Bei der vorstehend erwähnten vorbekannten Lösung gemäß der US 5 797 172 führt es jedenfalls dazu, dass an der Führungsschiene, die zum Kluppentisch in Vertikalrichtung asymmetrisch versetzt liegt (ebenso horizontal seitlich versetzt liegt zur Tragschiene) am oberen und am unteren Teil der Führungsschiene entgegengesetzt gerichtete zusätzliche Kippkräfte (Hebelfaktor) erzeugt und eingeleitet werden, die zu einer zusätzlichen Reibleistung führen. Auch dies wird erfindungsgemäß durch das ausbalancierte System vermieden, dessen Schwerpunkt-Ebene kollinear zur Führungsschiene, also innerhalb der Führungsschiene liegt.

Im Rahmen der Erfindung wird bevorzugt eine Führungsschiene als Führungsschiene verwendet, an der sich die Kluppen-Ketteneinheit senkrecht zur Gewichtskraft abstützen kann. Die Gewichtskraft selbst wird über eine von der Führungsschiene getrennte und bevorzugt unterhalb der Führungsschiene angeordnete Tragschiene aufgenommen und abgestützt. Dadurch kann im Rahmen der Erfindung sichergestellt werden, dass die Kluppen-Ketteneinheiten sowohl an der Führungsschiene als auch auf der das Gewicht der Transportkette abstützenden Gewichtslauffläche mittels jeweils einer Gleitlagerung voneinander entkoppelt gelagert werden können, ohne dass es zu einem zu starken Abrieb, einer zu starken Reibung und damit zu einer zu starken Überhitzung kommen kann. Eine Kühlung bzw. Entlastung der Führungsschiene ist also nur dort notwendig, wo Seitenkräfte, wie z.B. die Reckkraft, auftreten. Alle Kräfte können ohne Kippmomente bei möglichst gleichförmiger Flächenbelastung eingeleitet werden.

Letztlich lässt sich im Rahmen der Erfindung nicht nur eine Minimierung der Kippmomente, sondern auch eine Minimierung und Optimierung der Reck- und Seitenführungskräfte sowie eine Minimierung des Gewichts der Transportkette und der Kluppe selbst realisieren, zum Teil auch durch den im Rahmen der Erfindung optimierten Aufbau.

Schließlich wird im Rahmen der Erfindung ebenfalls vorgeschlagen, dass die auf die Kluppen-Ketteneinheit eingeleiteten Reckkräfte in einer Ebene oder nahe der Schwerkraft-Ebene an dem betreffenden Kluppen-Kettenkörper und damit einer Transportkette angreifen, also an einem Angriffspunkt am Kluppenkörper, der mehr oder weniger in der gleichen Ebene liegt wie die Angriffspunkte für die Fliehkräfte (identisch der Schwerkraft-Ebene) die in kurvigen Führungsbahnabschnitten auftreten bzw. den Quer- oder Seitenkräften, die durch die Transportkette und die darüber eingeleiteten Zugkräfte in kurvigen Führungsbahnabschnitten auftreten). Dies alles trägt zu einem hochgradigen Ausgleich der ansetzenden Kräfte bei, unter einer gewünschten Minimierung der Gesamtbelastung an der Führungsschiene bzw. der Tragschiene. Die Konstruktion ist auch so optimiert, dass die durch die Kettenlängskräfte verursachten Kräfte in oder nahe der Schwerkraft-Ebene eingeleitet werden.

Darüber hinaus kann eine Verbesserung insoweit ergänzend auch dadurch vorgenommen werden, dass die Transporkette und vor allem die Kluppen aus besonders leichtem Material hergestellt sind, überwiegend beispielsweise sogar aus Kohlefaserstoffen bestehen können. Dies führt zu einer drastischen Gewichtserleichterung eines derartigen Transportkettensystems.

Eine derartige Verringerung des Gesamtgewichts der bewegten Teile gegenüber den feststehenden Teilen führt letztlich auch zu einer weiteren Minimierung der Flächenpressung an den das Gewicht der Transporkette abstützenden Gleitelementen.

Üblicherweise müssen die über die Gleitreibung fortbewegten Teile der Transportkette, die sich auf einer in der Regel horizontalen Gleitschiene abstützen, mittels Öl entsprechend geschmiert werden, um den Reibungskoeffizienten zu senken und damit indirekt auch zu einer Kühlung des Systems beizutragen. Die erwähnte Gewichtsreduzierung kann hier bereits zu einer wesentlichen Reduzierung des Ölverbrauchs und damit auch zu einer Vermeidung von Ölverschmutzungen auf dem herzustellenden Produkt (in der Regel dem Kunststofffolienfilm) beitragen.

In einer Weiterbildung der Erfindung kann die Führungsschiene gekühlt werden, insbesondere nur dort gekühlt werden, wo eine Belastung der Schiene auftritt. Im Rahmen der Erfindung ist durch das ausbalancierte System eine derartige Kühlung nur in weniger als 30%, gegebenenfalls sogar in einem Bereich von weniger als 25% oder 20% des Gesamtumlaufweges zur Energiereduzierung notwendig.

Im vorliegenden Fall kann ergänzend oder alternativ zur Verbesserung der Kühlung eine Trag- oder Stützschiene vorgesehen sein, die mit einem integrierten Kühlkanal ausgestattet ist, durch den hindurch ein fließfähiges Kühlmedium - Flüssigkeit oder Gas - strömen und damit zur Kühlung des gesamten Schienensystems und vor allem der Trag-Gleitfläche beitragen kann. Auch dies dient der Verringerung der zur Reibung benötigten Ölmenge oder des Ölverbrauchs.

Ein wesentliches Merkmal für die Kühlung ist die Abführung der durch Reibung verursachten Wärme. Eine zu heiße Gleitpaarung führt zum Vercracken des Öls, das dann iterativ zu einer größeren Reibung, zu weiterem Vercracken usw. führt.

Ferner kann ebenfalls zur weiteren Verbesserung der gesamten Anlage ergänzend vorgesehen sein, dass nicht nur an sich günstige Gleitwerkstoffe mit extrem guten Notlaufeigenschaften verwendet werden, sondern dass im Rahmen der Erfindung auch eine Luftlagerung vorgesehen ist, die quasi zu einer schwimmenden Lagerung und Abstützung der Transportkettenglieder und der Kluppen an der Gewichtslauffläche (gegebenenfalls auch an der Führungsschiene) beiträgt. Dadurch lässt sich eine Art Luftkissen-Effekt realisieren, wodurch eine sehr reibarme, fast reibungslose Lagerung gewährleistet werden kann.

Schließlich tragen zur Gesamtverbesserung des Systems u.a. auch die im Rahmen der Erfindung vorgesehenen stoßfreien Übergänge von den mehr oder weniger gerade verlaufenden Führungsschiene-Abschnitten zu den Kettenrädern am Ein- und Auslauf der Gesamtanlage bei.

Durch die vorstehend erläuterten einzelnen Maßnahmen oder durch mehrere oder alle der vorstehend genannten Maßnahmen wird letztlich eine extrem niedrige Reibleistung gewährleistet, wodurch die Anlagengeschwindigkeiten gegenüber herkömmlichen Reckanlagen nochmals deutlich erhöht werden können.

Somit lässt sich ingesamt auch die Lebensdauer einer derartigen Anlage wegen der Verringerung des Verschleißes verlängern und dies bei verringertem Wartungsaufwand. Zudem lässt sich der Energieverbrauch minimieren und die Reibleistung (Wärme) kann gut abgeführt werden.

Weitere Vorteile, Einzelheiten und Merkmale der Erfindung ergeben sich nachfolgend aus den anhand von Zeichnungen dargestellten Ausführungsbeispielen. Dabei zeigen im Einzelnen:
- Figur 1a:: eine schematische Draufsicht auf eine Querreckanlage mit einer gemeinsamen Trägerstruktur für die Prozessseite und die Rücklaufseite innerhalb des Ofens;
- Figur 1b:: eine zu Figur 1a abgewandelte Ausführungsform einer zur Prozessseite getrennten Rücklaufseite für die Transportkette außerhalb des Ofens;
- Figur 2:: eine schematische Querschnittsdarstellung durch eine Trägerstruktur für die Führungsbahn einer Transportkette mit zugehörigen Kluppen;
- Figur 3:: eine Kluppe mit Teilen der Transportkette in auszugsweiser räumlicher Darstellung;
- Figur 4a:: eine erfindungsgemäße Kluppe in Seitenansicht parallel zur Vorschubbewegung der Kluppe (zur eindeutigen Kennzeichnung der Richtungen wurde ein Koordinatensystem eingezeichnet, wobei m die Transportrichtung entlang der Führungsschiene, t die Richtung des Normalenvektors dazu und z die Richtung kollinear zur Führungsschiene darstellt);
- Figur 4b:: eine entsprechende Draufsicht auf das Ausführungsbeispiel gemäß Figur 4a;
- Figur 5:: eine schematische Darstellung einer der beiden in der Regel symmetrisch zueinander liegenden Führungsbahnen für die Transportkette, die in unterschiedliche Führungsbahnenabschnitte zur Erläuterung der unterschiedlichen Kraftverhältnisse eingegliedert ist;
- Figur 6a:: eine schematische Seitenansicht der in Figur 4a gezeigten Kluppe mit den daran ansetzenden Kräften und Wirkebenen, in denen diese Kräfte auftreten und wirken;
- Figur 6b:: eine entsprechende Draufsicht auf das Ausführungsbeispiel gemäß Figur 6a;
- Figur 7a bis Figur 10c:: Darstellungen der entsprechenden Kluppen in Seitenansicht bzw. in Draufsicht unter Erläuterung der an den verschiedenen Führungsbahn-Abschnitten auftretenden unterschiedlichen Kräften;
- Figur 11:: ein Kettenlängskraft-Positions-Diagramm zur Darstellung der an den Kluppen ansetzenden Kräfte;
- Figur 12a bis Figur 12c:: drei Unteransichten eines Kluppenkörpers mit an dessen Unterseite ausgebildeten unterschiedlichen Gleitanordnungen;
- Figur 13:: einen überzeichneten Ausschnitt aus der Führungsbahn mit einem konvexen und einem konkaven Führungsbahn-Abschnitt zur Erläuterung, dass in allen möglichen Anlagesituationen der Seitenführungs-Gleitkörper keine Kantenläufer entstehen; durch unterschiedliches Dehnungsverhalten des Films kann z.B. im Bereich V eine Drehung um die z-Achse entstehen;
- Figur 14:: ein Führungsschienengleitlager nach Art eines Gleitschuhes in räumlicher Darstellung;
- Figur 15:: eine Draufsicht auf das Ausführungsbeispiel gemäß Figur 14 unter Erläuterung der erfindungsgemäß vorgesehenen Abflachungen mit einem vorgegebenen Krümmungsradius im Einund Auslaufbereich des Führungsschienengleitlagers;
- Figur 16:: eine auszugsweise Draufsicht auf einen Kluppenkörper mit zwei versetzt zueinander liegenden Führungsschienen-Gleitlagern mit den im Ein- und Auslaufbereich vorgesehenen Abflachungen;
- Figur 17 bis Figur 22:: unterschiedliche Schnittdarstellungen zur Verdeutlichung einer Gelenkausbildung in der Trägerstruktur und der Tragschiene, wodurch ein sehr genau fluchtender Schienenübergang entsteht;
- Figur 21a und Figur 21b:: die Darstellung eines an einem Gelenk angreifenden Biegemoments bei einer erfindungsgemäßen Lösung im Vergleich zu einer nach dem Stand der Technik bekannten Lösung;
- Figur 23:: ein abgewandeltes Ausführungsbeispiel eines Kluppenkörpers in Seitenansicht, der längs einer darunter befindlichen Tragschiene abgestützt unter Verwendung eines Luftpolsters verfahrbar ist;
- Figur 24 und Figur 25:: jeweils ein Kettenrand im Auflaufbereich der Querreckanlage mit einer automatischen Einstellmöglichkeit, um einen tangentiellen Einlauf der Kette in dem betreffenden Kettenrad bei unterschiedlicher Position (Kettenspannung) des Kettenrades zu ermöglichen; und
- Figur 26 und Figur 27:: jeweils eine Darstellung der umlaufenden Trag- und Kühlschiene, die um die Kettenräder längs der Führungsbahn umläuft.

### Grundsätzlicher Aufbau der Querreckanlage:

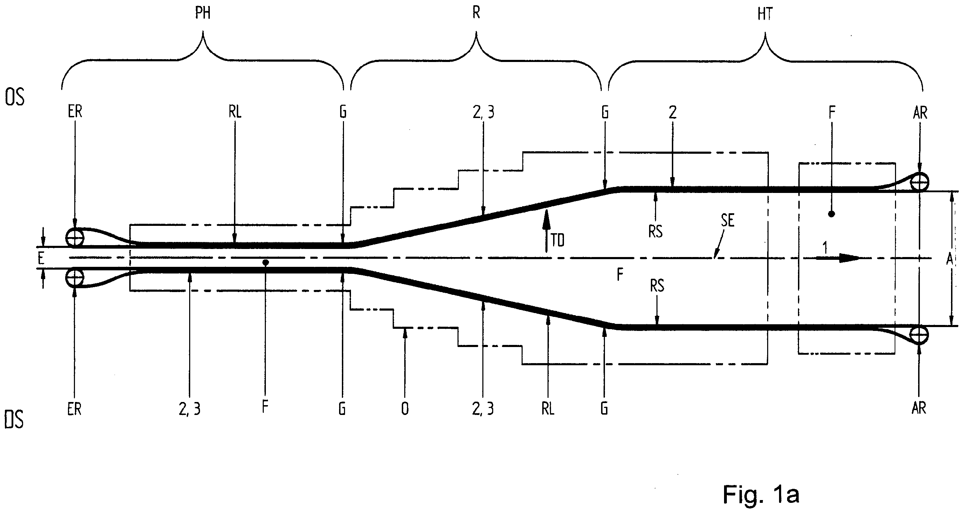

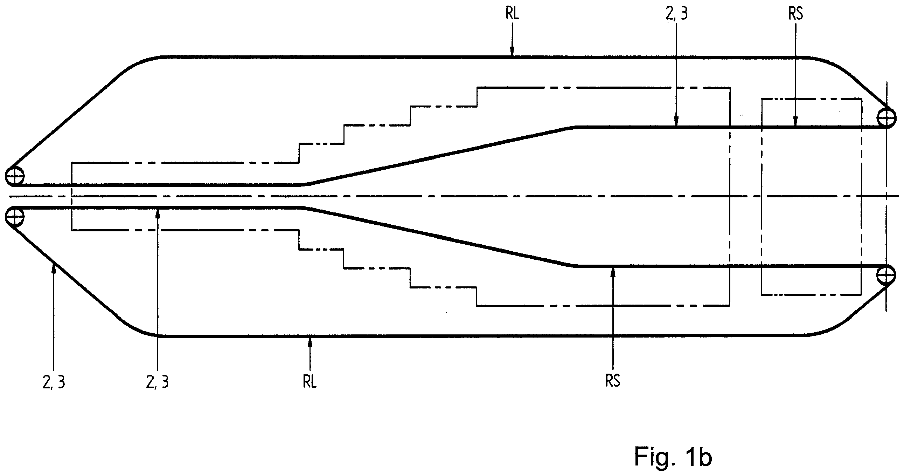

Die beschriebene Folien-Breit- oder Quer-Reckanlage, die nachfolgend auch kurz als TD-Reckanlage (TD = Transverse Direction) bezeichnet wird, weist bekanntermaßen zwei symmetrisch ausgebildete Antriebssysteme auf. In Figur 1 a sind die beiden vertikal zur Zeichen-Ebene verlaufenden und symmetrisch zur Symmetrie-Ebene SE angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffolienfilms F längs der Abzugsrichtung 1 (also in Maschinenrichtung MD) hindurch bewegt wird. Die erläuterte TD-Reckanlage kann dabei auch Teil einer sequentiellen Reckanlage sein, die üblicherweise eine der Querreckanlage (Querreckrahmen) vorgelagerte Längsreckstufe umfasst (im Zweifelsfall kann diese Längsreckstufe der Querreckstufe aber auch nachgeordnet sein). Die in Figur 1a gezeigte Reckanlage umfasst zwei auf den beiden umlaufenden Bahnen 2 in Umlaufrichtung angetriebene Kettentransportsysteme 3.

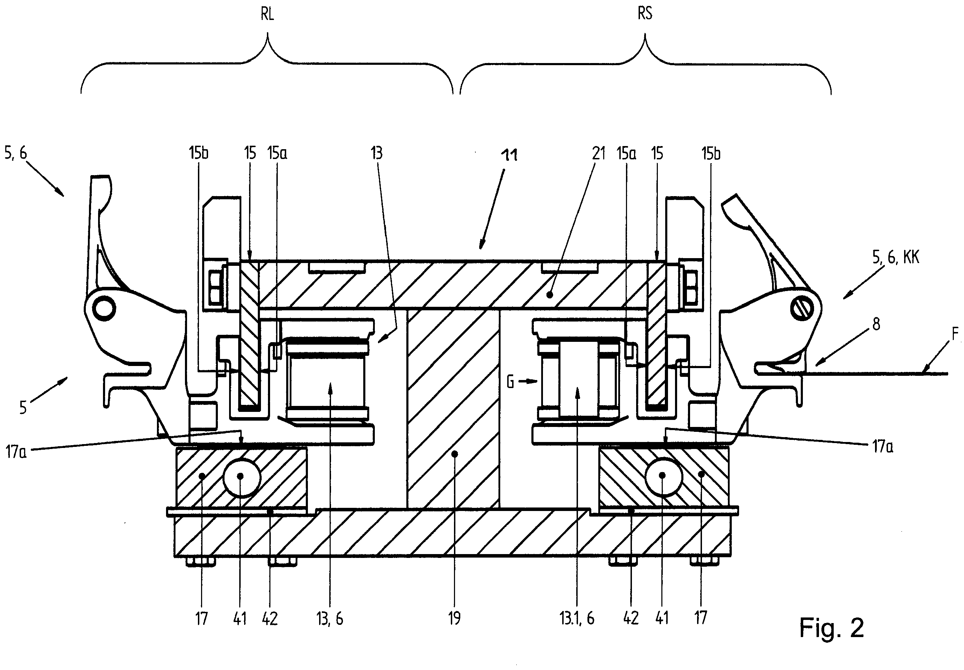

Eine biaxiale (wenn also eine Längsreckanlage der gezeigten Querreckanlage vorgelagert ist) oder eine unverstreckte Folie F (wobei im Folgenden von Folie gesprochen wird, obgleich mit einer derartigen Reckanlage allgemein eine Behandlungsbahn F entsprechend behandelt und quergereckt werden kann, so dass die Erfindung insoweit nicht auf eine Kunststofffolienbahn beschränkt ist) läuft im Einlaufbereich E in die Reckanlage ein und wird dort von nachfolgend noch erörterten Kluppen, wie sie beispielsweise anhand von Figur 2 gezeigt sind, an beiden Rändern 8 ergriffen und eingeklemmt, und zwar auf der so genannten Operator-Seite (OS - operator side) sowie der antriebsseitigen Drive-Seite (DS - drive side). Die Folie F wird dann in einer nachfolgenden Vorheizzone PH erwärmt, und nachfolgend einer Reckzone R zugeführt, um hier in Querrichtung TD verstreckt zu werden. Anschließend durchläuft der verstreckte Film F verschiedene Wärmebehandlungszonen HT, bei denen auch eine Relaxation des Filmes erfolgen kann. Am Ende der Reckanlage in der sogenannten Auslaufzone A wird der Film durch geeignete Mittel ausgekluppt und verlässt dann die Querreckmaschine, also die Querreckanlage TD.

Im Folgenden wird ferner von einer Kluppen-Transporteinheit KT gesprochen, die nachfolgend teilweise auch als Kluppen-Ketteneinheit KK bezeichnet wird. Diese Kluppen-Transporteinheit KT bzw. Kluppen-Ketteneinheit KK umfasst zum einen das so genannte Kluppenteil 6 welches mit dem Ketten- oder Transportteil 7 verbunden ist. Im erläuterten Beispiel, bei welchem eine Transportkette zum Einsatz gelangt, wird bevorzug von einem Kettenteil 7 gesprochen, welches Teil der Kluppen-Ketteneinheit KK ist.

Wie bekannt ist, befinden sich diese Kluppen-Ketteneinheiten KK, d.h. also der erwähnte Kluppenteil 6 und das Kettenteil 7 in einem umlaufenden Transportsystem 3, welches zum einen eine Trägerstruktur, d.h. einen Trägeraufbau 11 sowie eine umlaufende Transport-Kette 13 umfasst, an der die erwähnten Kluppenteile 6 mitlaufend befestigt oder ausgebildet sind. Der Trägeraufbau 11 umfasst eine Führungsschiene 15. Neben dieser Führungsschiene 15 ist ferner noch eine das Gewicht der Kette und der Kluppen aufnehmende Tragschiene 17 vorgesehen, die nachfolgend auch teilweise als Gewichtslaufschiene 17 bezeichnet wird. Wie sich aus der nachfolgenden Erläuterung noch ergibt, erfolgt die Führung und Abstützung der Transportkette mit den daran mit verfahrbaren Kluppen an der Führungsschiene 15 (beispielsweise mittels einer Gleitlagerung oder auch mittels einer Luftkissenlagerung) und an der Tragschiene 17 mittels einer Luftkissenlagerung.

Die erläuterte Tragstruktur kann als gemeinsame Tragstruktur für das Transportsystem sowohl auf der Reck- oder Prozessseite RS als auch auf der Rücklaufseite RL verwendet werden (Figur 2).

In Figur 2 ist ein Querschnitt durch das Transportsystem zu ersehen, nämlich mit einer gemeinsamen Tragstruktur 11, die neben einem in der Mitte angeordneten, eher vertikal verlaufenden Träger 19, einen darüber abgestützten Querträger 21 umfasst, an dessen gegenüberliegenden voneinander weg weisenden Enden jeweils die von oben nach unten verlaufende, im Querschnitt rechteckförmige Schiene 15 montiert ist, nämlich wie erwähnt auf der Reckseite RS zum einen und auf der Rückseite RL zum anderen. Bei einer derartigen gemeinsamen Traganordnung befindet sich das Transportsystem gemeinsam innerhalb eines Ofens O (Figur 1a). Dieser Ofen umgibt sowohl die Vorheizzone PH, die Reckzone R als auch die Nachheizzone oder Relaxationszone HT, so dass letztlich nur die auf der Einlass- und Auslassseite vorgesehenen Umlenk- und Antriebssysteme außerhalb des Ofens O zu liegen kommen. Ansonsten kann auch eine getrennte Trägerstruktur für die Reckseite RS wie die Rücklaufseite RL vorgesehen sein, so dass in diesem Fall nur die reckseitige Trägerstruktur mit der zugehörigen Führungsschiene und der Gewichtslaufschiene durch den Ofen O verläuft und eine entsprechend ausgebildete weitere Trägerstruktur auf der Rücklaufseite außerhalb des Ofens O vorgesehen ist. Ein entsprechender Aufbau in schematischer Draufsicht ist in Figur 1b gezeigt.

Wie erwähnt, wird die Transportkette 13 sowohl auf der Auslauf- wie der Einlaufseite durch Auslauf- und/oder Einlaufräder AR bzw. ER angetrieben und umgelenkt.

Um das System flexibel zu gestalten sind ferner an verschiedenen Stellen Gelenke G für die Führungsschiene und die Tragschiene vorgesehen, worauf später noch eingegangen wird. Durch unterschiedliche Einstellung dieser Gelenke lassen sich insbesondere in der Reckzone R verschiedene Querreckverhältnisse einstellen.

### Weiterer erfindungsgemäßer Aufbau des Transportsystems, insbesondere Aufbau der Transportkette und der zugehörigen Kluppenkörper:

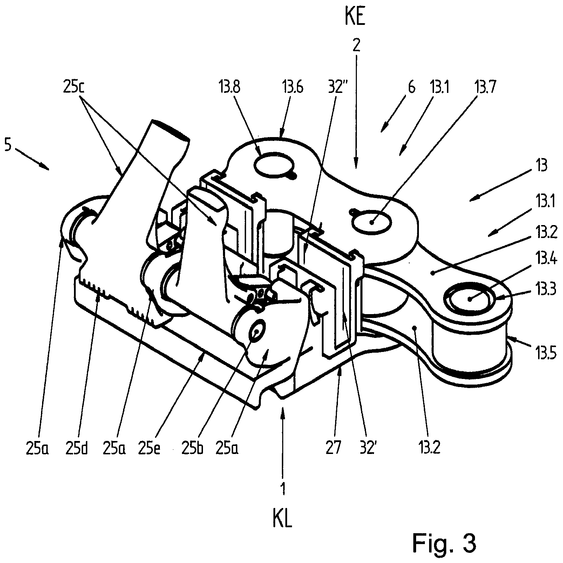

Nachfolgend wird der grundsätzliche Aufbau der Transportkette 13 mit den Kettenteilen 7 und den zugehörigen Kluppenteilen 6 (mit ihren Kluppenkörper) sowie des Trägeraufbaus anhand der Figuren 3 bis 5 näher erläutert.

Aus Figur 3 ist dabei ein Ausschnitt der Transportkette 13 zu ersehen, wobei die Transportkette in bekannter Weise jeweils Kettenglieder 13.1 umfasst, die gelenkig miteinander verbunden sind. Eine derartige, sogenannte Rollen-Kette umfasst in bekannter Weise jeweils ein Paar von im Axialabstand parallel zueinander angeordneten Innenlaschen 13.2 (Figur 3), die jeweils zwei Bohrungen 13.3 aufweisen, in deren Axialverlängerung zwischen den beiden Laschen eine Hülse 13.4 angeordnet ist, worüber die beiden Innenlaschen 13.2 fest miteinander verbunden sind. Auf dieser Innenhülse 13.4 ist eine als Schonrolle bezeichnete Außenhülse 13.5 aufgesteckt, die auf der darunter befindlichen Hülse 13.4 frei drehen kann.

Jeweils zu den Innenlaschen 13.2 außenliegend sind sogenannte Außenlaschen 13.6 verkettet angeordnet, so dass letztlich das Paar von Innenlaschen 13.2 mit zwei benachbarten, d.h. einem Paar vor- und einem Paar nachlaufenden Außenlaschen 13.6 verbunden ist. Dazu durchsetzt jeweils ein Bolzen 31.7 die entsprechende Bohrung 13.8 in der Außenlasche 13.6 und durchragt dabei die entsprechende Bohrung 13.7 der Innenlasche sowie die innenliegende Hülse 13.4. Über diese Bolzen 13.7 ist jeweils das betreffende Paar von Außenlaschen 13.6 ebenfalls fest miteinander verbunden.

Die Außenlaschen 13.6 sind dabei im gezeigten Ausführungsbeispiel jeweils Teil der Kettenteile 7. Dabei können sie gleichwohl einstückig mit dem Kluppenteil 6 verbunden oder an diesem befestigt sein.

Die so gebildete Transportkette 13 umfasst einen Kluppenmechanismus oder -abschnitt 25 mit einer Kluppenhalterung 25a, die beispielsweise aus zwei in Horizontalrichtung versetzt liegenden Kluppenwangen besteht oder diese umfasst. Zwischen diesen verläuft eine horizontale Kluppenachse (sogenannte Messerklappe) 25b, mittels der dann der entsprechende Kluppenhebel 25c in bekannter Weise zwischen einer Freigabestellung und einer Film-Fixierstellung verschwenkbar ist, in welcher seine unten liegende Greiffläche (Fixierabschnitt) 25d einen Film zwischen der Greiffläche 25d und den Kluppentisch 25e fixieren, d.h. einklemmen und festhalten kann.

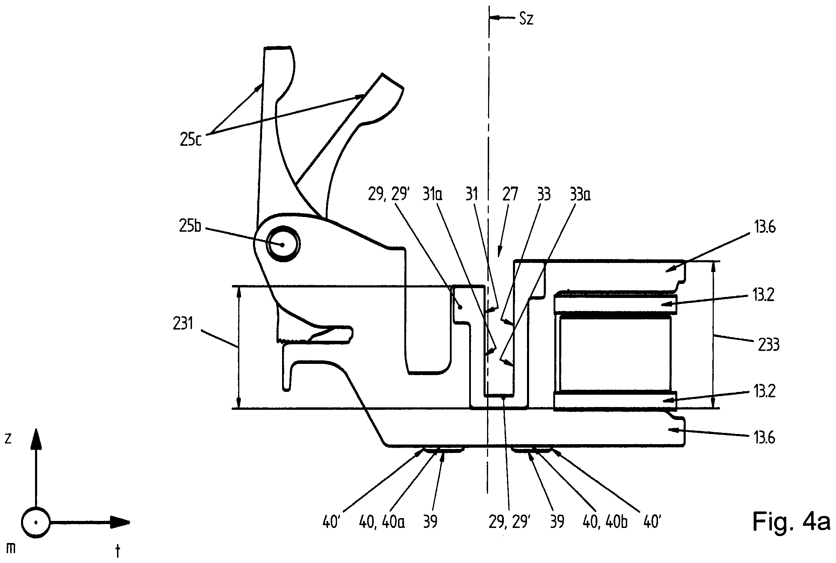

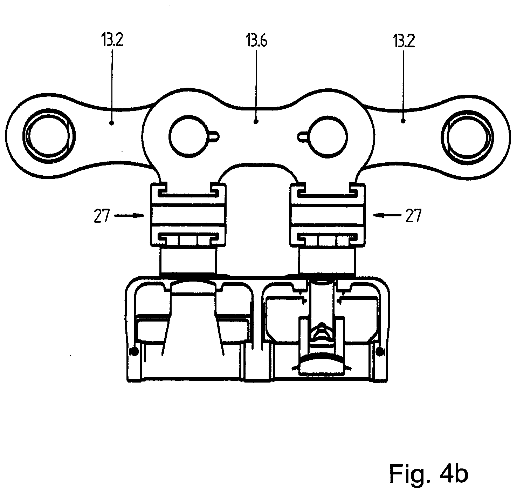

Die gesamte Anordnung ist (wie sich insbesondere aus Figur 4a in Seitenansicht und in Figur 4b in Draufsicht auf einen Kluppenkörper mit zugehörigen Kettengliedern ergibt) dergestalt, dass zwischen dem Kluppenteil 6 (d.h. dem eigentlichen Kettenabschnitt KE) und dem Kettenteil 7 (d.h. dem eigentlichen Kluppenabschnitt KE) eine U-förmige Ausnehmung 26 unter Ausbildung eines Brückenteils B (worüber das Kluppen- mit dem Kettenteil verbunden ist) vorgesehen ist, wobei sich an diese U-förmige Ausnehmung 26 ein vertikal nach oben vorstehender Materialsteg 28 anschließt, auf den wiederum eine weitere U-förmige Ausnehmung 27 im Kettenteil 7 folgt, in welche eine entsprechende Führungsschienen-Gleitlagerung 29 eingesetzt ist, die nachfolgend teilweise auch als Gleitschuh 29a bezeichnet wird. Die beiden erwähnten U-förmigen Ausnehmungen 26, 27 und der dazwischen befindliche sich über eine Teilhöhe vertikal erstreckende rippenförmige Materialsteg 28 sind alle in axialer Längsrichtung der Kluppen-Ketteneinheit KK verlaufend ausgebildet.

Diese Führungsschienen-Gleitlagerung 29 umfasst einen im Querschnitt U-förmigen Gleitkörper oder Gleitschuh 29a mit entsprechender Breite oder Länge in Richtung der Führungsschiene 15, um hier die entsprechenden Führungskräfte aufzunehmen. Dazu weist die Führungsschienen-Gleitlagerung 29 ein kluppenseitig liegendes Kettenkraft-Gleitelement oder Kettenkraft-Gleitanordnung 31 mit einer Kettenkraft-Lauffläche 31a auf, die nachfolgend auch als Kettenkraft- Gleitfläche 31a bezeichnet wird. Gegenüberliegend dazu ist eine zweite Lauf- und/oder Gleitfläche 33a an einem Reckkraft-Gleitelement oder an einer Reckkraft-Gleitanordnung 33 ausgebildet, die nachfolgend teilweise auch als Reckkraft-Lauffläche 33a oder Reckkraft-Gleitfläche 33a bezeichnet wird.

Auf der Unterseite der Kluppen-Ketteneinheit KK sind dann entsprechende Gleitlager 40, 40a, 40b ausgebildet, worauf die Kluppen-Ketteneinheiten KK (also die jeweiligen Kluppenteile 6 mit den damit verbundenen Kettenteilen 7) mit dem entsprechenden Gewicht auf einer entsprechenden Trag- und/oder Laufschiene 17 (Figur 2) gleitend aufliegt. Die Unterseite dieser Gleitlager 40, 40a, 40b (worüber die Kluppen-Ketteneinheiten KK mit ihrem Gewicht abgestützt sind) ist teilweise auch als Gewichtslauffläche 39 bezeichnet.

Aus den Darstellungen gemäß Figuren 3, 4a und 4b ergibt sich ferner, dass bei der erläuterten Kluppenkonstruktion zwei Kluppenhebel 25c, die auch teilweise als Messerklappen 25c bezeichnet werden, auf dem Kluppenkörper 6 angeordnet sind, nämlich in Längsrichtung der Transportkette versetzt zueinander liegend. Diese können dabei auf einer gemeinsamen Kluppenachse 25b verschwenkbar angeordnet sein, wobei die beiden Kluppenhebel oder Messerklappen 25c getrennt voneinander zwischen ihrer Öffnungs- und Schließstellung umgesteuert werden können. Auch hierdurch wird eine Reduzierung des Gesamtgewichts und der Gesamtkosten realisiert. Natürlich sind auch Systeme mit nur einer oder mehr als zwei Messerklappen möglich.

Schließlich wird eine Gewichts- und Kostenminimierung auch dadurch realisiert, dass im gezeigten Ausführungsbeispiel für die Transportkette 13 eine Kettenteilung von z.B. um 75 mm verwirklicht ist, also eine Kettenteilung von bevorzugt mehr als 60 mm und weniger als 90 mm, insbesondere mehr als 65 mm und weniger als 85 mm, bevorzugt zwischen 70 mm und 80 mm. Grundsätzlich sind aber alle Teilungen für das beanspruchte System vorstellbar.

Der erläuterte Kluppenkörper 6 wird mit dem mit ihm fest verbundenen Kettenteil 7 als Teil der Transportkette 13 auf der anhand von Figur 2 bereits erläuterten Tragkonstruktion 11 sowohl auf der Prozess- oder Reckseite RS als auch auf der Rücklaufseite RL fortbewegt (wobei Figur 2 eine Ausführungsform entsprechend Figur 1a zeigt) ansonsten wäre der Vorlauf und der Rücklauf und damit die Tragkonstruktion für die Führungsschiene auf der Vorlauf- und der Rücklaufseite getrennt). Aus dieser Darstellung ist ferner ersichtlich, wie ein betreffende Kluppen-Ketteneinheit KE mit seinem im Querschnitt U-förmigen Gleitlager 29 geführt ist, indem die entsprechenden beiden gegenüberliegenden Gleitlagerflächen an den gegenüberliegenden Außenflächen 15a, 15b der als Führungsschiene konzipierten Führungsschiene 15 während der Vorwärtsbewegung der Transportkette anliegen und dadurch geführt werden.

### Erläuterung der an der Kluppe ansetzenden Kräfte im Zusammenhang mit der erfindungsgemäßen Lösung:

Nachfolgend wird auf den weiteren Aufbau der Transportkette sowie die Krafteinwirkungen auf die Kluppen-Ketteneinheiten KK eingegangen, um zu zeigen, aufgrund welcher Maßnahmen im Rahmen der Erfindung eine verbesserte Kraftaufnahme- und Kraftabstützung der Kluppen-Ketteneinheiten KK an der Trag- und Abstützeinrichtung realisiert ist, wobei die im Rahmen der Erfindung erzielbaren Vorteile anhand unterschiedlicher Streckenabschnitte der Querreckanlage verdeutlicht werden.

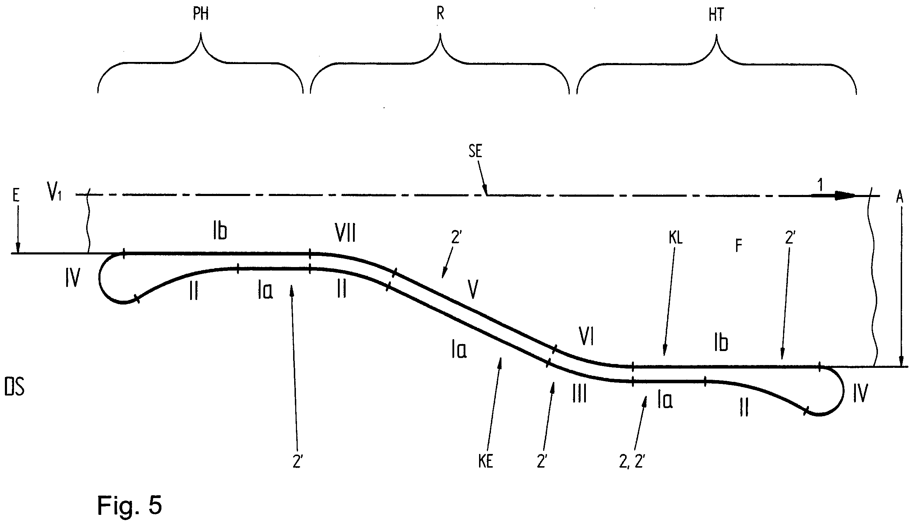

Figur 5 zeigt ähnlich zu Figur 1a in Draufsicht die Darstellung zumindest einer umlaufenden Bahn 2 des Transportsystems 3, nämlich das in Abzugsrichtung 1 rechts auf der sogenannten Antriebsseite DS liegende Transportsystem mit der umlaufenden Führungsschiene 15, wobei die Streckenabschnitte sowohl auf der Prozess- oder Reckseite RS wie auf der Rücklaufseite RL zur Erläuterung der Erfindung in unterschiedliche Bahn-Abschnitte 2' aufgegliedert sind.

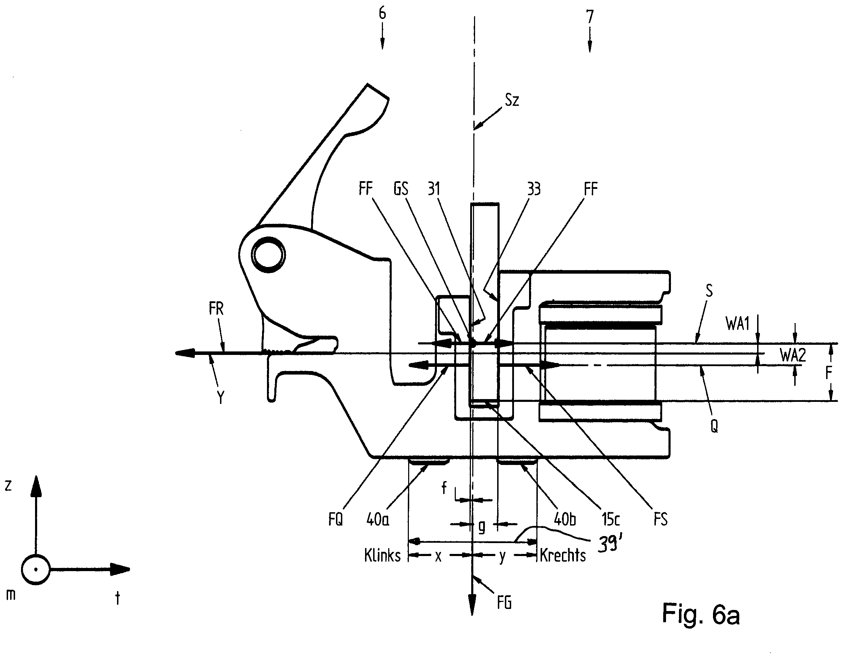

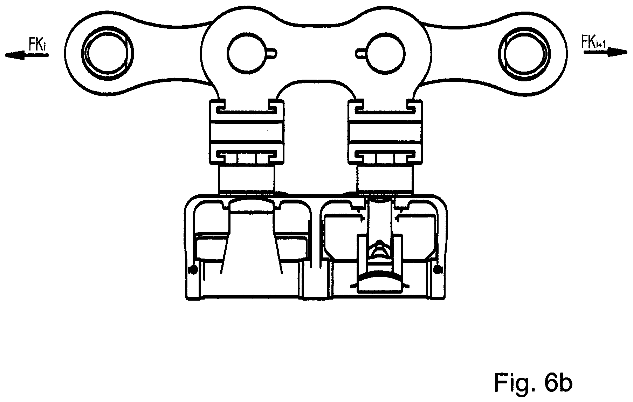

An dem Transportkettensystem greifen unterschiedliche Kräfte an, abhängig auch von den unterschiedlichen Phasen oder Abschnitten längs der Führungsschiene 15. Dazu wird ferner auch noch auf Figuren 6a und 6b Bezug genommen, die einen Kluppenkörper in Seitendarstellung (quer zur Führungsbahn) zeigen, um zu erläutern, welche Kräfte wo ansetzen, wobei in Figur 6b eine entsprechende Draufsicht auf die Kluppe in einem Ausschnitt der Transportkette 13 wiedergegeben ist.

Folgende Kräfte sind dabei vorhanden bzw. zu unterscheiden:

### • Gewichtskraft FG

Die Transportkette und damit jeder Kluppenwagen und jedes Kettenglied (somit also jede Kluppen-Ketteneinheit KK) weist ein Gewicht auf. Gemäß Figur 6a ist die gewichtsabhängige Kraftkomponente mittels des von oben nach unten verlaufenden Pfeils FG gekennzeichnet. Dieser Gewichtskraft-Vektor FG, d.h. diese Gewichtskraft FG greift dabei am Schwerpunkt GS an, der sich gemäß der Querschnittsdarstellung nach Figur 6a in dem nutförmigen Ausnehmungsbereich 27 zur Aufnahme der Führungsschiene 15 befindet, und zwar im gezeigten Ausführungsbeispiel in einem geringen Abstand oberhalb der nachfolgend noch erörterten Kluppentisch- und/oder Film- oder Reck-Ebene Y. Idealerweise fallen die Ebenen S und Y zusammen. Der Schwerpunkt GS der Kluppen-Ketteneinheit KK liegt so (bzw. ist die Kluppen-Ketteneinheit KK so ausgebildet), dass die durch den Schwerpunkt GS verlaufende Schwerkraft-Ebene Sz (die senkrecht zur Zeichen-Ebene verläuft) gleichzeitig parallel zu der Kettenkraft- sowie zu der Reckkraft-Lauffläche 31a, 33a verläuft. Im gezeigten Ausführungsbeispiel ist die Anordnung derart, dass diese Schwerkraft-Ebene Sz die Führungsschiene in Vertikalrichtung (parallel zur m-z Ebene) durchsetzt oder beispielsweise mit der Kettenkraft-Lauffläche 31a oder der Reckkraft-Lauffläche 33a zusammenfällt (dabei ist in den Figuren mit m eine Koordinate entlang der Führungsschiene 15, mit p eine Koordinate senkrecht zur Führungsschiene 15 und mit z der Normalvektor auf die Koordinate m sowie t eingezeichnet, so dass die durch die Koordinaten m-z gebildete Ebene die durch den Schwerpunkt GS verlaufende Gewichtssymmetrie-Ebene Sz bildet). Grundsätzlich könnte diese Schwerkraft-Ebene Sz auch außerhalb der Führungsschiene 15 verlaufend angeordnet sein, also mit Parallelversatz zu der in Figur 6a gezeichneten Lage. Die erfindungsgemäßen Vorteile lassen sich immer dann realisieren, wenn der durch den Schwerpunkt FG verlaufende Gewichtsvektor oder die Schwerpunktebene Sz die unten liegende Trag- oder Gewichtsschiene 17 bzw. deren Lauffläche 17a und damit auch die darauf gleitenden Gleitlagern 40, 40a, 40b (die später noch genauer erläutert werden) bzw. deren Gleitfläche 39 schneidet. Denn dadurch wird ein entsprechendes Kippmoment ausgeschlossen. Der Gesamtaufbau und die Gesamtanordnung ist derart, dass sich die Kluppen-Ketteneinheit KK über die an der Unterseite 25f der Kluppen-Ketteneinheit KK ausgebildeten oder vorgesehenen Gleitlager 40 bzw. 40a, 40b gegenüber der Tragschienen-Lauffläche 17a der Trag- und Laufschiene 17 kipp- und drehmomentfrei abstützt.

Auf der Unterseite 25f der Kluppen-Ketteneinheit KK sind in der gezeigten Ausführungsform zwei quer zur Vorschubrichtung der Transportkette 13 benachbart zueinander sitzende Gleitlager 40, d.h. im gezeigten Ausführungsbeispiel 40a und 40b vorgesehen, die unten liegend eine Gewichtslauffläche 39 bilden, worüber die betreffende Kluppen-Ketteneinheit KK dann auf der Tragschienen-Lauffläche 17a der Trag- und Laufschiene 17 abgestützt ist.

Die erfindungsgemäßen Vorteile ergeben sich vor allem dann, wenn das System zwischen dem Kluppenteil 6 und dem Kettenteil 7 in optimaler Weise entsprechend ausbalanciert ist. In diesem Falle ist die Schwerpunkt-Ebene Sz parallel zur m-z-Ebene innerhalb der Dicke der Führungsschiene 15 angeordnet, wobei in Figur 6 mit f der horizontale und damit senkrechte Abstand zwischen der vertikal verlaufenden Schwerpunkt-Ebene Sz zu der vertikal verlaufenden Kettenkraft-Lauffläche 31a und mit g der entsprechende horizontale Abstand zu der vertikal verlaufenden Reckkraft- Lauffläche 33a eingezeichnet ist, also die Werte für f und g ≥ O sind. Die Gleitelemente der Gewichtskraftführung liegen weit außerhalb dieser Schwerkraft-Ebene, so dass keine Kippmomente auftreten können. Das Gleitelementesystem ist ferner so optimiert, dass gleiche oder nahezu gleiche Flächenpressungen symmetrisch zur Schwerkraft-Ebene Sz entweder durch die Abstände x, y oder durch unterschiedliche Flächengrößen erreicht werden.

### • Kettenlängskraft FK

In allen Bereichen der umlaufenden Transportkette 13 tritt eine Kettenlängskraft FKi mit i = 1,..., n, auf, wie dies anhand von Figur 6b angedeutet ist. In einem geraden Abschnitt der Führungsschiene 15 sind dabei die vor- und nachlaufenden Gliederelemente der Transportkette gerade zueinander ausgerichtet (also in einem 180°-Winkel), wohingegen bei konvexen oder konkaven Kurvenabschnitten, wie beispielsweise in den Abschnitten II, III, VI bzw. VII, die Kraftvektoren zumindest leicht winklig zueinander ausgerichtet sind, und zwar entsprechend der Krümmung der Führungsschiene 15, und um das Ein- oder Auslaufrad.

Die erwähnte Kettenlängskraft FKi ist abhängig von der Kettenlänge (bzw. deren Gewicht), dem Fliehzug, der Vorspannung, den Reckkräften (die wiederum abhängen von der Filmdicke, des Filmmaterials, der Recktemperatur etc.), dem Reckwinkel usw.. Mit anderen Worten ist die Reckkraft in jedem Kettenglied unterschiedlich, je nach Position im Transportsystem.

Bei einem zu einer Horizontal-Ebene symmetrisch aufgebauten Kettenglied 6 (Kettenteil 7) werden durch die Kettenlängskraft, insbesondere in konkaven und konvexen Gelenken und Umlenkungen, die so definierte Seitenführungskraft FS und die Querkraft FQ auf die Seitenführungs-Gleitelemente ausgeübt. Die Kraft-Ebene Q verläuft bei symmetrischem Aufbau der Kette in der Mitte der Schonrolle, wie in Figur 6a gezeigt.

### • Resultierende Kraft FR verursacht durch die Reckkraft FTD

Vor allem in den von der Mittel- oder Symmetrie-Ebene SE nach außen divergierend verlaufenden Führungsschienenabschnitten VII, V, VI greifen zudem Reckkräfte an dem betreffenden Kluppenkörper 6 an, die über den zu reckenden Film letztlich auf die gesamte Kluppen-Ketteneinheit KK eingeleitet werden.

Der Reckkraftverlauf in diesen Zonen V, VI, VII verursacht dabei zudem bezüglich eines Kluppenteils 6 einen Kettenkraft-Unterschied mit unterschiedlichen Kraftkomponenten FKi und FKi+1, und zwar in Abhängigkeit zum Beispiel vom Dehnungsverhalten des Polymers in der Folie F etc.. Dieser Kettenkraft-Unterschied bezüglich eines Kluppenteils wird in den angegebenen Zonen durch ein angrenzendes, vor- oder nachlaufendes Kettenglied auf die dazwischen befindliche Kluppen- Ketteneinheit KK und damit auf die dazwischen befindlichen Kluppenteile 6 eingeleitet. Auf die hierdurch verursachten speziellen Wirkungen wird später noch eingegangen.

### • Fliehkraft FF

An allen konvexen oder konkaven Führungsschienenabschnitten treten entsprechende Fliehkräfte auf, die beispielsweise an dem konvexen Schienenabschnitt VII auf den zu reckenden Film zu und im konkaven Schienenabschnitt VI von dem zu reckenden Film weg nach außen gerichtet sind.

Diese Fliehkräfte greifen an dem Schwerpunkt GS der Kluppen-Ketteneinheit KK an, wobei die je nach Krümmung der Führungsbahn 2 in Richtung Film oder von diesem weg gerichteten Seiten-Fliehkräfte FF (die nachfolgend kurz nur als Fliehkräfte FF bezeichnet werden) in Figur 6a ebenfalls mit eingezeichnet sind. Die Fliehkräfte FF sind dabei senkrecht zu den Laufflächen 31a, 33a ausgerichtete (Figur 6a) und wirken in einer Fliehkraft-Ebene S.

### • Seitenführungskraft FS

In den Kurvenabschnitten II und VI treten zudem durch die (an den Kettengliedern ansetzenden) Kettenkräfte erzeugte Seitenführungskräfte FS auf, mit der sich der Kluppenkörper mit seiner in Figur 6a höheren Reckkraft-Lauffläche 33 an der betreffenden Anlagefläche der Führungsschiene 15 abstützt. Mit anderen Worten sind die Seitenführungskräfte FS jeweils auf der konkaven Seite des Führungsschienenabschnittes von diesem bogenförmigen Führungsschienenabschnitt weg gerichtet. Diese Kräfte setzen in der mittleren Höhe der Schonrolle der Kettenglieder an, und zwar ebenfalls wieder senkrecht zu Gewichtskraft der Kluppen-Ketteneinheit KK. Mit anderen Worten stützen sich diese Seitenführungskräfte FS an der gleichen Lauffläche 33a des Gleitkörpers 33 in der Kluppen-Ketteneinheit KK ab, an der sich auch die entsprechenden Reckkräfte abstützen.

Zudem entstehen entsprechende Seitenführungskräfte auch an den geraden Führungsbahnabschnitten Ib, nämlich durch die vom Film eingeleiteten Zugkräfte, die deutlich niedriger sind als die eigentlichen, in der Reckzone erzeugten Reckkräfte. Die am Beginn der Reckzone, in dem eigentlichen mittleren Bereich der Reckzone und dem auslaufenden Bereich der Reckzone wirksamen Reckkräfte des Films führen letztlich auch zu Seitenführungskräften, die in Höhe der Film-Ebene am Kluppenkörper ansetzen (worauf später noch eingegangen wird). Diese Seitenführungskräfte FS wirken in einer Horizontal-Ebene Q, die bei symmetrisch ausgebildeten Kettengliedern in einer zu den Kettengliedern (Schonrolle) mittigen Ebene Q (s. Figur 6a) liegt.

### • Querkräfte FQ

Bei den Querkräften FQ handelt es sich um jene Kräfte, bei denen über die Kettenlängskraft in umgekehrtem Sinne entgegengesetzt zu den Seitenführungskräften FS Kräfte auf den Kluppenkörper eingeleitet werden. Derartige Querkräfte FQ werden insbesondere in der Zone III und VII erzeugt und wirken in diesen Abschnitten auf die jeweils dort befindliche Querkraft-Seitenfläche ein. Auch diese Querkräfte FQ wirken in der mittleren Höhe der Schonrolle der Kettenglieder (Ebene Q in Figur 6a) auf den Kluppenkörper ein (worauf nachfolgend noch eingegangen wird).

Nachfolgend wird auf die Wirkungsweise in weiterem Detail eingegangen.

Der Kern der Erfindung liegt dabei darin begründet, dass im Gegensatz zum Stand der Technik bei dem erfindungsgemäßen Transportsystem eine im Idealfall vollständige, d.h. 100 %ige Entkopplung der vertikalen und horizontalen Kräfte stattfindet. Vollständige Entkopplung heißt hier, dass eine Veränderung der in Horizontalrichtung einwirkenden oder auftretenden Kräfte nicht zur Erzeugung eines Kippmomentes und damit zur Veränderung des auf der Tragschiene lastenden Gesamtgewichts und damit zu einer Veränderung bzw. Erhöhung der Reibwerte führt. Zudem wird im Rahmen der Erfindung angestrebt, dass zumindest das Gewicht der Transportkette, d.h. der Kettenglieder und der Kluppenkörper symmetrisch zu einer virtuellen Gewichtssymmetrie-Ebene Sz (Figur 6a) bezüglich des sogenannten Kluppenteils r und des Kettenteils 7 ausbalanciert verteilt wird. Mit anderen Worten ist also das (das Gesamtgewicht der Kluppen-Ketteneinheit KK ergebende) Gewicht des Kluppenteils 6 und das Gewicht des Kettenteils 7 symmetrisch zur virtuellen Gewichtssymmetrie-Ebene Sz und daher möglichst gleich bezogen auf die Gewichtslauffläche 39 verteilt, wobei die virtuelle Gewichtssymmetrie-Ebene Sz durch den Schwerpunkt GS und dabei parallel zu den Laufflächen 31a, 33a des Gleitschuhs 29 verläuft. Dadurch soll sichergestellt werden, dass zum einen keine Verkipp- oder Verdrehmomente durch eine unsymmetrische Gewichtsverteilung der Transportkette 13 bzw. der Kluppen-Ketteneinheiten KK erzeugt werden, und dass zum anderen die Flächenpressung an der Gewichtslauffläche 39 möglichst symmetrisch zu der Gewichtssymmetrieachse oder Gewichtssymmetrie-Ebene Sz verteilt ist, um die Reibwerte insgesamt bezüglich des Gewichts zu minimieren. Durch die Gesamtanordnung wird also verhindert oder zumindest weitgehend sichergestellt, dass an der Transportkette und dem Kluppenkörper, wie erwähnt, keine Verkipp- oder Drehmomente angreifen, die ansonsten zu einer Erhöhung der Reibkräfte während des Fortbewegens der Transportkette führen würden.

Im Rahmen der Erfindung handelt es sich insoweit also um eine entkoppelte und dabei verkipp- und drehmomentfreie Ausbildung und Anordnung der Kluppen-Ketteneinheit KK bezogen auf die Führungsschiene 15 und die Gewichtstragschiene 17, die das Gewicht aufnimmt.

In Figur 6a ist dabei der Schwerpunkt GS der Kluppen-Ketteneinheit KK eingezeichnet, die im gezeigten Ausführungsbeispiel im Bereich des Führungsschienen-Gleitkörpers 29, d.h. in dessen mittlerem Bereich zu liegen kommt. Hier setzt die Gewichtskraft FG an, deren Vektor in Figur 6a eingezeichnet ist. Dieser Gewichtskraft-Vektor FG liegt dabei in der senkrecht zur Zeichen-Ebene verlaufenden virtuellen Gewichtssymmetrie-Ebene Sz, die in Längsrichtung durch den Kluppenkörper verläuft, in welcher auf einer geraden Führungsbahn der Kluppenkörper längs bewegt wird. Der Gewichtskraft-Vektor FG bzw. die virtuelle Gewichtssymmetrie-Ebene Sz verläuft dabei mittig und symmetrisch zu den an der Kluppenunterseite 25f vorgesehenen Gleitlagern 40 und schneidet dabei die Gleitlauffläche 39 senkrecht.

Alle weiteren an der Transportkette, deren Einzelgliedern bzw. deren Kluppenkörper 6 ansetzenden Kräfte sind aufgrund des im Rahmen der Erfindung gewählten Konstruktionsprinzips senkrecht zu der Gewichtskraft FG ausgerichtet. Dabei sind diese weiteren Kräfte aber nicht nur senkrecht zur Gewichtskraft FG ausgerichtet, sondern greifen mehr oder weniger in gleicher oder in annähernd gleicher Höhenlage an dem betreffenden Kluppenkörper und damit an der Transportkette an, wodurch sichergestellt ist, dass durch diese Querkräfte kein zusätzliches Kipp- oder Drehmoment auf den Kluppenkörper und damit auf die Transportkette eingeleitet wird, um auch hier nicht zu einer Erhöhung der Reibwirkung beizutragen.

Betrachtet man dazu beispielsweise die in Figur 5 für die eine Seite der Querreckanlage beschriebene umlaufend geschlossene Führungsschienenbahn 2, so kann festgehalten werden, dass in den geraden Führungsbahnabschnitten la auf der Rücklaufseite (wenn also an den Kluppenkörpern keine Folie erfasst, transportiert bzw. gereckt wird) lediglich die Gewichtskraft der Transportkette bzw. die Gewichtskraft in den einzelnen Kluppenkörpern FG und die Kettenlängskraft FK auftritt. Somit liegen die symmetrischen Kraftverhältnisse vor, wie sie anhand von Figur 6a und 6b erläutert wurden. Mit anderen Worten treten auf diesen Führungsbahnabschnitten 2' keine Querkräfte an dem Führungsschienengleitlager 29 auf, d.h. keine Querkräfte sowohl an der Reckkraft-Lauffläche 33a als auch an der dazu parallelen und entgegengesetzt ausgerichteten Kettenkraft-Lauffläche 31a, da die beiden Kluppenkörper-Hälften 6 und 7 (also das Kluppenteil 6 und das Kettenteil 7) aufgrund der entsprechend gewählten Gewichtsverteilung quer zur virtuellen Gewichtssymmetrie-Ebene Sz bezogen auf die Gewichtslauffläche 39 im Gleichgewicht zueinander stehen oder bevorzugt nur geringfügig davon abweichen, vorzugsweise weniger als 30%, 20%, 15%, 10%, 8%, 6%, 4% oder weniger als 2%, insbesondere weniger als 1% davon abweichen.

In den ebenfalls gerade verlaufenden Führungsabschnitten Ib, die auf der Film- und Reckseite liegen, wirken ebenfalls die erwähnte Gewichtskraft FG und die lediglich in Längsrichtung der Führungsbahn wirkende Kettenlängskraft FK. Allerdings ist in diesen Bereichen die zu behandelnde Materialbahn, d.h. im Besonderen der Film F am Rand 8 bereits eingeklemmt und wird über die Transportkette 13 längs der Vorschubrichtung 1 durch die Querreckanlage fortbewegt und in der Reckzone gereckt.

In der Vorheizzone PH ist dabei der Film F noch nicht gereckt. In der der Reckzone nachgelagerten Wärmebehandlungszone HT ist die Reckung bereits durchgeführt und abgeschlossen worden. In den Bereichen PH und HT treten nur vergleichsweise geringe Filmkräfte FR in Querrichtung zur Führungsschienenbahn auf, die überwiegend durch das Filmgewicht und/oder die Restfilm- und Abzugspannung nach dem Recken hervorgerufen werden. Dadurch werden nur vergleichsweise geringe quer zur Abzugsrichtung 1 der Folie F und damit senkrecht zu diesen Führungsbahnabschnitten in Richtung Folie F wirkende Film-Reckkräfte FR erzeugt, die die Reckkraft-Lauffläche 33 nur minimal belasten.

Die erwähnten über das Filmgewicht und/oder die Restfilmspannung eingeleiteten Kräfte werden durch den festgeklemmten Filmrand auf den Kluppenkörper eingeleitet, da der Firmrand 8 des Films F auf dem Kluppentisch 25e durch die Messerklappe 25c festgehalten wird. Diese über den Film F eingeleiteten Film-Reckkräfte FR verlaufen dabei in der Film-Ebene Y und setzen dabei durch entsprechende Ausrichtung der Führungsschiene 15 senkrecht an der Reckkraft-Laufschiene 33 an, also in Höhe der Kluppentisch- Ebene Y, die der Film-Ebene Y entspricht. Hierdurch wird kein Kippmoment auf die Kluppen-Ketteneinheit KK und damit auch keine zusätzlichen Anpress- und/oder Reibkräfte an der Reckkraft-Lauffläche 33 und mangels Verkippung auch nicht an einem Abschnitt der gegenüberliegenden Kettenkraft-Lauffläche 31 erzeugt. Da zum einen - wie erwähnt - die Film-Reckkräfte FR senkrecht auf die Reckkraft-Laufschiene 33 des Gleitschuhs 29 einwirken und zum anderen auch senkrecht zur Gewichtskraft FG und damit zur virtuellen Gewichtssymmetrie-Ebene Sz ausgerichtet sind und dabei schließlich die erwähnte Kettenkraft-Lauffläche 33a schneiden (und nicht außerhalb davon vorbeiläuft), werden die erwähnten Kippmomente vermieden. Da die entsprechende Kraft vorzugsweise im mittleren Bereich der Kettenkraft- Lauffläche 33a ansetzt, wird zudem eine sehr gleichmäßige Flächenpressung oberhalb und unterhalb der Seitenführungskräfte-Ebene Y erzielt, wodurch die auftretenden Reibkräfte ebenfalls wieder minimiert werden.

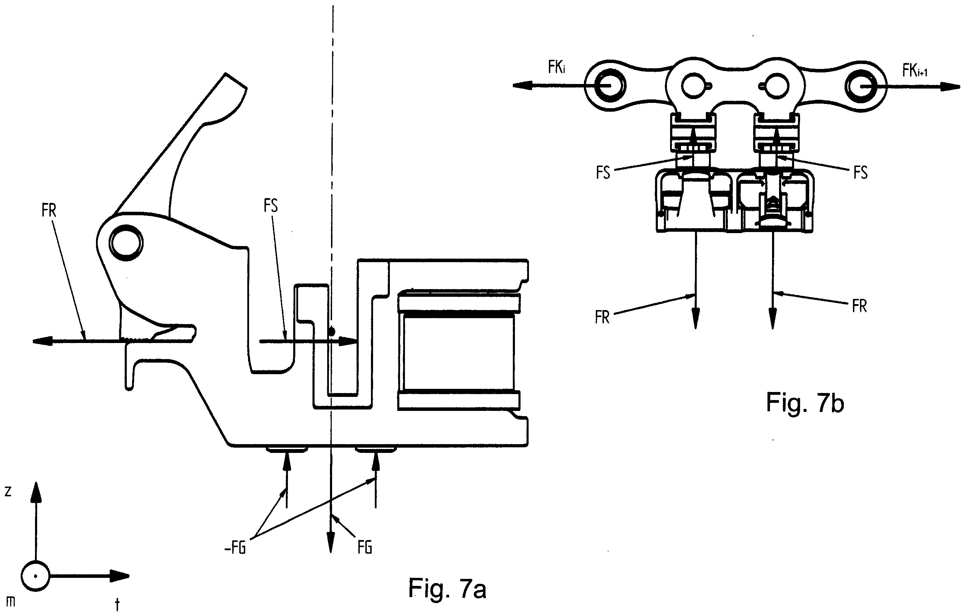

Die entsprechenden Verhältnisse sind in Figur 7a bezüglich des Kluppenkörpers in Seitendarstellung (also in Richtung der Transportkette) und in Figur 7b in Draufsicht wiedergegeben.

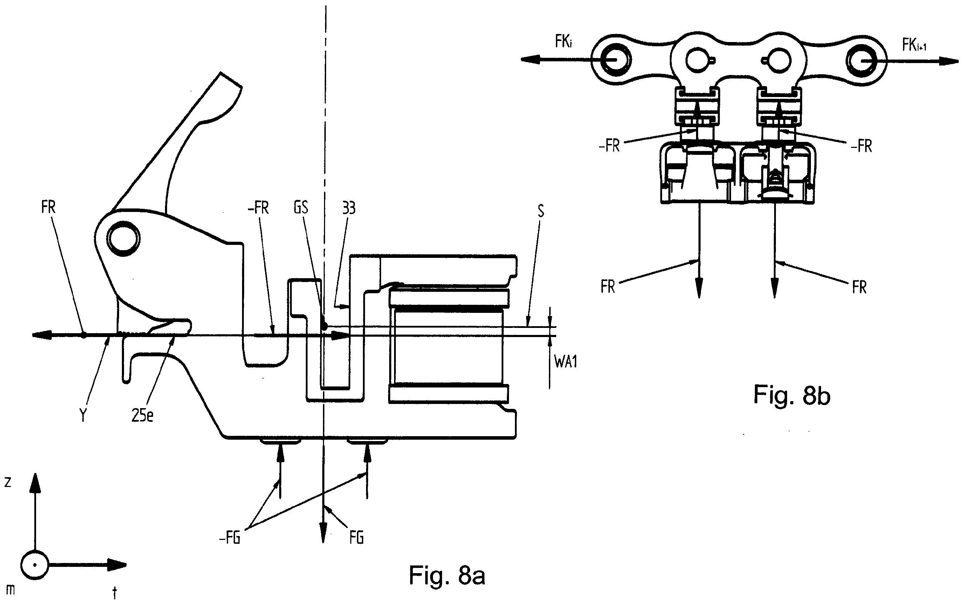

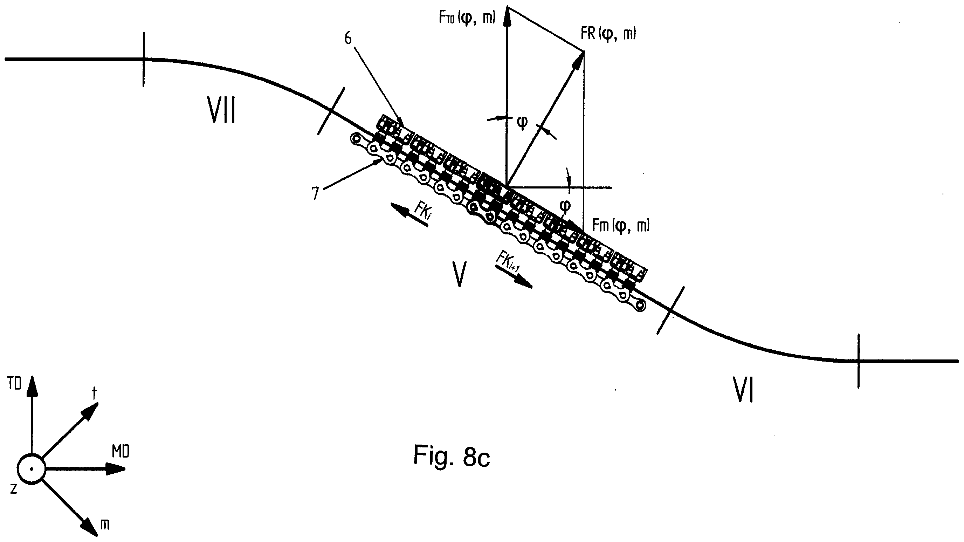

Insbesondere in dem eigentlichen Reckbereich R liegen Verhältnisse entsprechend den Figuren 8a, 8b und 8c vor. Neben der Gewichtskraft FG und der stets wirkenden Kettenlängskraft FK tritt hier vor allem die Reckkraft FTD auf, die mittelbar durch Gleitelemente 33a auf die Reckkraft- Lauffläche 33 übertragen wird. Die resultierende Kraft FR wird dabei im Rahmen der Erfindung senkrecht und symmetrisch oder zumindest vorzugsweise weitgehend symmetrisch auf die Reckkraft-Lauffläche 33a, d.h. auf das dort vorgesehene Reckkraft-Gleitelement 33 eingeleitet. Die resultierende Kraft FR wirkt vor allem - was wesentlich ist - senkrecht zur Gewichtskraft FG und senkrecht zur Reckkraft-Lauffläche 33a, und zwar wiederum im Bereich dieser Reckkraft-Lauffläche 33a, so dass hierdurch kein Kipp- oder Drehmoment erzeugt wird, welches auf die Kluppen-Ketteneinheit KK im Sinne einer Verkippung einwirken kann. Dadurch wird vermieden, dass Kippmomente bei der Einleitung der Reckkraft FTD an der Kluppen-Ketteneinheit KK auftreten, und zwar unabhängig davon, an welchem Punkt im Reckverlauf diese eintreten.

Da die Reckkraft-Einleitung, d.h. der resultierende Reckkraft-Vektor FR in Höhe des Kluppentisches 25e und damit in der Ebene Y des Kluppentisches bzw. der Folie liegt bzw. ausgerichtet ist und senkrecht an der Reckkraft-Lauffläche 39 in deren Bereich, nämlich in Höhe der Ebene Y angreift, ist durch die möglichst exakte Ausrichtung dieser Reckkraft-Einleitung bezogen auf die Gewichtskraft FG eine vollständige Entkopplung der Kräfte gewährleistet, so dass es durch die Reckkraft zu keiner Einleitung eines Kipp- oder Drehmomentes an der Kluppen-Ketteneinheit KK kommen kann. Da kein zusätzliches Kipp- oder Drehmoment auf die Kluppen-Ketteneinheit KK eingeleitet wird, wird auch dadurch keine kipp- oder drehmomentbedingte Reibkrafterhöhung verursacht.

Die durch die Film-Ebene definierte Reckkraft-Ebene Y schneidet die Laufflächen 31a und 33a senkrecht (steht also senkrecht auch zum Gewichtskraft-vektor FG), wobei die Höhe des Schnittes zwischen der Film-Ebene Y bezogen auf die Höhe der Laufflächen 31a, 33a, insbesondere auf die Höhe der Reckkraft-Lauffläche 33a mittig zu liegen kommt oder bezogen auf die Gesamthöhe dieser Laufflächen 31a, 33a und insbesondere der Reckkraft-Lauffläche 33a weniger als 30%, insbesondere weniger als 20%, 15%, 10% oder 5% oder weniger als 4%, 3%, 2% oder 1% von der idealen Mittellage abweicht. Auf jeden Fall schneidet die Ebene Y stets die Reckkraft-Lauffläche 33a und vorzugsweise auch die entgegengesetzt ausgerichtete Kettenkraft-Lauffläche 31a, um das Einleiten von Kippmomenten sicher zu vermeiden. Durch die mittige Ausrichtung wird bevorzugt eine möglichst gleichmäßige Flächenpresskraft erzeugt, wodurch die gesamte Reibung und eine unterschiedliche Abnutzung oder Abrieb vermieden wird.

Dabei wird die resultierende Kraft FR als die resultierende Vektorkomponente aus den (Film-) Reckkräften in TD Richtung (FTD) und in m Richtung Fm und der Kraft des Folienabzugs FMD bezüglich des Reckwinkels phi gegenüber MD bzw. TD und der Position m des Schienenweges definiert. Die Koordinatensysteme sind schematisch in Figur 8c für den Fall dargestellt, dass die resultierende Komponente FR im Reckwinkel ϕ gebildet wird. Dargestellt ist ein Folienstück F, das durch die Kluppen 6 erfasst und mit der Kette 6 durch den Ofen gezogen wird.

In den Bereichen lb sind das diejenigen Kräfte, die durch das Eigengewicht des Filmes vor der Reckzone und nach der Reckzone durch das Eigengewicht des Filmes und die Relaxierung verursacht werden.

In den Bereichen V, VI und VII (also in der Reckzone) ist damit die resultierende vektorielle Komponente aus den Kräften definiert, die durch die Streckung der Folie verursacht werden. Die resultierende Komponente FR setzt sich dabei in komplexer Weise aus den Vektorkomponenten der Reckkräfte in Maschinenquerrichtung TD und der Transportrichtung m und der Maschinen- und damit der Folienlaufrichtung MD und dem Reckwinkel ϕ zusammen. Diese hängen wiederum unter anderem von dem Spannungs-Dehnungs-Verhalten des Films, der Temperaturführung und der Materialwahl des Polymers ab. Diese Zusammenhänge sind dem Fachmann grundsätzlich bekannt.

In dem erwähnten beginnenden Reckbereich VII (Figur 5), der durch einen Schienenabschnitt gekennzeichnet ist, der einen in Abzugsrichtung der Folienbahn von der Symmetrie- Ebene SE nach außen weg verlaufenden konvexen Bogenabschnitt bildet, tritt durch die Kettenlängskräfte verursachte Querkraft FQ (auf die nachfolgend eingegangen wird) sowie der ebenfalls stets auftretenden Reckkraft FTD zusätzlich noch eine in Richtung der Folienbahn gerichtete Fliehkraft FF auf. Diese Fliehkraft FF ist entgegengesetzt zur Querkraft FQ ausgerichtet. Die Fliehkraft FF entsteht durch die Führung der Kette um den Bogenabschnitt VII der Führungsschiene 15. Die erwähnte Querkraft FQ wird durch den Kettenzug in der Transportkette 13 verursacht, da durch die eingeleiteten Zugkräfte in der Transportkette die einzelnen Kettenglieder auf der konkaven Seite der Führungsschiene an der betreffenden Kettenkraft-Lauffläche 31 bzw. den dort vorgesehenen Gleitelementen 31a des Führungsschienen-Gleitlagers 29 zur Anlage kommen, d.h. hier angedrückt werden. In Abhängigkeit der Größenverhältnisse der Kräfte FR, FQ und FF wird also eine der Gleitpaarungen 15a - 31a bzw. 15b - 33a belastet.

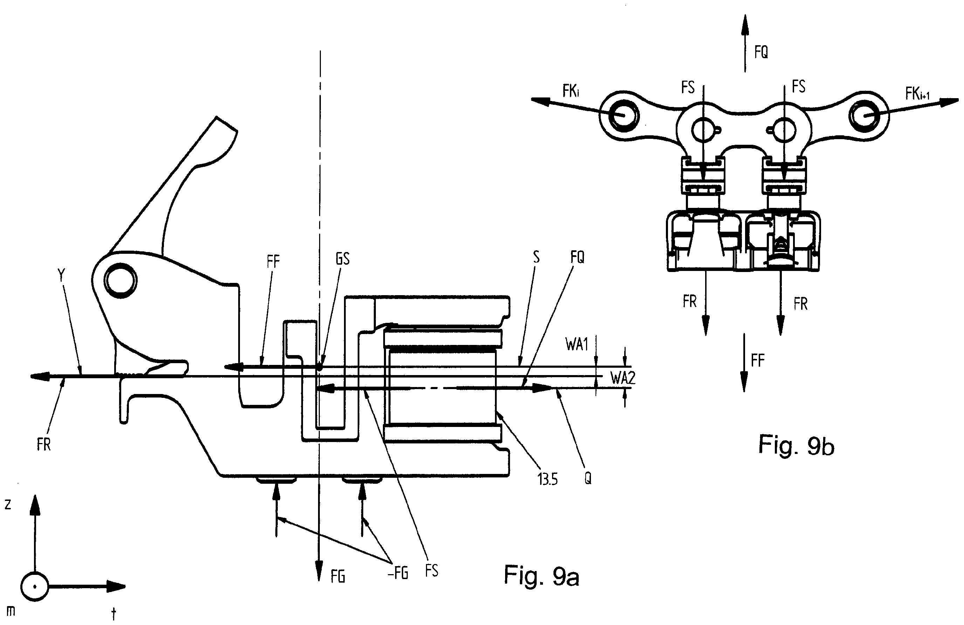

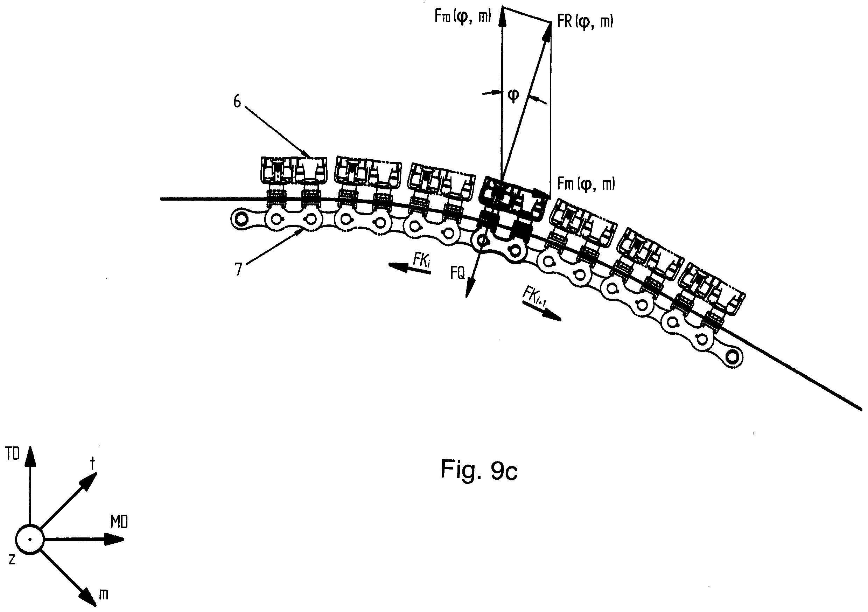

Wie aus den Darstellungen gemäß den Figuren 9a, 9b und 9c ebenfalls ersichtlich ist, ist die Gesamtkonstruktion derart, dass sowohl die resultierende Kraft FR wie die Fliehkraft FF parallel zueinander, d.h. im gezeigten Ausführungsbeispiel in gleicher oder fast gleicher Wirk-Ebene Y auftreten, da der Gewichtsmittelpunkt GS des Kluppen-Ketteneinheiten KK und/oder der sonstigen Glieder der Transportkette bevorzugt in der Ebene Y=S oder in deren Nähe liegt, die durch den Kluppentisch 27e und damit durch die Ebene der Folie F definiert ist. Da in diesem Gewichtsmittelpunkt GS auch die Fliehkräfte FF ansetzen, wirken also die Fliehkräfte FF in der (zur Wirk-Ebene Y parallelen) Wirk-Ebene S in geringem Weiteabstand WA1 oberhalb der Ebene Y und die Reckkräfte RF in der Wirk-Ebene Y.

Durch die Kettenlängskräfte werden in den konkaven und konvexen Kurvenabschnitten die Seitenführungskräfte FS bzw. die Querkräfte FQ eingeleitet, und zwar ebenfalls wieder parallel zur Reckkraft bzw. zur Fliehkraft. In Figur 6a ist dabei auch die Wirk-Ebene Q eingezeichnet, die die entsprechenden Kettenglieder bzw. die Schonrolle 13.5 mittig und dabei parallel zur Reckkraft bzw. zum Reckkraft- bzw. Fliehkraftvektor (und damit parallel zu den WirkEbenen Y und S) durchsetzt, im gezeigten Ausführungsbeispiel in einem geringfügigen Abstand unterhalb der Reckkraft-Ebene Y. Die Querkraft FQ bzw. die Seitenführungskraft FS ist entgegengesetzt zur Fliehkraft gerichtet und greift zumindest näherungsweise mittig an den Gleitflächen 31a bzw. 33a an. Da also die Angriffspunkte dieser quer zur Gewichtskraft FG teilweise entgegengesetzt zueinander ausgerichteten, in parallelen Ebenen wirkenden Kräfte an Angriffspunkten ansetzen, deren Vertikalabstand beieinander oder fast beieinander liegt, wobei alle erwähnten Kraftvektoren nicht nur senkrecht zu den betreffenden Laufflächen 31, 33 ausgerichtet sind, sondern diese Laufflächen vor allem schneiden, bevorzugt mittig schneiden oder davon bevorzugt weniger als 30%, insbesondere weniger als 20%, 15%, 10% oder 5% oder weniger als 4%, 3%, 2% oder 1 % abweichen (also nur geringe Abstände zueinander aufweisen), und dabei ferner diese Kraftvektoren zur Gewichtskraft FG senkrecht stehen, werden also keine oder quasi keine Quer- oder Kippkräfte erzeugt, die auf den Kluppenkörper einwirken.

Die Querkräfte FQ bzw. Seitenführungskräfte wirken in einer mittleren Ebene Q senkrecht zu der Schonrolle 13.5 der Kettenglieder (bei symmetrischem Aufbau der Kette), und zwar mittig bezogen auf die vertikale Höhe der Kette (also beispielsweise mittig zu der Vertikalhöhe der Außenhülse 13.5). Die Querkraft setzt in konvexen Abschnitten an der Kettenkraft-Lauffläche 31 an, sofern nicht die Gegenkräfte insgesamt größer sind, so dass die quer zur Gewichtskraft wirkenden und sich teilweise aufhebenden, d.h. entgegengesetzt gerichteten Kräfte dazu führen, dass lediglich eine sich durch die Differenz ergebende Restkraft an der Kettenkraft-Lauffläche 33 oder der Kettenkraft-Lauffläche 31 senkrecht abstützt, bevorzugt bezogen auf die Vertikalhöhe der Laufflächen 31, 33 in deren mittlerem Bereich. In Figur 6a ist neben der Reckkraft-Ebene Y und der Seiten-Fliehkraft-Ebene S auch die Querkraft- und Seitenführungs-Ebene Q eingezeichnet, sowie die Wirkabstände WA1 zwischen der Reckkraft-Ebene Y und der Schwerkraft-Ebene S bzw. der Wirkkraftabstand WA2 zwischen der Reckkraft-Ebene Y und der Querkraft-Ebene Q. Diese Wirkkraftabstände WA1 und/ oder WA2 sind vorzugsweise 0, können aber auch in bevorzugt vergleichsweise geringem Maß vorhanden sein.

Das erläuterte Transportsystem zeichnet sich dabei unter anderem auch dadurch aus, dass die Kluppen-Ketteneinheit KK so ausgebildet ist, dass
- die Fliehkraft-Ebene S in einem Schwerkraft-Wirkabstand WA1 parallel zur Reckkraft-Ebene Y verläuft,
- die Querkraft- oder Seitenführungskraft-Ebene Q in einem Kraftwirkabstand WA2 parallel zur Reckkraft-Ebene Y verläuft, und
- ein zwischen der Schwerkraft-Ebene S und der Unterkante 15c der Führungsschiene 15 vorgesehener Abstand AF zumindest zweimal so groß und vorzugsweise zumindest dreimal, viermal oder zumindest fünfmal so groß ist wie der größte der beiden Wirkabstände WA1 oder WA2.

Ebenso kann das Transportsystem aber auch so ausgebildet sein, dass die Kluppen-Ketteneinheit KK und die Führungsschiene 15 so ausgebildet sind, dass
- die Fliehkraft-Ebene S und/oder die Querkraft- oder Seitenführungskraft-Ebene Q mit der Reckkraft-Ebene Y zusammenfallen, und
- ein Abstand AF zwischen der Schwerkraft-Ebene S und/oder der Unterkante 15c der Führungsschiene 15 so bemessen ist, dass dieser zumindest 1 mm, vorzugsweise zumindest 5 mm, 10 mm, 20 mm, 30 mm, 40 mm, 50 mm oder mehr beträgt.

Im gezeigten Ausführungsbeispiel ist das Höhenmaß (senkrecht zur Film-Ebene Y des Wirkabstandes WA1 und/oder WA2 kleiner als 30%, insbesondere kleiner als 25%, 20%, 15%, 10%, 8%, 6%, 5%, 4%, 3%, 2% und insbesondere kleiner als 1 % der senkrecht zur Folien-Ebene Y und/oder parallel zur zum Gewichtsvektor FG verlaufenden Höhe der Kettenkraft-Lauffläche 31 und/oder 33.

Auch dadurch wird verhindert, dass es insoweit zu keiner drehmomentbedingten Erhöhung der Reibkräfte kommen kann.

Dabei können - wie aus den Zeichnungen ersichtlich ist - die Höhe der Kettenkraft-Lauffläche 31a und die Höhe der Reckkraft-Lauffläche 33 durchaus unterschiedlich ausgebildet sein. Entscheidungserheblich ist lediglich, dass die hierauf einwirkenden, senkrecht zu den Gewichtskräften FG wirkenden Reck-, Quer-, Seitenflächen- und/oder -Fliehkräfte im Bereich der Kettenkraft- Lauffläche 31a bzw. der Reckkraft-Lauffläche 33a ansetzen und dabei vor allem die zugehörigen Vektoren in einer gemeinsamen oder nahe zueinander liegenden Ebene wirken, so dass ansonsten auftretende Kipp- oder Drehmomente, die auf den Kluppenkörper 6 und damit auf die Transportkette 13 einwirken könnten, vermieden oder doch soweit als möglich minimiert werden. Die entsprechenden Verhältnisse sind in der Figur 9a und bezüglich der an dem Kluppenkörper ansetzenden Kräfte und Kraftvektoren anhand von Figur 9c wiedergegeben.

Von daher ist in den Zeichnungen auch noch eine Kettenkraft-Laufflächenhöhe 231 und eine Reckkraft-Laufflächenhöhe 233 eingezeichnet (beispielsweise Figur 6), die die jeweilige Höhe oder wirksame Höhe von dem untersten bis zum obersten Punkt der jeweiligen Gleitfläche 31a bzw. 33a beschreibt (diese Gleitfläche muss vom untersten bis zum obersten Punkt nicht durchgängig sein, sondern kann unter Ausbildung eines freien Zwischenraumes beabstandet zueinander ausgebildete Gleitflächen aufweisen). Entscheidungserheblich ist nur die wirksame Gesamthöhe der jeweiligen Kettenkraft- bzw. Reckkraft-Laufflächenhöhe 231 bzw. 233, die sich an der entsprechenden Lauf- oder Außenfläche 15a, 15b der Führungsschiene 15 abstützt, hiermit also wechselwirkt. In diesem Bereich sollen nämlich mit Ausnahme der Gewichtskraft FB alle senkrecht dazu verlaufenden weiteren auftretenden Kräfte einwirken, so dass hier ebenfalls an der Führungsschiene keine Kipp- und Drehmomente eingeleitet werden können. Mit anderen Worten sollen alle hier senkrecht auf die Führungsflächen bzw. Gleitflächen einwirkenden Kräfte kipp- und drehmomentfrei an der Führungsschiene abgestützt werden, ebenso wie die Gewichtskraft FG, die hierzu senkrecht wirkt und kipp- und drehmomentfrei an der Trag- und Gewichtsschiene 17 abgestützt werden soll, indem auch dieser Gewichtsvektor die entsprechende Lauffläche 17a der Tragschiene 17 im Bereich der dort ausgebildeten wirksamen Gleitfläche 139 schneiden.

Im gezeigten Ausführungsbeispiel beginnen die beiden aufeinander zu weisenden Laufflächen 31a, 33a in einer gemeinsamen unteren Höhe an der Unterkante 15c der Führungsschiene 15, wobei die Kettenkraft-Lauffläche 31 unterhalb, d.h. der unten liegenden Gleitfläche 39 näher liegend endet als die Kettenkraft-Lauffläche 33a, die somit insgesamt mit größerer Höhe ausgestaltet ist. Die höhere Ausgestaltung dieser Kettenkraft-Lauffläche 33a dient dazu, dass die hier ansetzenden insgesamt größeren oder maximalen Kräfte (verglichen mit den an der gegenüberliegenden Kettenkraft-Lauffläche 31a maximal ansetzenden Kräfte) über das höhere Gleitelement 33 aufgenommen werden können, wodurch die Flächenpressungskräfte verringert werden können. Dabei können grundsätzlich die in der Höhe kürzere Kettenkraft-Lauffläche 31a und die in her Höhe größere Kettenkraft-Lauffläche 33a symmetrisch zu einer mittleren Horizontal-Ebene angeordnet sein. Im gezeigten Ausführungsbeispiel beginnen sie jedoch in gleicher unterer Höhenlage, nämlich an der Unterkante 15c der Führungsschiene 15, und enden an ihrem oberen freien Ende in unterschiedlicher Höhenlage.

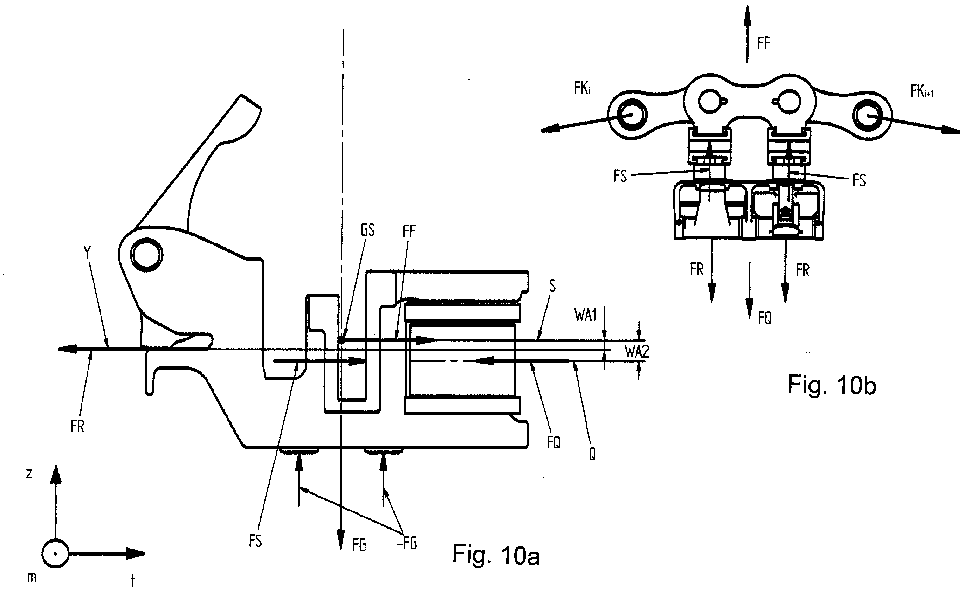

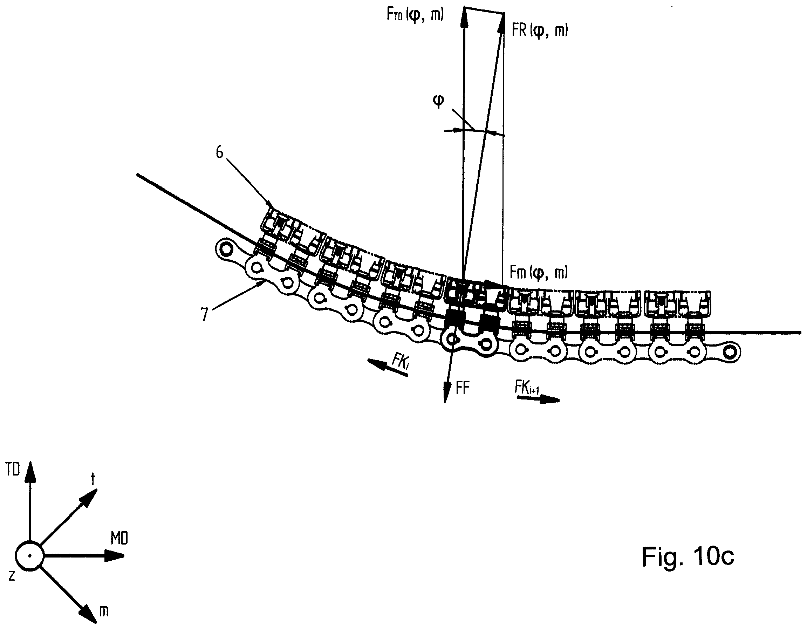

Umgekehrt sind die Verhältnisse in dem entsprechenden konkaven Führungsschienenabschnitt VI am Ende der Reckzone im Übergang zur Wärmebehandlungszone Ib. Die entsprechenden Verhältnisse sind in den Figuren 10a, 10b und bezüglich der ansetzenden Kräfte und Kraftvektoren anhand von Figur 10c wiedergegeben.

Daraus ist zu sehen, dass in dem entsprechenden konkaven Führungsschienenabschnitt VI des konkav geformten Reckzonenbogens durch die Kettenlängskraft verursacht eine so definierte Seitenführungskraft FS auftritt, die neben der resultierenden Kraft FR für eine Belastung der Reckkraft- Lauffläche 33a des Gleitelementes 33 sorgt. Der Bereich VI ist der meist belastete Bereich und kann durch weitere Maßnahmen, wie z.B. eine magnetische Entlastung reduziert werden. In diesem Fall wirken neben der stets wirksamen Gewichtskraft FG zwei Kraftvektoren auf die Transportkette 13, d.h. auf den jeweils betreffenden Kluppenkörper 6 ein, nämlich zum einen die resultierende Kraft FR sowie die Seitenführungskraft FS. Trotz der verschiedenen auftretenden Kräfte greifen die beiden zuletzt genannten Kraftvektoren jedoch wieder an der betreffenden Kluppen-Ketteneinheit KK an der Reckkraft-Lauffläche 33a an, und zwar wiederum bevorzugt in dicht beieinander liegenden Ebenen, nämlich in der Reck-Ebene Y, die durch Kluppentisch bzw. die Lage der Folie definiert ist und in der mittig durch die Kettenglieder und in der Schonrolle verlaufenden Ebene Q und damit in einem geringen Wirkabstand WA2 unterhalb der Folien-Reckkraft-Ebene Y liegt. Die ebenfalls in diesem Kurvenabstand von der Folienbahn F weg nach außen gerichteten Fliehkräfte FF wirken parallel zu den Seitenführungskräften FS, und zwar in einem geringen Wirkabstand WA1 oberhalb der Reckfolien-Wirkkraft-Ebene Y. Da diese Kräfte zudem die Laufflächen 31a, 33a schneiden (vorzugsweise in deren mittlerem Bereich entsprechend der oben angegebenen geringen Abstände WA1 bzw. WA2) und dabei die Laufflächen 31a, 33a wie aber auch den Gewichtskraft-vektor FG senkrecht schneiden, wird auch hierdurch insgesamt ein Kräfte-Ausgleich geschaffen, wodurch sichergestellt ist, dass keine oder quasi keine Kipp- oder Drehmomente durch die ansetzenden Kräfte auf die Kluppen-Ketteneinheit KK eingeleitet werden, so dass hierdurch sichergestellt ist, dass es auch in diesem Führungsbahnabschnitt nicht zu einer drehmomentabhängigen Erhöhung von Reib- und Gleitwerten kommen kann.

Schließlich treten entsprechende Kraftverhältnisse ohne Folien- oder Reckkräfte auch an den konkaven Führungsschienenabschnitten II bzw. an den konvexen Führungsschienenabschnitten III und an den Umlenkstellen IV am Einlauf wie am Auslauf auf, ohne dass hier aber entsprechende Folien- oder Reckkräfte wirksam sind. Nur der Vollständigkeit halber wird erwähnt, dass nicht zwingend zwischen dem Einlauf und dem Auslauf in der entsprechenden Reckzone nur ein gerader Führungsschienenabschnitt vorgesehen sein muss. Um hier unterschiedliche Reckverhältnisse einstellen zu können, können in diesem Bereich auch noch weitere konvexe oder konkave Führungsschienenabschnitte vorgesehen sein, möglicherweise auch mit einem oder mehreren Gelenken, um unterschiedliche Reckverhältnisse einstellen zu können. Auf jeden Fall ergeben sich stets Kräfteverhältnisse, wie sie anhand des Streckenführungsabschnittes V im Bereich der Reckzone für einen geraden Führungsschienenabschnitt bzw. für einen konvex oder konkav - bezogen auf die Folie - ausgerichteten Führungsschienenabschnitt diskutiert wurden.

Hinsichtlich der erläuterten Varianten, die über den gesamten Verlauf der Führungsschiene 15 auftreten können, wird nachfolgend die tabellarische Übersicht wiedergegeben.

| Zone | Ia | Ib | II | III | IV | V | VI | VII |
|---|---|---|---|---|---|---|---|---|
| Gewichtskraft FG | + | + | + | + | + | + | + | + |
| Kettenlängskraft FK | + | + | + | + | + | + | + | + |
| resultierende Kraft FR | - | +(1) | - | - | - | + | + | + |
| Fliehkraft FF | - | - | + | + | + | - | + | + |
| Seitenführungskraft FS | - | - | + | - | - | +(2) | + | - |
| Querkraft FQ | - | - | - | + | - | +(2) | - | + |

| | | | | | | | | |
|---|---|---|---|---|---|---|---|---|
| (1) Filmkraft in der Vorheiz- und Relaxations-Zone vernachlässigbar (2) leichtes Verkippen der Kluppen-Ketteneinheit um eine vertikale Achse z (3) vernachlässigbar | | | | | | | | |

Da - wie erläutert - zum Teil an der Kluppen-Ketteneinheit KK entgegengesetzt wirkende Kräfte, d.h. beispielsweise sogenannte Seitenführungskräfte wie auch entgegengesetzt wirkende Querkräfte, darüber hinaus auch Reibkräfte, Fliehkräfte etc. ansetzen können, hängt es auch von der Größe der hier entgegengesetzt wirkenden Kräfte ab, welche Lauffläche des Führungsschienen-Gleitlagers 29 an der zugeordneten Fläche der Führungsschiene 15 unter Druck flächig anliegend belastet wird.

Die geschilderten Ausführungsbeispiele zeigen vor allem, dass der Aufbau im Rahmen der Erfindung so gewählt ist, dass alle relevanten Kräfte in entkoppelter Weise auf die Kluppen-Ketteneinheit KK einwirken, d.h. auf das Kluppenteil 5 und das Kettenteil 7, wodurch die gewünschten positiven Effekte erzielt werden. Dabei ist die Anordnung derart, dass keine oder keine relevanten Kipp- und Drehmomentkräfte eingeleitet werden, die auf die Gleitflächen in nachteiliger Weise einwirken könnten.

Aufgrund der günstigen Krafteinleitung können die Gleitelemente immer exakt und vollständig flächig anliegen bzw. in weiten Teilen flächig anliegen. Die Gewichtslauffläche liegt immer sauber flächig auf, da der günstige Schwerpunkt ein Verkanten des Gleitkörpers ausschließt. Auch in allen anderen Bereichen liegt der Gewichtslaufschuh immer flächig auf, da alle Seitenführungskräfte kein Verkippen verursachen (also kein Kanteläufer). Bei der Seitenführungsschiene verhält es sich genauso. Es ist immer ein flächiges Aufliegen garantiert. In den Kurven kommt der Hertzschen Pressung eine Bedeutung zu, die insbesondere unter tribologischem Gesichtspunkt eine sehr große Verbesserung darstellt.

Von daher ist im Rahmen der erfindungsgemäßen Lösung auch keine Abstützeinrichtung zur Aufnahme von Dreh- und Kippmomenten mehr notwendig (die beim Stand der Technik in der Regel jedoch vorgesehen sein muss). Von daher wird die beschriebene Lösung auch als drehmomentstützfreie Kluppen- und Schienenanordnung bezeichnet.

Von daher zeichnet sich die Erfindung in ihrem Kern durch ein oder mehrere der nachfolgend wiedergegebenen Merkmale, Vorteile und/oder der durch die nachfolgend aufgeführten Wirkungen aus, nämlich:
- Es handelt sich im Rahmen der Erfindung um ein ausbalanciertes System, bei welchem die Kluppen-Transporteinheit oder im Konkreten die Kluppen-Ketteneinheit ausbalanciert ist, derart, dass das jeweilige Kluppenteil und das einen Bestandteil der Transportkette darstellende Kettenteil (das teilweise auch als Transportteil bezeichnet wird), wie erläutert, bezogen auf die Führungsschiene entsprechend im Gleichgewicht steht;
- in den meisten Abschnitten des Umlaufweges des Transportsystems treten nur Gewichtskräfte auf, die auf die Führungsschiene wirken; dies eröffnet teilweise auch die Möglichkeit, auf eine Kühlung oder insbesondere eine durchgehende Kühlung auf diesem Umlaufweg zu verzichten oder nur für die durch die Gewichtskraft erzeugten Reibungskräfte und die dadurch verursachte Erwärmung eine Kühlung, z.B. in bestimmten Abschnitten der Tragschiene 17, vorzusehen, während eine Entlastung bzw. Kühlung der Seitenführungsschiene gegebenenfalls nur in bestimmten, noch kürzeren Bereichen notwendig oder vorteilhaft ist;
- wenn eine derartige Kühlung vorgesehen ist, kann sie als direkte Kühlung realisiert sein;
- im Rahmen der Erfindung ist eine Entkopplung zwischen der Gewichtskraft und den anderen, an der Kluppen-Ketteneinheit ansetzenden Kräften vorgesehen,
- die an der Kluppen-Ketteneinheit ansetzenden (und von den unterschiedlichen Abschnitten der umlaufenden Führungsbahn abhängig auftretenden) Reckkräfte, Kettenlängskräfte, Fliehkräfte, also alle Kräfte deren Vektoren außerhalb der Transportvorrichtung verlaufen, werden durch die seitlichen Laufflächen der Führungsschiene aufgenommen und in die Führungsflächen eingebracht; dadurch entsteht keine Verkippung der Anordnungen; es entstehen also keine zusätzlichen Abstützkräfte, die aufgenommen werden müssen; somit kann auch ein definiertes flächiges Anliegen der Gleitelemente gewährleistet werden; dabei treten alle Kräfte innerhalb der Führungsflächen der Führungsschiene auf;
- aufgrund der günstigen Krafteinleitung kann damit ferner gewährleistet werden, dass die Gleitelemente immer exakt und möglichst vollflächig an den Lauf- und Gleitflächen der Führungsschienen anliegen bzw. zumindest in weiten Teilen flächig anliegen;
- die Gewichtslauffläche liegt im Rahmen der Erfindung immer exakt und möglichst vollflächig auf der Trag- und/oder Gewichtslaufschiene auf, da sichergestellt ist, dass durch entsprechend günstige Wahl des Schwerpunktes der Kluppen-Ketteneinheit ein Verkanten des einen oder der mehreren Gleitkörper auf der Tragschiene bzw. Tragschienenfläche ausgeschlossen ist;
- auch in allen anderen Bereichen auf der Umlaufbahn (wo die Führungsschiene vorgesehen ist) liegt der vorgesehene Gewichtslaufschuh immer flächig auf der Trag- und Gewichtsschiene auf, da alle Seitenführungskräfte kein Verkippen verursachen (wodurch also Kantenläufer vermieden werden); bei der Führungsschiene und den zugehörigen seitlichen Lauf- bzw. Gleitflächen verhält es sich ebenso, da außer in den Kurven immer ein flächiges Aufliegen der Gleitlager (des Gleitschuhs) auf der Kettenkraft-Lauf- bzw. -Gleitfläche oder der Reckkraft-Lauf- bzw. -Gleitfläche gewährleistet ist; in den Kurven hört dann noch die sogenannte Hertzsche Pressung auf, ein extrem wichtiger Punkt, der tribologisch eine sehr große Verbesserung darstellt;
- schließlich ist die Gesamtkonstruktion im Rahmen der Erfindung so umgesetzt, dass durch die eingeleiteten Kräfte, insbesondere die senkrecht zur Gewichtskraft auftretenden weiteren Kräfte (beispielsweise Reckkraft, Fliehkraft etc.) keine Überhöhungsfaktoren auftreten; ein Überhöhungsfaktor kann dann auftreten, wenn die entsprechenden Kräfte nicht direkt in einer der beiden Laufflächen der Führungsschiene eingebracht werden, denn dann muss nur diese Kraft entsprechend abgestützt werden; wenn jedoch entsprechende, quer zur Gewichtskraft wirkende Kräfte nicht direkt in die Lauf- oder Gleitflächen der Führungsschiene eingebracht werden, ergeben sich zusätzliche Kräfte die aufgenommen und abgestützt werden müssen, mit der Folge, dass sich die Reibung und damit der Energieeintrag erhöht, eine weitere Kühlung vorgesehen sein muss etc.,
- schließlich wird angemerkt, dass der Abstand zwischen der Kettenkraft-Lauffläche 31 und der Reckkraft-Lauffläche 33, also die Breite der Führungsschiene 15 im Verhältnis zum maximalen Abstandsmaß in gleicher Richtung zwischen den entferntest liegenden Gleitelementrändern 40' an dem zumindest einen Gleitlager 40 oder den zumindest beiden vorgesehenen Gleitlagern 40a, 40b sehr viel kleiner ist. Im gezeigten Ausführungsbeispiel ist der Abstand zwischen den entferntest liegenden Gleitelement-Rändern 40' (d.h. die maximale Erstreckungsbreite 39' der Abstützflächenanordnung 39, die durch die Auflagefläche der Gleitelemente auf der Tragschiene 17 gebildet ist) im Verhältnis zur Breite der Führungsschiene 15 und zum Abstand zwischen den beiden Laufflächen 31, 33 zumindest doppelt so groß, bevorzugt zumindest dreimal so groß wie die Breite der Führungsschiene 15. Da sich zudem die beiden Laufflächen 31, 33 vorzugsweise im mittleren Bereich der Gewichtslauffläche 39, d.h. im mittleren Bereich zwischen den entferntest liegenden Gleitelement-Rändern 40' schneiden (oder nicht mehr als 5%, 10%, 15%, 20%, 25%, 30%, 35% oder nicht mehr als 40% bezogen auf die gesamte Erstreckungsbreite zwischen den beiden Gleitelement-Rändern 40'abweichen), wird sicher vermieden, dass keine Kipp- oder Drehmomente zusätzlich entstehen und nicht zusätzlich zur Gewichtskraft auf die Tragfläche 17 einwirken können, wodurch die Reib- und Energiewerte etc. verschlechtert werden würden.

### Kettenlängskraft-Entkopplung

Anhand der erläuterten Ausführungsbeispiele ist bereits gezeigt worden, dass in allen Bereichen die Kettenlängskraft wirkt, die jedoch abhängig ist von der Kettenlänge (Gewicht), den Fliehkräften, der Vorspannung, den Reckkräften (die wiederum abhängig sind von der Filmdicke, dem Filmmaterial, der Recktemperatur etc.), dem Reckwinkel usw.. Von daher wirkt die Reckkraft in jedem Kettenglied unterschiedlich, je nach Position im Transportsystem.

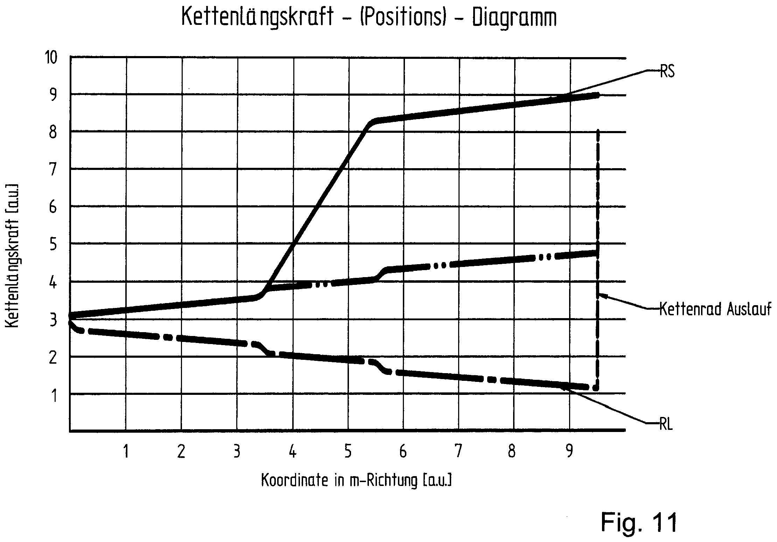

Diese Abhängigkeit der Kettenlängskraft von der Position zeigt sich vor allem auch anhand des in Figur 11 wiedergegebenen Diagramms. Daraus ist zu ersehen, dass die Kettenlängskraft am Antrieb des Auslaufbereiches A am größten ist, weil die gesamte Transportkette 13 über das angetriebene Auslaufrad gezogen wird. In Abhängigkeit von dem im Einlaufbereich E vorgesehenen Eingangsrad, welches eventuell mit Teillast angetrieben wird, ändern sich die Verhältnisse bezüglich der Kettenlängskräfte am Aus- und Einlauf.

Die erwähnten Antriebe (Auslaufende und im Teillastbetrieb im Einlaufbereich) haben beim Anfahren also die Gewichtskraft an der Transportkette und die zwischen Transportkette und vor allem der Tragschiene 17 entstehende Reibung zu überwinden. Ist die Transportkette 13 auf ihrer Endgeschwindigkeit, kann sie ohne weitere Verluste (wenn das Gesamtsystem ohne Folie angetrieben wird, also ohne auftretende Reckkräfte betrieben wird) betrieben werden, da lediglich die - nur sehr geringen - Reibkräfte überwunden werden müssen. D.h. nur zum Ausgleich der Reibung muss entsprechende Energie aufgewandt werden. Von daher würde man an sich einen linearen Verlauf der auftretenden Kettenlängskraft (in Figur 11 die gestrichelte Linie) im Vorlaufbereich Ib, sowie in den Bereichen V, VI und VII in Figur 5 erwarten, solange in dem Gesamtsystem keine weiteren Verluste vor allem an den Bogenführungsabschnitten der Führung 15 sowie keine Verluste an den Gelenken, Kettenrändern etc. auftreten. Eine Abweichung dieses linearen Verlaufs würde auf ein nicht entkoppeltes System hinweisen, da dann Verluste z.B. durch Reibung an den Seitenführungs-Laufflächen, d.h. an der Kettenkraft-Lauffläche 31 und/oder der Reckkraft-Lauffläche 33 auftreten würden. Nachweisbar ist dies durch eine Messung des Motormomentes.

Entsprechendes gilt grundsätzlich auch für den Rücklaufbereich.

Wird in der Anlage eine Querreckung durchgeführt, dann muss die Kettenlängskraft entsprechend dem Spannungs-Dehnungsverhalten der Folien vor allem in den Reckzonenbereichen V, VI, VII stark zunehmen.

### Ausführungsbeispiel der Gewichtslauffläche

Bereits anhand von Figur 4a und Figur 6a ist erwähnt worden, dass an dem Kluppen-Ketteneinheiten KK auf dessen Unterseite eine Gleiteinrichtung insbesondere in Form von zumindest einem Gleitelement 40, im gezeigten Ausführungsbeispiel in Form von zwei quer nebeneinander sitzenden Gleitelementen 40a, 40b, vorgesehen ist, wodurch eine unten liegende Abstützfläche 39 definiert ist, in deren Rahmen Gleitelemente 40, d.h. 40a und 40b auf der Trag- und Laufschiene 17, also auf der so gebildeten Trag- und Laufschienenfläche 17' abgestützt werden und darauf längsverschiebbar mittels der Transportkette 13 verfahren werden. Für die erwähnten Gleitelemente 40a, 40b können jedwede Elemente verwendet werden, die einen besonders guten Gleitwert, d.h. einen möglichst geringen Reibungswert aufweisen und dabei möglichst nur einem geringsten Abrieb unterliegen. Von daher sind alle bekannten Gleitwirkstoffe grundsätzlich einsetzbar. Als Beispiel seien hier nur Polyetheretherketone, Karbon, Graphitwirkstoffe etc. erwähnt.

Als Ausführungsform der Gewichts- und Seitenlaufflächen und damit für die Gleitelemente kommen also Kunststoffe in Betracht, die beispielsweise aus Thermoplasten oder Duroplasten bestehen oder diese umfassen können. Dabei können die Thermoplaste oder Duroplaste wie folgt zusammengesetzt sein oder die folgenden Anteile umfassen:
- Fasern aller Art zur Verstärkung (Anteil von 0% bis 100%), beispielsweise in Form von Kohlefasern, Glasfasern etc.,
- Festschmierstoffe aller Art (Anteil von 0% bis 100%), beispielsweise in Form von Graphit, Molybdändisulfid etc.,
- Beschichtungen aller Art, z.B. Kunststoffen, Metallen etc.,
- Oberflächenbehandlungen aller Art, z.B. mit Gasen, Strahlung, thermisch, elektrisch, etc.,
- mechanische Oberflächenbehandlungen, z.B. durch Drehen, Fräsen etc.

Dabei können die vorstehend genannten Gleitelemente auch aus Kombinationen von Thermoplasten und Duroplasten, auch unter Berücksichtigung der vorstehend genannten ergänzenden Erläuterungen und Ergänzungen, also auch unter zusätzlicher Berücksichtung weiterer vorstehend genannter Kombinationen oder Werkstoffen bestehen oder diese umfassen.

Da die erläuterten auftretenden und an der Kluppen-Ketteneinheit KK ansetzenden Kräfte völlig entkoppelt sind (oder bis zu einem Maximum entkoppelt und damit minimiert sind) und da zudem das Auftreten von Kippmomenten vermieden wird, wird im Rahmen der Erfindung wunschgemäß sichergestellt, dass durch das zumindest ein Gleitelement 40 oder die beispielsweise beiden auf der Unterseite der Kluppe vorgesehenen Gleitelemente 40a und 40b und der dadurch gebildeten Abstützfläche 39 eine über die gesamte Abstützfläche 39 gleiche Flächenpressung erzeugt wird, da die entsprechenden Gleitflächen oder Gleitflächenabschnitte symmetrisch zu der virtuellen Gewichtssymmetrieachse Sz liegen. Da auch durch die anderen eingeleiteten Kräfte ebenfalls keine Kipp- oder Drehmomente erzeugt werden, führt dies auch im Einsatz in den unterschiedlichsten Laufflächenabschnitten nicht zu unerwünschten Verkippungen und einseitigen und damit unsymmetrischen Flächenpressungen. Dabei sind die gewünschten gleichmäßigen Flächenpressungen sehr einfach über gleiche oder unterschiedliche Abstände und/oder gleiche oder unterschiedlich große Flächen zu realisieren. Dabei soll ferner angemerkt werden, dass der Reibwert allgemein abhängig von der Flächenpressung ist. Dabei nimmt der Reibwert in der Regel mit zunehmender Flächenpressung ab, bis er ein Optimum erreicht hat. Nach Erreichen des Optimums nimmt der Reibwert wieder zu bzw. führt die sehr hohe Flächenpressung zum Versagen des eingesetzten Werkstoffs. Die spezifische Reibleistung (Wärmemenge/Fläche) nimmt bei gleicher Reibleistung und abnehmender Fläche zu. Hohe spezifische Reibleistung belastet zudem das als Schmiermittel eingesetzte Öl extrem stark (Vercracken), da die Wärme über eine kleinere Kontaktfläche eingeleitet wird.

Somit entlasten größere Flächen den spezifischen Wärmeeintrag in das verwendete Schmiermittel, üblicherweise Öl. Allerdings wirkt sich eine größere Fläche negativ auf den Reibwert aus (der zunimmt), wodurch die Reibleistung wiederum erhöht wird. Somit gibt es ein Optimum der idealen Flächenpressung, abhängig von dem tribologischen Partner und Parameter (Temperatur, Belastung, usw.) und den oben beschriebenen Gegebenheiten.

Die auftretende Problematik im Zusammenhang mit der Minimierung der Reibung soll auch anhand der folgenden Überlegungen verdeutlicht werden.

Geht man davon aus, dass eine entsprechende Querreckanlage mit einer Geschwindigkeit v1 betrieben wird, so wird bei einer derartigen Geschwindigkeit mit steigender Flächenpressung der Reibwert µ als auch die Temperatur der Gleitpaarung auf ein Minimum sinken. Beim Weitersteigen der Flächenpressung steigt der Reibwert ebenso wie die Temperatur der Gleitpaarung sehr schnell bis zum Ausfall der Gleitpaarung an (wobei die Gleitpaarung durch die wechselwirkenden Materialien der feststehenden Gleit- und Laufflächen und der damit wechselwirkenden bewegten Teile definiert ist). Im Vergleich zu einer höheren Geschwindigkeit v2 (v1 < v2) liegen die Reibwerte als auch die Temperatur der Gleitpaarung tendenziell niedriger. Der Kurvenverlauf für die Reibwerte als auch der Kurvenverlauf der Temperatur der Gleitpaarung verlaufen ähnlich, wie bei niedrigeren Geschwindigkeiten v1 bis zum Ausfall der Gleitpaarung.

Von daher wäre es wünschenswert eine Kettenanordnung zu schaffen, bei der die Gleitfläche entsprechend den Bedürfnissen verändert werden kann, um ein Optimum zu erzielen. Im Rahmen der Erfindung ist von daher eine Lösung vorgesehen, die sämtliche Freiheitsgrade eröffnet um dieses Optimum stets zu erreichen bzw. entsprechend den unterschiedlichen Voraussetzungen anzupassen.

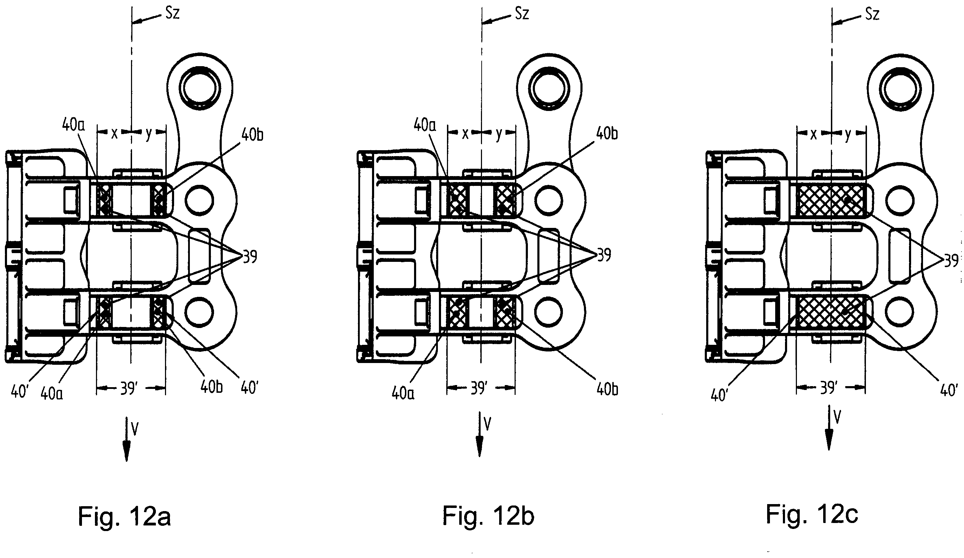

Anhand der Figuren 12a bis 12c sind in schematischer vereinfachter Unteransicht drei Beispiele für die Kluppen-Ketteneinheit KK gezeigt, die verdeutlichen, wie unterschiedliche Flächenpressungen im Rahmen der Erfindung sehr einfach umzusetzen sind. Bei der Ausführungsvariante gemäß Figur 12a sind jeweils bevorzugt in mittiger Höhe der zugehörigen Kettengliedachse ein Paar von in Querrichtung versetzt zueinander liegenden Gleitelementen 40a vorgesehen sind, die also quer und insbesondere senkrecht zur Vorschubbewegung 1 der Transportkette 13 angeordnet sind. Die Breite der Gleitelemente 40, 40a, 40b ist dabei vergleichsweise gering. Durch die dadurch insgesamt geringere Gesamtfläche im Bereich der Gewichtslauffläche 39 dieser Gleitelemente wird eine höhere Flächenpressung erzielt. Mit anderen Worten werden bei diesem Ausführungsbeispiel insgesamt vier Gleitelemente eingesetzt, nämlich jeweils zwei Paar von quer zur Vorschubbewegung 1 versetzt liegenden Gleitelementen 40a und 40b, wodurch eine entsprechende Abstützflächenanordnung 39 auf der Lauffläche 17' der Tragschiene 17 erzeugt wird. Bei der Variante gemäß Figur 12b sind die entsprechenden Gleitelemente in Vorschubrichtung etwas kürzer, dafür aber in Querrichtung breiter ausgeführt. Dies kann zu einer veränderten Flächenpressung führen. Bei der Variante gemäß Figur 12c sind jeweils nur zwei in Vorschubrichtung 1 versetzt liegende Gleitelemente 40 vorgesehen, die sich über die gesamte Breite links und rechts bezüglich der virtuellen Gewichtssymmetrieachse SZ erstrecken.

Generell kann es sich bei dem Gleitelement 40 aber auch um einzelne oder mehrere Gleitelemente handeln, die nicht miteinander verbunden sind, sondern z.B. direkt in entsprechende Halterungen der Kluppen-Ketteneinheiten KK eingearbeitet sind, oder integraler Bestandteil von KK sind (z.B. sogenannte TFE LOK Materialien).

Durch diese unterschiedliche Gestaltung wird zwar stets im Sinne der Erfindung sichergestellt, dass durch die symmetrische Anordnung zum Schwerpunkt bzw. zur virtuellen Gewichtssymmetrieachse Sz eine gleiche oder fast gleiche Flächenpressung bezüglich der links und rechts zur Gewichtssymmetrieachse Sz liegenden Gleitelemente erzielt wird. Durch die unterschiedliche Formgebung und Größengestaltung kann aber gleichwohl auf einfache Weise eine unterschiedliche Flächenpressung realisiert werden, wodurch leicht eine Optimierung insoweit durchgeführt werden kann.

In all den gezeigten Ausführungsbeispielen gemäß Figuren 12a bis 12c ist die maximale Erstreckungsbreite 39' der Abstützflächenanordnung 39 deutlich größer, bevorzugt sogar um ein Vielfaches größer als die Breite der Führungsschienen, deren Verlängerung bevorzugt den mittleren Bereich der maximalen Erstreckungsbreite 39' schneidet, so dass dadurch bei entsprechend erläuterter, entkoppelter Gesamtausgestaltung der Konstruktion keine zusätzlichen Kipp- und Drehmomente von der Kluppen-Ketteneinheit KK auf die Oberfläche, d.h. die Trag- und Laufschiene 17' der Tragschiene 17 eingeleitet werden (oder zumindest keine wesentlich relevante Erhöhung der hier wirkenden Flächenpressungskräfte stattfindet).

Die maximale Erstreckungsbreite 39' ist beispielsweise in Figur 6a sowie in Figur 12a oder 12c eingezeichnet. Sie entspricht der Summe aus den Werten x + y, wobei x der Abstand zwischen der vertikalen Schwerpunktebene Sz zu dem entferntesten Punkt des Gleitelementes 40a auf der Kluppenseite und die Strecke y der Abstand von der Schwerpunktebene Sz zu dem entferntesten Punkt des Gleitelementes 40b auf der Kettenseite darstellt. Im Bereich der maximalen Erstreckungsbreite 39' kann also ein einziges Gleitelement 40 oder mehrere beabstandet zueinander angeordnete Gleitelemente 40a, 40b vorgesehen sein. Die Schwerpunktebene Sz soll dabei bevorzugt die maximale Erstreckungsbreite 39' (= x + y) mittig durchsetzen. Sollte die Schwerkraft-ebene Sz diese maximale Erstreckungsbreite bezogen auf die Gleitelemente 40, 40a, 40b die nicht mittig durchsetzen, so dass der Seitenabstand X unterschiedlich ist zu dem Seitenabstand Y, sollten die Gleitelemente in ihrer Länge so bemessen sein, dass die Flächenpressungen bezogen auf die Schwerpunktebene Sz gleich sind. Mit anderen Worten sollten also die an den entferntest liegenden Punkten 40a' bzw. 40b' (s Figur 6a) ansetzenden (gleich großen) Teil-Gewichtskräfte links bzw. rechts bezogen auf die Schwerpunktebene Sz so verlaufen, dass der Abstand x ungleich dem Abstand y ist, so soll auch in diesem Fall sichergestellt sein, dass die Flächenpressungen links und rechts der Schwerpunktebene Sz gleich sind, was zur Folge hat, dass die Flächen des Gleitelementes bzw. der mehreren Gleitelemente 40a, 40b links und rechts der Schwerpunktebene Sz unterschiedlich groß sein müssen. Durch die Anpassung der Gleitfläche kann sichergestellt werden, dass die Kluppen-Ketteneinheit KK nicht kippt.

### Ausführungsbeispiele bezüglich der Seitenlaufflächen des Führungsschienen-Gleitlagers

Auch hinsichtlich des Führungsschienen-Gleitlagers 29, d.h. des Führungsschienen-Gleitschuhs 29a kann im Rahmen der Erfindung eine Optimierung durchgeführt werden.

Zum besseren Verständnis soll dabei noch Folgendes vorausgeschickt werden.

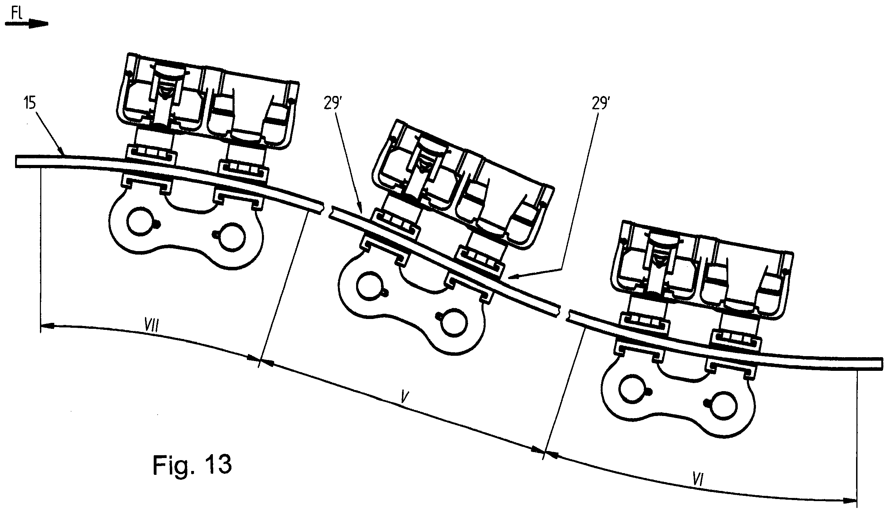

Es ist bereits erwähnt worden, dass in allen Bereichen der Umlaufbahn 9, längs der die Transportkette umlaufend fortbewegt wird, eine Kettenlängskraft wirkt, die abhängig von verschiedenen Faktoren ist. Dies wirkt sich insbesondere in der Reckzone aus, vor allem auch am Beginn der Reckzone mit einem konvexen Führungsschienenabschnitt und am Ende oder Auslauf der Reckzone mit einem konkaven Führungsschienenabschnitt. Insbesondere in diesen Zonen V, VI und VII verursacht der Reckkraftverlauf einen Unterschied bezüglich der auftretenden Kettenkraft an zwei aufeinander folgenden Kluppen-Ketteneinheiten KK (wobei an dem einen Kluppen- oder Kettenelement beispielsweise die Kraft FKi und an dem nächsten Element eine Kraft Fki+1 auftritt), und zwar in Abhängigkeit von dem Dehnungsverhalten des Polymers, also des zu reckenden Films. Dadurch ist es grundsätzlich möglich, dass sich einzelne Kluppenelemente oder Kluppenkörper um eine senkrecht zur Folienbahn-Ebene Y stehende Drehachse, also eine vertikal zur umlaufenden Ebene der Transportkette ausgerichtete Ebene verdrehen oder verkippen können. Dieser Effekt ist in einer vergrößerten Detaildarstellung anhand von Figur 13 wiedergegeben, wobei für jeden Streckenabschnitt V, VI bzw. VII ein Kettenglied, d.h. ein Kluppenkörper 6 unter Einwirkung der Reckkräfte auf der Filmseite dargestellt ist, und zwar in einer überproportionalen, in der Praxis nicht auftretenden Darstellung zur Verdeutlichung des in Rede stehenden Effektes.

Daraus ist zu ersehen, dass durch die zusätzlich eingeleiteten Reckkräfte die einzelnen Kluppenkörper eine Tendenz zur Verkippung oder Verdrehung um eine zur Zeichen-Ebene vertikale Achse (also vertikal zur Film-Ebene) aufweisen, und zwar mit einer Verdrehrichtung in Vorschubbewegung der Transportkette mit auf die Folien zu gerichteter Komponente, also bezüglich der rechten Umlaufbahn 9 mit entgegen dem Uhrzeigersinn gerichtetem Verkippmoment, wohingegen auf der gegenüberliegenden linken Umlaufbahn 9 - bezogen auf den dazwischen befindlichen Film - in Draufsicht eine Verkipp- oder Verdrehbewegung im Uhrzeigersinn erzeugt wird.

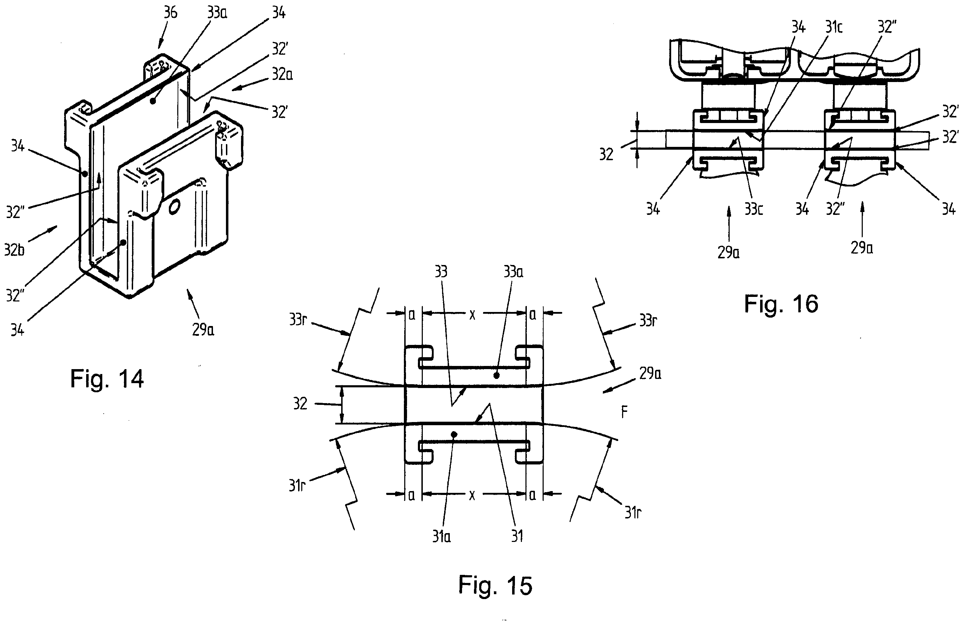

Die Geometrie ist nun im Rahmen der Erfindung so ausgelegt (s. Figuren 14 bis 16), dass in jeder nur denkbaren Kettengliedlage möglichst kein Kantenläufer entsteht. Als Beispiel wird hier ein U-förmiges Gleitelement 29 z.B. in Form eines Gleitschuhs 29a mit den Gleitelementen 31 und 33 beschrieben. Generell kann es sich bei dem Gleitelement 29 aber auch um einzelne oder mehrere Gleitelemente 31 und 33 handeln, die nicht miteinander verbunden sind, sondern z.B. direkt in entsprechende Halterungen der Kluppen-Ketteinheiten KK eingearbeitet sind, oder integraler Bestandteil von KK sind (z.B. sogenannte TFE LOK Materialien). Dazu sind die Gleitelementflächen 31a bzw. 33a auf ihrer vorlaufenden Seite wie auf ihrer nachlaufenden Seite jeweils mit einer den lichten Abstand zwischen den beiden Gleitflächen vergrößernden Abflachung oder Krümmung versehen. Zur Vermeidung von Kantenläufern ist also im Rahmen der Erfindung vorgesehen, dass die Gleitelementflächen 31a bezüglich der Kettenkraft-Lauffläche 31 sowie die Gleitelementflächen 33a bezüglich der Reckkraft-Lauffläche an dem Führungsschienen-Gleitlager 29 (hier U-förmiger Gleitschuh 29a) im Hinblick auf eine möglichst geringe Flächenpressung und große Kontaktfläche optimiert sind. Erreicht wird dies dadurch, dass jeweils auf der vorlaufenden Seite 32a wie auf der nachlaufenden Seite 32b des Führungsschienen-Gleitlagers 29 wie auf der nachlaufenden Seite 32b der Führungsschienen-Gleitlager 31 und 33 (hier dargestellt in einer U-förmigen Gleitlageranordnung 29), also jeweils an der vertikalen Einlauf- sowie der vertikalen Auslaufkante eines betreffenden Gleitelementes 31 bezüglich der Kettenkraft-Lauffläche 31 a sowie des Gleitelementes 33 bezüglich der Reckkraft-Lauffläche 33a eine Abflachung 32' bzw. 32" vorgesehen ist (beispielsweise mit einer Krümmung mit einem Radius 32r1 bis 32r2 jeweils um einen Mittelpunkt oder eine mittlere Achse senkrecht zur Vorschubbahn 2 bzw. zur Ebene der Folie F etc.), wodurch der lichte Querabstand 32d (Figur 16) zwischen den beiden aufeinander zu weisenden Laufflächen 31a, 33a geringfügig vergrößert wird. Dadurch kommt es zu einer besseren Anlage an den Seitenflächen, d.h. an den voneinander weg weisenden, im gezeigten Ausführungsbeispiel vertikal ausgerichteten Außenflächen 15a und 15b der Führungsschiene 15, d.h. der Führungsschiene-Anordnung.

Mit anderen Worten ist die Ketten- und Gleitkörper-Geometrie im Rahmen der Erfindung so gestaltet, dass das System in jeder nur denkbaren Lage (im Transportsystem) immer auf den dafür vorgesehenen Flächen 31a bzw. 33a gleitet. Kantenläufer sind somit ausgeschlossen. Die Radien 32r1 bzw. 32r2 an den Gleitelementen 31 bzw. 33 sind so optimiert, dass die Flächenpressung (Hertz'sche Pressung) möglichst gering ist. Somit reduziert sich auch die spezifische Reibleistung auf den Gleitschienen (Führungsschiene 15), was die Überhitzung des Öls (Blitztemperatur) im Gleitfilm minimiert. Zusammenfassend kann also festgehalten werden, dass die an den Führungsschienen-Gleitlagern 29 auf der Einlauf- und Auslaufseite an den beiden Laufflächen 31a und 33b der Gleitelemente 31 und 33 vorgesehenen Abflachungen 32' und 32", unter Vergrößerung des Abstandspaltes 32d zwischen den beiden Laufflächen 31 und 33, so optimiert sind, dass keine Kantenläufer entstehen, obwohl die Transportkette 13 sich in der divergierenden Reckzone befindet.

Es wird insoweit auch noch auf die beigefügten Zeichnungen gemäß Figuren 14 und 15 verwiesen, in denen zum einen in dreidimensionaler Darstellung ein Führungsschienen-Gleitlager 29 und zum anderen in Draufsicht dieses Gleitlager dargestellt ist. Anhand der weiteren schematischen Draufsicht gemäß Figur 16 bezüglich einer Kluppen-Ketteneinheit KK mit den beiden in Abzugsrichtung versetzt zueinander liegenden Gleitschuhen 29, 29' ist zu ersehen, dass an den Laufflächen der Gleitschuhe ein Anlagepunkt oder eine Anlagelinie 32l1 bzw. 32l2 gebildet wird, der oder die zu einer extrem leicht um eine Vertikalachse verkippten Anlage der beiden Gleitschuhe 29 eines Kluppenkörpers 6 an der zugehörigen Führungsschiene 15 führt. Diese Anlagelinie 32l1 bzw. 32l2 liegt beispielsweise mehr als 1 mm, 2 mm, 3 mm und insbesondere mehr als 4 mm von der Außenbegrenzung 34 des Gleitelementes entfernt. Umgekehrt liegen diese Werte bevorzugt nicht weiter von der Außenbegrenzung 34 des Gleitelementes entfernt als 8 mm, 7 mm, 6 mm oder 5 mm. Beispielsweise bei einem 75er Radius für das Gleitelement (75 cm) liegt diese Anlagelinie beispielsweise um 4,5 mm von der Außenkante des Führungsschienen-Gleitlagers 29 nach innen liegend versetzt.

Es wird ausdrücklich darauf hingewiesen, dass die Erfindung nicht an die Form (z.B. U-Form) oder Größe oder Formgebung des Gleitelements gebunden ist. Grundsätzlich können auch mehrere Gleitelemente auf der Führungsschienenseite eingesetzt werden.

Zusammenfassend kann also festgehalten werden, dass im Rahmen der Erfindung die Laufflächen 31a, 33a der Führungsschienen-Gleitlager 29 so ausgelegt sind, dass in jeder nur denkbaren Kettengliedlagen kein Kantenläufer entsteht, wobei der Radius auf geringe Flächenpressung und große Kontaktfläche hin optimiert ist.

Ferner wird insbesondere auch anhand von Figur 14 aber auch unter Bezugnahme auf Figur 3 sowie Figur 6b angemerkt, dass der Gleitschuh 29 einstückig ausgebildet sein kann und mit Führungseinrichtungen und mit Hinterschneidungen 36 versehen sein kann, die es erlauben, einen so gebildeten Gleitschuh auswechselbar in einer entsprechenden Ausnehmung im Kluppenkörper 6 einzuschieben und zu verankern.

### Weitere Optimierung der Anlage durch eine Gewichtsreduzierung

Eine Verbesserung der Gesamtsituation, d.h. eine Verringerung der Reibwerte, eine damit verbundene Verbesserung bezüglich der Gleitlagerung und einer möglichen Schmierung und/oder eine Verringerung des Abriebs lässt sich - ergänzend und alternativ zu den bisher beschriebenen Ausführungsbeispielen - auch dadurch realisieren, dass für die Transportkette 13 insgesamt und für die Kluppen-Ketteneinheiten KK oder zumindest für Teile oder ähnliche Teile davon im Besonderen eine Leichtbauweise realisiert wird. Bisher werden als Standardmaterialien hierfür lediglich Stahl und andere Gusswerkstoffe verwendet.

Von daher ist im Rahmen der vorliegenden beschriebenen Ausführungsbeispiele vorgesehen, dass die Kluppen-Ketteneinheiten KK bzw. wesentliche Bestandteile davon und damit die Transportkette 13 beispielsweise aus leichteren Materialien wie Verbundwerkstoffe und insbesondere Faserverbundwerkstoffe hergestellt sind oder daraus bestehen.

Die erfindungsgemäße Reckanlage kann dabei so gestaltet sein, dass das Kluppenteil 6 und/oder das Transportteil 7 volumen- oder gewichtsmäßig zu mehr als 25%, insbesondere zu mehr als 30%, 40%, 50%, 60%, 70%, 80% oder zu mehr als 90% aus einem oder mehreren Verbundwerkstoffen, insbesondere langfaserigen Faserverbundwerkstoffen, bestehen oder diese umfassen.

Ferner kann sich die Reckanlage dadurch auszeichnen, dass das Kluppenteil (6) und/oder das Transportteil (7) zumindest einen Verbundwerkstoff mit zumindest einem Matrix-Material und mit zumindest einer Funktions- oder Eigenschaftskomponente umfasst, wobei
a) die zumindest eine Matrix-Komponente eine oder mehrere der Materialien Aluminium, Magnesium, Keramik, Kohlenstoff, Duromere, Elastomere und/oder Thermoplaste umfasst, insbesondere Duroplaste, Polymere, Harze, Polyesterharze, Polyurethanharze, Polyurethan, Epoxidharze, Silikonharze, Vinylesterharze, Phenolharze, Acrylharze (PMMA), und
b) die Eigenschafts- oder Funktionskomponente eine oder mehrere der Materialien Glasfasern, Kohlestofffasern, Keramikfasern, Aramidfasern, Borfasern, Stahlfasern und/oder Nylonfasern, insbesondere in langfaseriger Ausgestaltung
umfasst oder daraus besteht.

### Aufbau einer erfindungsgemäß ausgebildeten Trag- und Laufschiene:

In der Querschnittsdarstellung gemäß Figur 2 ist bereits die Trag- und/oder Laufschiene 17 zu ersehen, die aus einem Volumenmaterial besteht oder dieses umfasst, d.h. im gezeigten Ausführungsbeispiel einen rechteckförmigen (oder sonstigen) Querschnitt quer zur Längsrichtung der umlaufenden Bahn 2 aufweist, und zwar mit einer im gezeigten Ausführungsbeispiel oben liegenden planen Tragschienen-Lauffläche 17a.

Um weniger Gleitmittel in Form von Öl zu benötigen (was im Übrigen auch dazu beiträgt, dass der mit der Reckanlage herzustellende Film möglicherweise durch Ölpartikel verschmutzt wird) und um die Reibwirkung gleichwohl möglichst niedrig zu halten, kann eine zusätzliche Maßnahme zur Senkung des durch die Reibung bewirkten Temperaturanstieges vorgesehen sein. Ein wesentliches Merkmal der Erfindung ist Wärmeabfuhr auf dem gesamten oder bestimmten Teilen des Umlaufweges. Im gezeigten Ausführungsbeispiel umfasst die Trag- oder Laufschiene 17 dazu eine Kühleinrichtung. Hierfür ist die Tragschiene 17 von zumindest einem Kühlkanal 41 durchsetzt, der von einem fließfähigen Kühlmedium, vorzugsweise einem flüssigen Kühlmedium beispielsweise in Form von Wasser, durchströmt wird. Die auf der Trag- oder Laufschiene 17 oben liegend ausgebildete Trag- oder Lauffläche 17a, auf der das auf der Unterseite des Kluppenkörpers 6 befindliche Gleitlager 40, 40a, 40b längsverschieblich geführt ist, wird also auf diese Weise direkt gekühlt. Dies trägt ebenfalls zur Wärmeabfuhr und damit zur Verringerung des Abriebs und zu einer Verbesserung des zu reckenden Kunststofffolienfilms und ferner zu einer längeren Lebensdauer der Gesamtanlage bei. Durch die Kühlung wird das Überhitzen des Öls bzw. der Gleitwirkstoffe verringert.

Dabei ist die Führungsschiene 17 mit dem innenliegenden Kühlkanal 41 der oben Trag- oder Lauffläche 17a vorzugsweise einstückig ausgebildet, d.h. bevorzugt stoffschlüssig, damit die über das Kühlmedium erzeugte Abkühlung der Trag- oder Laufschiene 17 möglichst unmittelbar auf die Lauf- und/oder Gleitfläche 17a einwirkt und somit unmittelbar auch zur Kühlung der an der Unterseite des Kluppenkörpers 6 vorgesehenen Gleitlager 40, 40a, 40b beiträgt.

Ferner insoweit auch noch auf Figur 2 verwiesen, wo unterhalb der Kühlschiene 41 noch eine Isolierung 42 eingezeichnet ist. Durch diese Isolierung 42 (die plattenförmige Isolier-Abstandshalter umfassen kann) wird gewährleistet, dass die Kühlwirkung vor allem nur auf der nach oben weisenden Lauffläche 17a wirksam ist und kein Kühlverlust nach unten hin entsteht, also zu jenem Bereich, über welchen die Trag- und Laufschiene 17 gehalten und abgestützt ist. Zudem können diese der Isolierung dienenden Abstandshalter 42 auch als Ausgleichselemente verwendet werden, um eine Trägerdurchbiegung zu kompensieren. Werden derartige Abstandshalter nur in Abständen zueinander unterhalb der Tragschiene verwendet, so dass die dazwischen liegenden Abschnitte frei liegen, wird auch durch die dadurch bewirkte Luft eine Isolierung gewährleistet.

### Gelenk-Zwischenstücke in der Trag- und Laufschiene:

Die erläuterte Führungsschiene 15 kann aus einem einzigen Stahlband oder beispielsweise aus einem Paket von biegsamen, durchlaufenden Federstahlbändern bestehen, die im Querschnitt vertikal ausgerichtet und horizontal nebeneinander angeordnet sind. Dadurch ergibt sich eine Verstellmöglichkeit der Führungsschiene 15.

Mittels derartiger Gelenke G kann der Verlauf der Führungsbahn 2 vor allem im Bereich der Reckzone entsprechend den gewünschten und optimalen Vorgaben eingestellt werden.

Dies erfordert allerdings auch, dass die eigentliche Trag- und Laufschiene 17 entsprechend eingestellt werden kann. Da diese Trag- und Laufschiene 17 jedoch aus einem metallischen Vollkörper besteht, der im Rahmen der Erfindung bevorzugt in Form einer integrierten Kühlung, insbesondere in Form eines längs dieser Trag- und Laufschiene verlaufenden Kühlkanals ausgestaltet ist, muss hier eine spezifische Längs-Konstruktion verwirklicht werden.

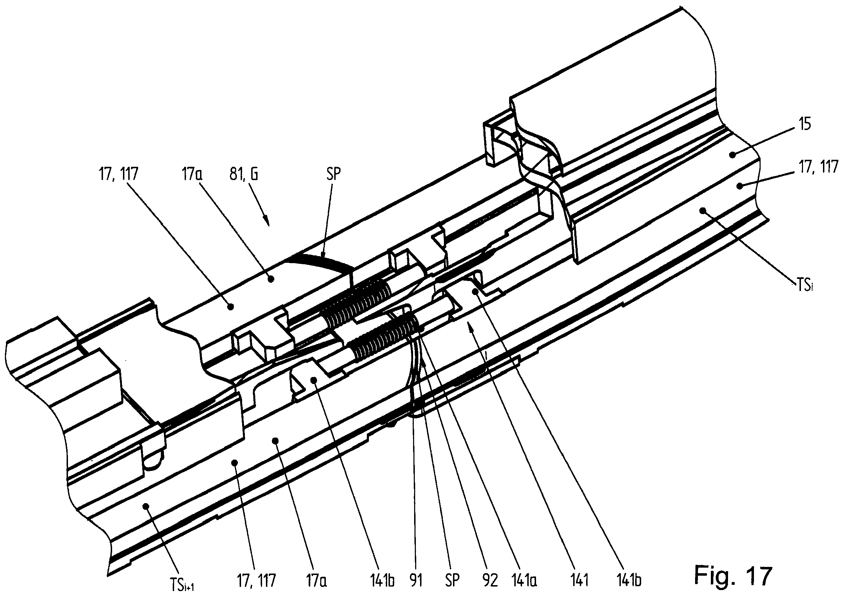

Dazu wird im Folgenden auf die Figuren 17 bis 22 verwiesen.

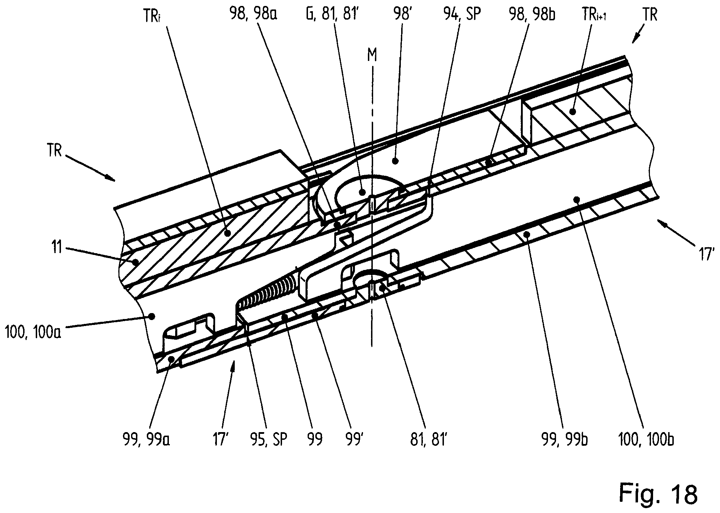

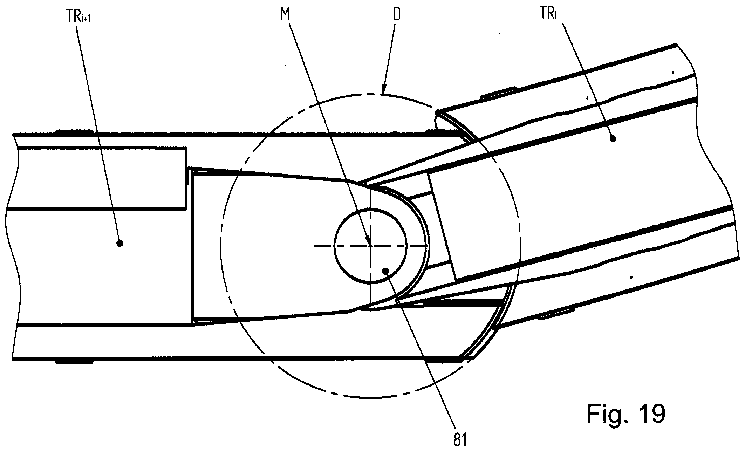

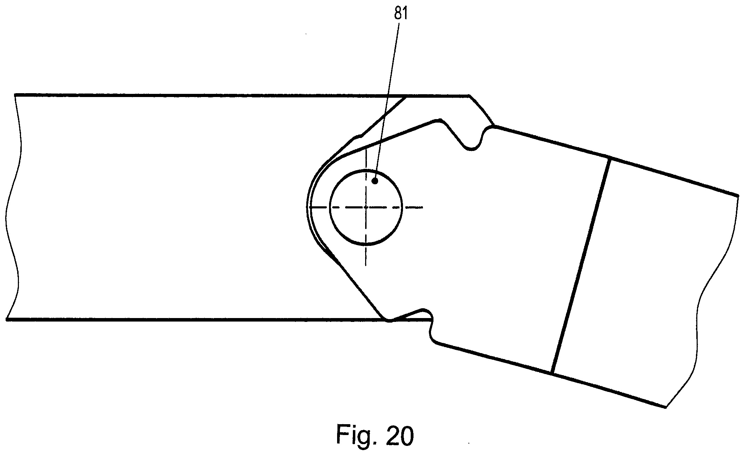

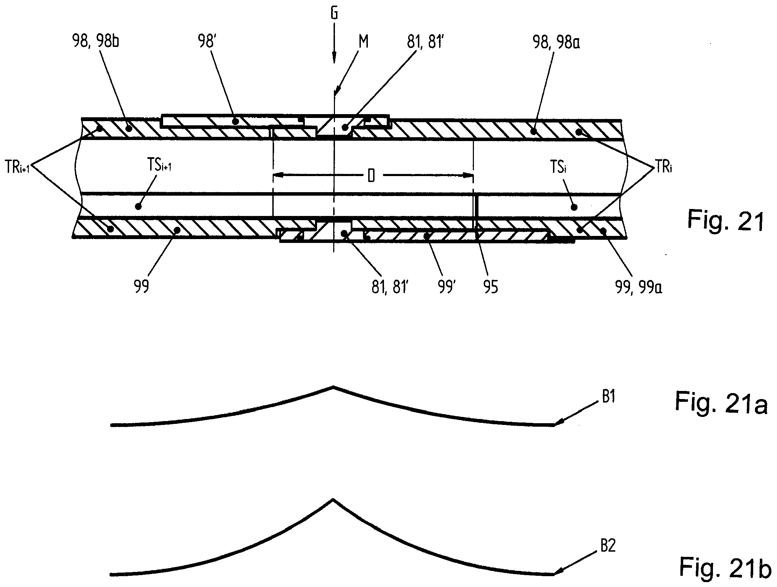

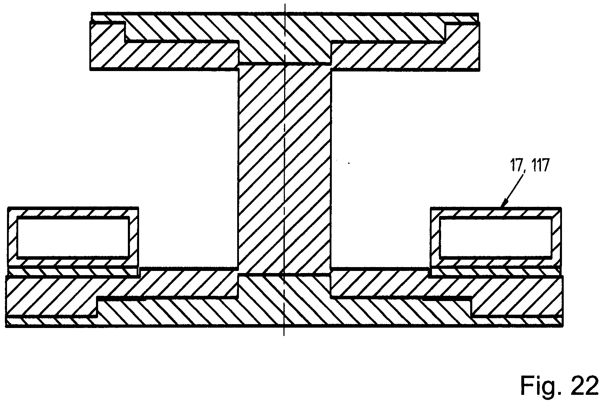

In den Figuren 17 und 18 ist eine entsprechende Lauf- und Tragschiene 17, d.h. bei entferntem oberen Stützteil und in Figur 18 in einen vertikalen Querschnitt im Bereich eines Gelenkes gezeigt. In Figur 19 ist eine entsprechende Draufsicht, in Figur 20 eine entsprechende Unteransicht und in Figur 21 eine schematische vertikale Längsschnittdarstellung im Zusammenhang mit der Gelenkanordnung wiedergegeben, um das erfindungsgemäßen Konstruktionsprinzip zu erläutern. In Figur 22 ist eine schematische quer zur Längsrichtung der Trag- und Laufschiene verlaufende Schnittdarstellung bzw. ein Teil dieses Konstruktionsprinzips im Bereich eines Gelenkes wiedergegeben.

Durch das nachfolgend im Detail erörterte Konstruktionsprinzip für das Transportsystem, d.h. für die Trag- und/ oder Laufschiene 17, ergibt sich die Möglichkeit einer variablen Anpassung an den Verfahrensprozess, d.h. einer Anpassung an die jeweils optimalen Reckverhältnisse.

Da die erfindungsgemäße Trag- und/oder Laufschiene 17 bevorzugt mit einer Kühleinrichtung in Form eines die Trag- und/oder Laufschiene 17 in deren Längsrichtung durchsetzenden Kühlkanals 41 versehen ist (wie dies bereits anhand von Figur 2 erläutert wurde), erfordert dies auch eine spezifische Gelenkkonstruktion.

In den Zeichnungen ist dabei ein Gelenkübergang G zwischen einem ersten Teilstück TSi zu einem nachfolgenden Teilstück TSi+1 der Trag- und/oder Laufschiene 17 bzw. der gesamten Tragkonstruktion 19 mit TRi und TRi+1 wiedergegeben.

Zum einen ist daraus zu ersehen, dass die beiden Teilstücke eine vollständige Trennung voneinander erfordern, weshalb unterschiedliche, die Trennung realisierende Teilaspekte zu berücksichtigen sind.

Zunächst soll auf die Trennung der Tragschiene 17 eingegangen werden, die insoweit auch als Kühlschiene 117 bezeichnet wird. Wie ausgeführt dient die Oberseite oder Gleitfläche 17a dieser Trag- oder Laufschiene 17, d.h. der Kühlschiene 117 zur Abstützung der Gewichtslauffläche 39 der an der Unterseite der Kluppen-Ketteneinheiten KK angebrachten Gleitlager 40 bzw. 40a oder 40b.

Durch die erwähnte Trennung zweier benachbarter Teilstücke in der Trag- oder Kühlschiene 17, 117 ist zunächst ein Trennspalt SP gebildet, der in Draufsicht einen Teilkreis um eine zentrale Gelenkachse M bildet. Die Gelenkachse M steht senkrecht zu der Tragschiene-Lauffläche 17a und damit üblicherweise senkrecht zur Film-Ebene. Die entsprechenden Stirnseiten der beiden Teilstücke der Führungsschiene sind insoweit zum einen konkav und zum anderen konvex entsprechend des Teilkreises gebildet.

Die Spaltbreite des Trennspaltes SP soll möglichst gering sein. Die längs des Spaltes aneinander grenzenden Teilstücke der Tragschiene 17 sind im Bereich der Tragschienen-Fläche 17a mit einer Ab- und einer Anlaufphase 91, 92 versehen. Diese Phasen 91, 92 sind so optimiert, dass der Übergang ohne Beschädigung der Luftlagerpads 140, d.h. der Kissenplatten-Tragfläche 139 (nachfolgend auch kurz Padlauffläche 139 genannt) an den Pads 140 und ohne Momenteneinwirkung erfolgen kann.

Ferner wird angemerkt, dass die Tragschienen-Teilstücke TSi, TSi+) und die in diesem Bereich vorgesehene Gelenkverbindung G, 81, 81' durchbiegungsfrei und torsionssteif unter Aufrechterhaltung einer zueinander fluchtenden Tragschienen-Lauffläche (17a) ausgebildet sind.

Zudem ist vorgesehen, dass die Tragschiene 17 bzw. die Tragschienen-Teilstücke TRi, TRi+1 direkt oder unter Zwischenschaltung von Abstandshaltern oder isolierenden Abstandshaltern 42 auf den unteren Tragteilen 99 abgestützt und gehalten sind.

Da wie erwähnt an der Tragschiene 17 ein Kühlkanal 41, d.h. eine umlaufende Kühlung ausgebildet ist, muss eine separate Verbindungseinrichtung 141 vorgesehen sein, worüber die Kühlkanal-Abschnitte TSi und TSi+1 über den Spalt SP hinweg miteinander verbunden sind.

Insbesondere aus der Darstellung gemäß Figuren 17 und 18 ist zu ersehen, dass die beiden Teilstücke TSi und TSi+1 der Trag- und/oder Laufschiene 17 benachbart zu dem Spalt SP mit einem Querkanal-Stück 141a versehen sind, worüber eine Bypass-Leitung 141 angeschlossen ist. Mit anderen Worten kann das in dem Kühlkanal 41 in dem einen Teilstück TSi der Tragschiene 17 umlaufende Kühlmittel dann über eine Bypass-Leitung 141a, mit den Anschlussstücken 141b in den nächsten Kühlkanal-Abschnitt TSi+1 der Tragschiene 17 weiterströmen. Wie ausgeführt sind die Stirnseiten der betreffenden Teilstücke der Trag- und/oder Laufschiene 17 benachbart zum Spalt SP abgeschlossen.

Um den erwähnten nahtlosen Übergang zwischen den beiden Teilstücken TSi, TSi+1 der Tragschiene 17 zu gewährleisten, müssen die Trägerstrukturen (wie beispielsweise in den Figuren 17 und 18 zu ersehen), d.h. die aufeinander folgenden Trägerstrukturen TR mit den Teilstücken TRi und TRi+1, an denen die Gewichtslaufflächen-Konstruktion 17 befestigt ist, mit entsprechender Torrsions- und Biegemomenten-Steife verbunden werden. Dazu sind in den Figuren die Gelenkachse M sowie die Trennfugen 94 und 95 unter Ausbildung des Trennspaltes SP in den Trägerteilen eingezeichnet. Die Kühlkanäle sind hier, der besseren Darstellbarkeit halber, nicht mit dargestellt.

Um eine ausreichende Torrsionssteifigkeit und damit auch eine ausreichende Biegemomenten-Festigkeit zu erreichen, ist im Rahmen der Erfindung vorgesehen, dass sich die zur Trägerstruktur TR gehörenden und zu der Tragschienen-Lauffläche 17a parallel verlaufenden und daher vertikal zueinander versetzt liegenden Trägerplatten 98' und 99' mit der zugehörigen Trägerkonstruktion 98 und 99 in Parallellage dazu überlappen.

Figur 21 zeigt eine vereinfachte seitliche Darstellung des Trägergelenkes G im Schnitt durch die Gelenkachse M bei nicht abgewinkeltem Gelenk. In dieser Darstellung sind die Trennfugen des oberen und unteren Trägerteils Tri und Tri+1 im Teilkreis D mit den Bezugszeichen 94 und 95 gekennzeichnet. Die Kühlkanäle im Bereich des Führungsschienen-Teilstückes TSi und TSi+1 sind im Bereich der unteren Trägerkonstruktion ebenfalls unterbrochen (Figur 17). Durch die Überlappung des Trägers am oberen und unteren Teil außerhalb der Drehachse M entsteht eine Versteifung des Biegemomentes (das Biegemoment B1 ist in Figur 21a angegeben) gegenüber dem Stand der Technik (wobei das Biegemoment B2 für den Stand der Technik in Figur 21b wiedergegeben ist). Das Analoge gilt für das Torrsionselement.

Durch das erläuterte Konstruktionsprinzip wird zum einen die Durchbiegung durch den konstruktionsbedingten Momentenübertrag vermindert. Zudem ergibt sich eine präzise Ausrichtung der Gewichtslauffläche auf der konstruktiven Auflage. Schließlich kann auch der Schienenstoß mittels Unterlegblechen präzise ausgerichtet werden, wobei die entsprechenden Unterlegbleche, allgemein Ausgleichsstücke oder Abstandshalter, mit dem Bezugszeichen 91 versehen sind.

Anhand von Figur 21 ist die entsprechende Tragkonstruktion nochmals in einer vereinfachten vertikalen Längsschnittdarstellung und in Figur 22 in einer vereinfachten vertikalen Querschnittsdarstellung gezeigt.

### Abgewandeltes Lagerungssystem

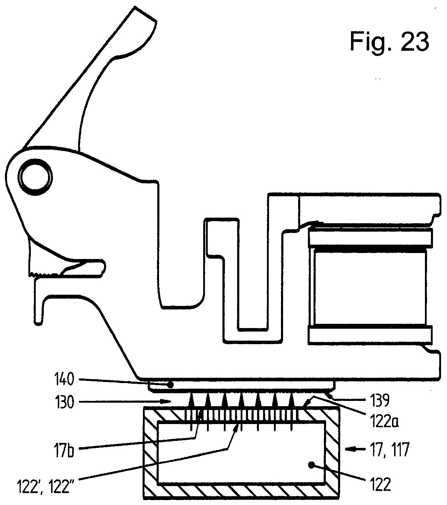

Es ist bereits erläutert worden, dass die Tragschiene 17 vorzugsweise als Kühlschiene 117 ausgebildet sein kann, die im Inneren einen Kühlkanal 41 umfasst, durch welchen ein fließfähiges Kühlmedium hindurch gepumpt wird. Die Tragschiene 17 kann aber auch als gasdurchströmte Tragschiene ausgebildet sein, die also im Inneren einen von einem gasförmigen Medium, insbesondere von Luft durchströmten Strömungskanal 122 (Figur 23) aufweist. An der eigentlichen Tragschienen-Lauffläche 17a kann dann eine Vielzahl von Gasaustrittsöffnungen, insbesondere Luftöffnungen 122', 122" ausgebildet sein, durch die hindurch unter Druck stehendes Gas oder Luft ausströmen kann und unmittelbar auf die Unterseite der als Gewichtslauffläche 39 bezeichneten Luftlagerkissen (pads) 140 an der Unterseite des Kluppen-Kettenkörpers KK strömt. Dadurch wird ein Luftpolster 130 gebildet, wodurch sichergestellt ist, dass die entsprechende Kluppen-Ketteneinheit und damit die gesamte Transportkette mittels eines Luftpolsters getragen und geführt wird bzw. werden.

Dadurch entsteht ein extrem niedriger Reibwert und somit eine geringe Reibleistung. Hierdurch können auch besonders hohe Anlagen-Geschwindigkeiten realisiert werden, da Luft oder ein gasförmiges Medium - anders als Öl - nicht vercracken kann. Schließlich lässt sich - auf diesem Prinzip basierend - auch ein sehr leichter Transport realisieren, da durch den geringen Reibwert auch sehr geringe Kettenlängskräfte entstehen. Zudem wird die Gefahr einer Kontaminierung der zu reckenden Materialbahn, insbesondere des zu reckenden Kunststofffilms durch ansonsten möglicherweise in Richtung Kunststofffilm geschleuderte Ölpartikel und Ölspritzer nochmals verringert.

### Situation am Einlauf und am Auslauf der Querreckanlage

In dem erläuterten umlaufenden Transportsystem muss die Transportkette 13 konstruktions- und verfahrenstechnisch bedingt gespannt werden. Um hier Lastwechsel zu verringern, ist es notwendig, die Transportkette 13 bei Verlassen der Führungsschiene tangential auf das am Ein- und am Auslass vorgesehene Kettenrad 51 auf- bzw. ablaufen zu lassen.

Die Tragschiene 17 und/oder die Abstützflächenanordnung 39 bleibt auch an den Kettenrädern 51 durchgängig. Dadurch sind gegenüber dem Stand der Technik keine Schiebestücke zum Hubausgleich notwendig.

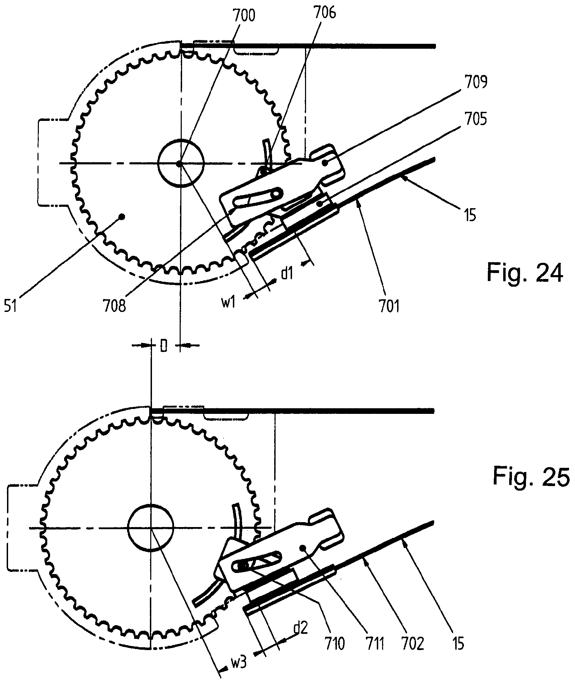

Zur Umsetzung der Maßnahmen ist im Rahmen der Erfindung eine zwangsweise Tangentialführung 55 für die nachfolgend insoweit auch als Seitenführungsschiene bezeichnete Führungsschiene 15 vorgesehen (Figuren 24 und 25).

Dabei wird nachfolgend die weitere Funktionsweise der Tangentialführung 55 beschrieben.

Im Folgenden wird zunächst davon ausgegangen, dass die Kette gespannt werden soll. In diesem Fall wandert der Mittelpunkt 700 des Auslauf-Kettenrades um einen Weg D in Richtung des Auslaufs. Dadurch ändert sich zunächst der Weg W1 zwischen dem Ende der Führungsschiene 15 und dem tangentialen Auflaufpunkt auf das Kettenrad 51 mit der größeren Distanz W3. Um die Konstruktion einfach zu halten, erfolgt die Verstellung um den Weg D immer kollinear zur Auslauf-Führungsschiene. Die durch die Verschiebung um D notwendige Anpassung der Auslaufschiene erfolgt durch Schiebestücke.

Durch die Verstellung würde sich aber auch der tangentiale Auflauf der Führungsschiene 15 auf das Kettenrad 51 ändern. Dies wird dadurch verhindert, dass die Form der Auflaufkurve 701 der flexiblen Führungsschiene 15 zwangsweise in eine andere Kurvenform 702 geändert wird. Bei der Verstellung des Kettenrades wird ein Verstellschuh 705, der an einem ortsfesten Hebel 706 angebracht ist, synchron mitbewegt. Um den tangentialen Auflauf auf das Kettenrad zu gewährleisten, erfolgt eine Zwangsführung des Verstellschuhs innerhalb einer Führungskulisse 708 einer ortsfesten Kulissenhalterung 709. Die Führungsbolzen 710 des Verstellschuhs werden also innerhalb der Kulisse entlang einer berechneten Kurve 711 verschoben.

Die Kühlung und die Abstützung der Gewichtskräfte wird durch eine umlaufende Trag- und Kühlschiene 17 um die Kettenräder herum gewährleistet, d.h. in dem Bereich, in welchem die Führungsbahn in einem Teilumfangsbereich der Kettenräder verläuft.

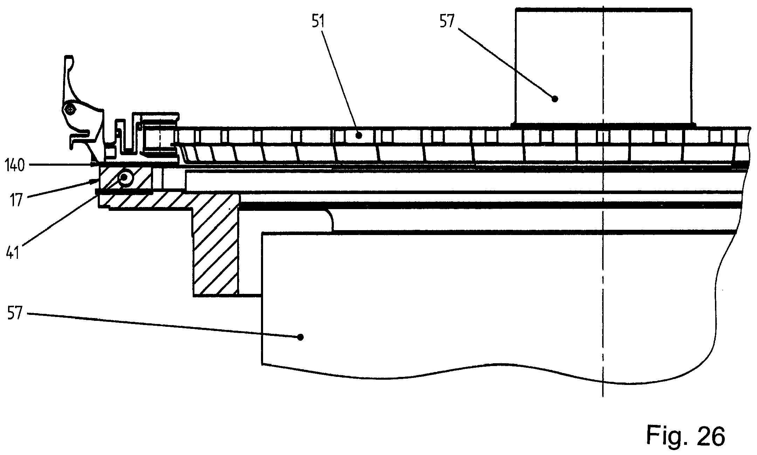

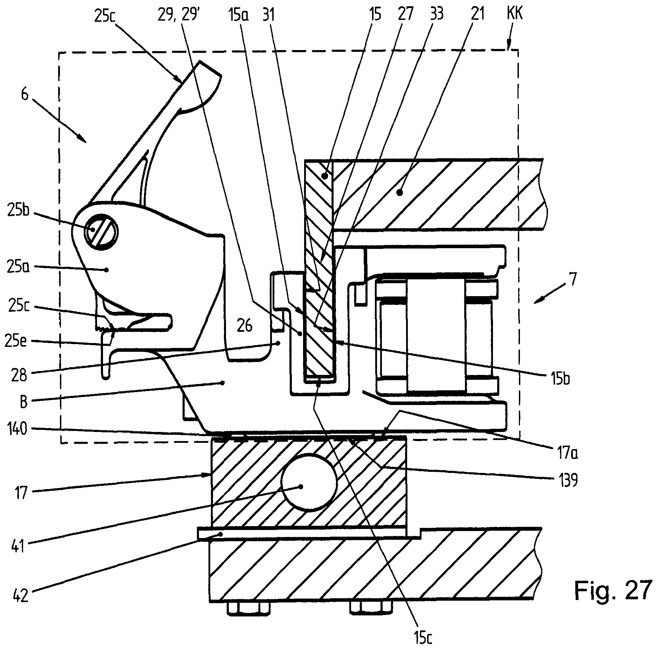

Schließlich soll der Vollständigkeit halber erwähnt werden, dass die erwähnten Kettenräder 51 am Auslauf und/oder am Einlauf vorzugsweise so gestaltet sind, dass die Kettenräder 51 direkt mit einem Vollwellenmotor 57 zusammenwirken bzw. darüber angetrieben werden, wie dies beispielhaft in der Seitendarstellung bzw. Querschnittsdarstellung gemäß Figur 26 und 27 zu ersehen ist.

## Patentansprüche

1. Reckanlage mit einem Gleitketten-Transportsystem mit folgenden Merkmalen:
- es sind zwei zu einer vertikalen Längs-Ebene (SE) beabstandet zueinander vorgesehene umlaufende Führungsbahnen (2) vorGPS-Empfängersehen,
- auf diesen Führungsbahnen (2) ist jeweils eine Transportkette (13) umlaufend angeordnet,
- jede der beiden Transportketten (13) umfasst eine Vielzahl von gelenkig miteinander verbundenen Kettengliedern,
- es sind Kluppen-Ketteneinheiten (KK) vorgesehen, die in ein Kluppenteil (6) und ein Kettenglieder umfassendes Kettenteil (7) gegliedert sind,
- das Kluppenteil (6) weist zumindest eine Kluppenhalterung (25a) zur Fixierung eines Randes (8) der zu reckenden Materialbahn (F) auf, worüber die Materialbahn (F) erfassbar und von einer Einlaufzone (E) über eine Reckzone (R) bis zu einer Auslaufzone (A) unter Freigabe der Materialbahn (F) beförderbar ist,
- die Führungsbahn (2) umfasst jeweils eine Führungsschiene (15),
- die Kluppen-Ketteneinheiten (KK) umfassen zumindest eine reckseitig ausgerichtete Reckkraft-Lauffläche (33) und eine dazu entgegengesetzt weisende Kettenkraft-Lauffläche (31), die parallel und aufeinander zu weisend ausgerichtet sind, worüber die Kluppen-Ketteneinheit (KK) längs der Führungsschiene (15) mit einer Kettenkraft-Lauffläche (31) und einer dazu parallelen und gegensinnig ausgerichteten Reckkraft- Lauffläche (33) verfahrbar geführt ist, wobei die Kettenkraft-Lauffläche (31) im Bereich ihrer Kettenkraft-Laufflächenhöhe (231) und die Reckkraft-Lauffläche (33) mit ihrer Reckkraftlaufflächenhöhe (233) mit der Führungsschiene (15) wechselwirkt und dadurch geführt ist,
- es ist ferner eine die Gewichtskraft (FG) der Kluppen-Ketteneinheit (KK) aufnehmende Tragschiene (17) mit einer Tragschienen-Lauffläche (17a) vorgesehen,
- die an dem Kluppenteil (6) vorgesehene Kluppenhalterung (25a) zur Fixierung des Randes (8) der zu reckenden Materialbahn (F) ist so angeordnet, dass die über die zu reckende Materialbahn (F) auf den Kluppenkörper (6) eingeleiteten Reckkräfte (FR) in einer Reck-Ebene (Y) wirken, die senkrecht zu der Gewichtskraft (GK) der Kluppen-Ketteneinheit (KK) ausgerichtet ist,
- auf unterschiedlichen Abschnitten der Führungsbahn (2) greifen an der Kluppen-Ketteneinheit (KK) ferner noch Fliehkräfte (FF), Seitenführungskräfte (FS) sowie Querkräfte (FQ) an,
- die an dem Schwerpunkt (GS) der Ketten-Kluppeneinheit (KK) ansetzenden Fliehkräfte (FF) wirken in einer Fliehkraft-Ebene (S), die parallel zur Reck-Ebene (Y) liegt oder mit dieser zusammenfällt,
- die Querkräfte (FQ) oder die Seitenführungskräfte (FS) wirken in einer zur Reckkraft-Ebene (Y) parallelen Querkraft- oder Seitenführungs-Ebene (Q),
- die Kluppen-Ketteneinheit (KK) ist so ausgebildet, dass die Fliehkraft-Ebene (S) und die Seitenführungs- oder Querkraft-Ebene (Q) sowie die Reckkraft-Ebene (Y) oberhalb der Unterkante (15c) der Führungsschiene (15) oder oberhalb des unteren Endes der Kettenkraft-Lauffläche (31) und/oder der Reckkraft-Lauffläche (33) liegen,
- die Fliehkraft-Ebene (S) und die Seitenführungs- oder Querkraft-Ebene (Q) sowie die Reckkraft-Ebene (Y) schneiden die Führungsschiene (15) und die Kettenkraft-Lauffläche (31) im Bereich ihrer Kettenkraft-Laufflächenhöhe (231) sowie die Reckkraft-Lauffläche (33) im Bereich ihrer Reckkraft-Laufflächenhöhe (233), und
- auf der Unterseite (25f) der Kluppen-Ketteneinheit (KK) ist eine oder sind mehrere Gleitelemente (40; 40a, 40b) mit einer Abstützflächenanordnung (39) zur Abstützung der Kluppen-Ketteneinheit (KK) gegenüber der Lauffläche (17a) der Tragschiene (17) vorgesehen, wobei die durch den Schwerpunkt (GS) der Kluppen-Ketteneinheit (KK) verlaufende Schwerkraft-Ebene (Sz) die Abstützflächenanordnung (39) bezogen auf deren maximale Erstreckungsbreite (39'; x + y) quer zur Vorschubrichtung sowie die Tragschienen-Lauffläche (17) schneidet.

2. Reckanlage nach Anspruch 1, **dadurch gekennzeichnet, dass** die durch den Schwerpunkt (GS) der Kluppenketten-Einheit (KK) verlaufende Schwerkraft-Ebene (Sz) die Abstützflächenanordnung (39) bezogen auf deren maximale Erstreckungsbreite (39'; x + y) quer zur Vorschubrichtung sowie die Tragschienen-Lauffläche (17) vorzugsweise mittig schneidet oder davon um weniger als 40%, insbesondere weniger als 30%, 20% oder weniger als 10% bezogen auf die maximale Erstreckungsbreite (39'; x + y) bzw. der Breite der Tragschienen-Lauffläche (17a) abweicht.

3. Reckanlage nach Anspruch 1 oder 2, **dadurch gekennzeichnet, dass** die Reckkraft-Ebene (Y), die Fliehkraft-Ebene (S) und die Querkraft- oder Seitenführungskraft-Ebene (Q) die Führungsschiene (15) in einem Bereich schneiden, in welchem sich die Kluppen-Ketteneinheit (KK) an der Führungsschiene (15) abstützt.

4. Reckanlage nach Anspruch 1, 2 oder 3, **dadurch gekennzeichnet, dass** die Kluppen-Ketteneinheit (KK) so ausgebildet ist, dass
- die Fliehkraft-Ebene (S) in einem Schwerkraft-Wirkabstand (WA1) parallel zur Reckkraft-Ebene (Y) verläuft,
- die Querkraft- oder Seitenführungskraft-Ebene (Q) in einem Kraftwirkabstand (WA2) parallel zur Reckkraft-Ebene (Y) verläuft, und
- ein zwischen der Schwerkraft-Ebene (S) und der Unterkante (15c) der Führungsschiene (15) vorgesehener Abstand (F) zumindest zweimal so groß und vorzugsweise zumindest dreimal, viermal oder zumindest fünfmal so groß ist wie der größte der beiden Wirkabstände (WA1) oder (WA2).

5. Reckanlage nach einem der Ansprüche 1, 2 oder 3, **dadurch gekennzeichnet, dass** die Kluppen-Ketteneinheit (KK) und die Führungsschiene (15) so ausgebildet sind, dass
- die Fliehkraft-Ebene (S) und die Querkraft- oder Seitenführungskraft-Ebene (Q) mit der Reckkraft-Ebene (Y) zusammenfallen, und
- ein Abstand (F) zwischen der Schwerkraft-Ebene (S) und der Unterkante (15c) der Führungsschiene (15) so bemessen ist, dass dieser zumindest 1 mm, vorzugsweise zumindest 5 mm, 10 mm, 20 mm, 30 mm, 40 mm, 50 mm oder mehr beträgt.

6. Reckanlage nach Anspruch 5, **dadurch gekennzeichnet, dass** die maximale Erstreckungsbreite (39'; x + y) der Abstützflächenanordnung (39) und damit die maximale Erstreckungsbreite (39'; x + y) der Gleitelemente (40; 40a, 40b) ein Maß aufweisen, welches zumindest dem 2,0-, 2,5-, 3,0- oder vorzugsweise zumindest dem 3,5-fachen der Breite der Führungsschiene (15) und damit dem Horizontalabstand zwischen der Kettenkraft-Lauffläche (31) und der Reckkraft- Lauffläche (33) entspricht.

7. Reckanlage nach Anspruch 5 oder 6, **dadurch gekennzeichnet, dass** die Schwerpunktebene (Sz) die Abstützflächenanordnung (39) des zumindest einen Gleitelements (40; 40a, 40b)
a) mittig schneidet und dazu die beidseitig der Schwerkraftebene (Sz) liegenden Abschnitte des einen Gleitelements (14) oder der zumindest beidseitig davon liegenden getrennten Gleitelemente (14a, 14b) gleiche Flächengrößen aufweisen, oder
b) außermittig (x ≠ y) schneidet, wobei zur Erzielung einer gleichen Flächenpressung auf beiden Seiten der Schwerpunktebene (Sz) unterschiedlich große Gleitflächen vorgesehen sind.

8. Reckanlage nach einem der Ansprüche 5 bis 7, **dadurch gekennzeichnet, dass** die beidseitig der Schwerkraft-Ebene (Sz) liegenden Abschnitte des einen Gleitelements (40) oder der beidseitig davon liegenden getrennten Gleitelemente (40a, 40b) gleiche Flächengrößen aufweisen und/oder einer gleichen Flächenpressung ausgesetzt sind.

9. Reckanlage nach einem der Ansprüche 1 bis 8, **dadurch gekennzeichnet, dass** die Kluppen-Ketteneinheit (KK) so ausgebildet ist, dass die daran ansetzenden Kräfte entkoppelt sind und dazu kipp- und drehmomentfrei an der Kluppen-Ketteneinheit (KK) zur Vermeidung einer Erhöhung der Flächenpressung zwischen der Kluppen-Ketteneinheit (KK) und der Tragschiene (17) ansetzen.

10. Reckanlage nach einem der Ansprüche 1 bis 8, **dadurch gekennzeichnet, dass** die Kluppen-Ketteneinheit (KK) so ausgebildet ist, dass die daran ansetzenden Kräfte soweit entkoppelt sind, dass die an der Kluppen-Ketteneinheit (KK) ansetzenden Kräfte nur zu einer maximal 5%- oder 10%-igen Erhöhung der Kipp- oder Drehmomente und damit zu einer entsprechenden Erhöhung der Flächenpressung zwischen der Kluppen-Ketteneinheit (KK) und der Tragschiene (17) führen.

11. Reckanlage nach einem der Ansprüche 1 bis 10, **dadurch gekennzeichnet, dass** für die Tragschiene (17) eine erste Kühleinrichtung und/oder für die Führungsschiene (15) eine zweite Kühleinrichtung vorgesehen ist, die auf der gesamten oder lediglich auf einer Teillänge der Führungsbahn (2) vorgesehen ist bzw. sind.

12. Reckanlage nach einem der Ansprüche 1 bis 11, **dadurch gekennzeichnet, dass** die Kluppen-Ketteneinheit (KK) eine parallel zur Führungsschiene (15) verlaufende U-förmige Ausnehmung (27) aufweist, in welcher ein oder mehrere Führungsschienen-Gleitlager (29) vorzugsweise auswechselbar eingesetzt sind, welche die aufeinander zu weisenden Kettenkraft- und Reckkraft-Laufflächen (31, 33) aufweist.

13. Reckanlage nach Anspruch 12, **dadurch gekennzeichnet, dass** die Führungsschiene (15) zwei Führungsflächen aufweist, nämlich eine kluppenseitige Führungsfläche (15a) und eine kettenseitige Führungsfläche (15b), die jeweils mit einem oder mehreren Gleitlagern (29) zusammenwirken, die an der Kluppen-Ketteneinheit (KK) ausgebildet, eingesetzt oder vorgesehen, vorzugsweise als integraler Bestandteil vorgesehen sind.

14. Reckanlage nach Anspruch 12 oder 13, **dadurch gekennzeichnet, dass** das Führungsschienen-Gleitlager (29) auf seiner vorlaufenden Seite (32a) und/oder auf seiner nachlaufenden Seite (32b) sowohl an der Kettenkraft-Lauffläche (31a) als auch an der Reckkraft-Lauffläche (33a) den lichten Querabstand zwischen der Kettenkraft- und der Reckkraft-Lauffläche (31a, 33a) vergrößernde Abflachungen (32', 32") aufweist.

15. Reckanlage nach Anspruch 14, **dadurch gekennzeichnet, dass** die Abflachungen (32', 32") in Draufsicht teilkreisförmig mit konvexer Bogenstruktur gebildet sind.

16. Reckanlage nach einem der Ansprüche 1 bis 15, **dadurch gekennzeichnet, dass** die Schwerpunktebene (Sz, m-t Ebene) der Kluppen-Ketteneinheit (KK) in der Reck-Ebene (Y) oder in einem Wirkabstand (WA1) vorzugsweise oberhalb der Reck- Ebene (Y) angeordnet ist, der weniger als 30%, insbesondere weniger als 25%, 20%, 15%, 10%, 8%, 6%, 5%, 4%, 3%, 2% und insbesondere weniger als 1% der Höhe der Kettenkraft- Laufschiene (31) oder der Reckkraft-Laufschiene (33) beträgt.

17. Reckanlage nach einem der Ansprüche 1 bis 15, **dadurch gekennzeichnet, dass** die Wirk-Ebene (Q) der Kettenlängskraft (FK) mit der Reck-Ebene (Y) zusammenfällt oder in einem Wirkabstand (WA2) vorzugsweise unterhalb der Reck- Ebene (Y) angeordnet ist, wobei der Wirkabstand (WA2) kleiner ist als 30%, insbesondere kleiner als 25%, 20%, 15%, 10%, 8%, 6%, 5%, 4%, 3%, 2% und insbesondere kleiner ist als 1% der Höhe der Kettenkraft-Laufschiene (31) oder der Reckkraft-Laufschiene (33).

18. Reckanlage nach einem der Ansprüche 1 bis 17, **dadurch gekennzeichnet, dass** die Tragschiene (17) mit einem die Tragschiene (17) in Längsrichtung zumindest in einer Teillänge durchsetzenden Kanal (41) versehen ist, der vorzugsweise als ein von einem fließfähigen Kühlmedium durchströmbarer Kühlkanal (41) ausgebildet ist.

19. Reckanlage nach einem der Ansprüche 1 bis 18, **dadurch gekennzeichnet, dass** die Kluppen-Ketteneinheit (KK) so ausgebildet ist, dass die daran ansetzenden Kräfte entkoppelt sind und kipp- oder drehmomentfrei unter Vermeidung einer Erhöhung der Flächenpressung zwischen der Kluppen- Ketteneinheit (KK) und der Tragschiene (17) und/oder der Führungsschiene (15) angreifen.

20. Reckanlage nach einem der Ansprüche 1 bis 19, **dadurch gekennzeichnet, dass** die Kluppen-Ketteneinheit (KK) so ausgebildet ist, dass die daran ansetzenden Kräfte soweit entkoppelt sind, dass die an der Kluppen-Ketteneinheit (KK) ansetzenden Kräfte nur zu einer maximal 5%- oder 10%-igen Erhöhung der Kipp- oder Drehmomente und damit zu einer entsprechenden Erhöhung der Flächenpressung zwischen der Kluppen-Ketteneinheit (KK) und der Tragschiene (17) und/oder der Führungsschiene (15) führen.

21. Reckanlage nach einem der Ansprüche 1 bis 20 **dadurch gekennzeichnet, dass** die Tragschiene (17) Gelenkeinrichtungen (G, 81, 81') umfasst, worüber ein erstes und ein darauf nachfolgendes zweites Teilstück (170; Tsi, Tsi+1M Tri, TRi+1) der Tragschiene (17) in unterschiedlicher Winkellage zueinander einstellbar sind.

22. Reckanlage nach einem der Ansprüche 1 bis 20, **dadurch gekennzeichnet, dass** die Tragschiene (17) mit Gelenkverbindungen (G, 81, 81') versehen ist, wobei in Vorlaufrichtung vor und nach einer Gelenkverbindung (G, 81, 81') Tragschienen-Teilstücke (TSi, TSi+1) gebildet sind, die in unterschiedlicher Winkellage zueinander einstellbar sind, und dass der die Tragschiene (17) im Bereich der Gelenkverbindung (G, 81, 81') durch einen Trennspalt (SP) unterbrochen ist, wobei die beiden unterbrochenen Teilstücke (TSi, TSi+1) des Kanals (122) über eine Bypass-Leitung (141, 141a, 141b) miteinander verbunden sind.

23. Reckanlage nach Anspruch 21 oder 22, **dadurch gekennzeichnet, dass** die Tragschienen-Lauffläche (17a) im Bereich der Gelenkverbindung (G, 81, 81') über die in diesem Bereich vorgesehenen Trennspalten (SP) hinweg auf gleichem Niveau, d.h. zueinander fluchtend angeordnet sind, wobei im Bereich des Trennspaltes (SP) an den dort aneinander grenzenden Tragschienen Teilstücken (TSi, TSi+1) An- und Ablaufphasen (91, 92) ausgebildet sind.

24. Reckanlage nach Anspruch 22 oder 23, **dadurch gekennzeichnet, dass** die Tragschienen-Teilstücke (TSi, TSi+1) und die in diesem Bereich vorgesehene Gelenkverbindung (G, 81, 81') durchbiegungs- und torsionssteif unter Aufrechterhaltung einer zueinander fluchtenden Tragschienen-Lauffläche (17a) ausgebildet sind.

25. Reckanlage nach einem der Ansprüche 22 bis 24, **dadurch gekennzeichnet, dass** die Tragschiene (17) oder einzelne Tragschienen-Teilstücke (TSi, TSi+1) vor oder nach einer Gelenkverbindung (G, 81, 81') eine Trägerkonstruktion (TRi, TRi+1) umfassen, und zwar mit einem unten liegenden Tragteil (99) und einem dazu beabstandeten oberen Tragteil (98), wobei das jeweils unter und obere Tragteil (99, 98) über jeweils zumindest eine Verstärkungsrippe (100) fest miteinander verbunden sind, und wobei das obere und untere Tragteil (99, 98) zwei aufeinander folgende Trägerstrukturen (TRi, TRi+1) über das Gelenk (G, 81, 81') hinweglaufen in die überlappende Struktur angeordnet sind.

26. Reckanlage nach Anspruch 25, **dadurch gekennzeichnet, dass** an zumindest einem unteren und einem oberen Tragteil (98, 99) jeweils ein plattenförmiger Tragplattengelenkabschnitt 98', 99') ausgebildet ist, in welchem eine Gelenkscheibe (81, 81') angeordnet ist, die eine entsprechende Bohrung in dem Überlappungsbereich mit dem angrenzenden vor- bzw. nachlaufenden Trägerteil (99, 98) durchsetzt.

27. Reckanlage nach einem der Ansprüche 22 bis 26, **dadurch gekennzeichnet, dass** die Tragschiene (17) bzw. die Tragschienen-Teilstücke (TRi, TRi+1) direkt oder unter Zwischenschaltung von Abstandshaltern oder isolierenden Abstandshaltern (42) auf den unteren Tragteilen (99) abgestützt und gehalten sind.

28. Reckanlage nach einem der Ansprüche 1 bis 27, **dadurch gekennzeichnet, dass** das Kluppenteil (6) und/oder das Transportteil (7) volumen- oder gewichtsmäßig zu mehr als 25%, insbesondere zu mehr 30%, 40%, 50%, 60%, 70%, 80% oder zu mehr als 90% aus einem oder mehreren Verbundwerkstoffen, insbesondere langfasrigen Faserverbundwerkstoffen, besteht oder diese umfasst.

29. Reckanlage nach Anspruch 28, **dadurch gekennzeichnet, dass** das Kluppenteil (6) und/oder das Transportteil (7) zumindest einen Verbundwerkstoff mit zumindest einem Matrix-Material und mit zumindest einer Funktions- oder Eigenschaftskomponente umfasst, wobei
a) die zumindest eine Matrix-Komponente eine oder mehrere der Materialien Aluminium, Magnesium, Keramik, Kohlenstoff, Duromere, Elastomere und/oder Thermoplaste umfasst, insbesondere Duroplaste, Polymere, Harze, Polyesterharze, Polyurethanharze, Polyurethan, Epoxidharze, Silikonharze, Vinylesterharze, Phenolharze, Acrylharze (PMMA), und
b) die Eigenschafts- oder Funktionskomponente eine oder mehrere der Materialien Glasfasern, Kohlestofffasern, Keramikfasern, Aramidfasern, Borfasern, Stahlfasern und/oder Nylonfasern, insbesondere in langfaseriger Ausgestaltung
umfasst oder daraus besteht.

30. Reckanlage nach einem der Ansprüche 1 bis 29, **dadurch gekennzeichnet, dass** die Transportkette (13) in einem Teilumfang um zumindest ein Kettenrad (51) herum geführt ist, und dass auch in diesem Bereich die Tragschiene (17) mit der Tragschienen-Lauffläche (17a) vorgesehen ist.

31. Reckanlage nach einem der Ansprüche 1 bis 30, **gekennzeichnet durch** die folgenden Merkmale:
- im Bereich der Führungsbahn (2) ist ein Auslauf-Kettenrad (AR) vorgesehen,
- dieses Auslauf-Kettenrad (AR) ist in unterschiedlicher Lage einstell- und positionierbar,
- zur Achse des Kettenrades (AR) konzentrisch und verdrehbar angeordnet ist ein Hebel (706), an dessen radialem Ende eine Auflaufkurve (701) relativ verstellbar vorgesehen ist, deren Ausrichtung mit der daran endenden flexiblen Führungsschiene (15) in eine andere Kurvenform (702) veränderbar ist,
- wozu ein Verstellschuh (705) an dem um die Achse des Kettenrades (AR) verschwenkbaren Hebel (706) angebracht ist, derart, dass trotz Verstellung der Auflaufkurve (701) stets eine tangentiale Verbindung von der angrenzenden flexiblen Führungsschiene (15) zum Auslauf-Kettenrad (AR) beibehalten ist.

32. Reckanlage nach einem der Ansprüche 1 bis 31, **dadurch gekennzeichnet, dass** die an dem Schwerpunkt (GS) der Kluppen-Ketteneinheit (KK) ansetzende Gewichtskraft (FG) bzw. die durch diesen Schwerpunkt (GS) verlaufende Schwerkraft-Ebene (Sz) der Kluppen-Ketteneinheit (KK) in dem Bereich der Kettenkraft-Lauffläche (31) oder der Reckkraft-Lauffläche (33) oder innerhalb der Breite der Führungsschiene (15) liegt.

## Claims

1. Stretching unit comprising a sliding chain transport system, having the following features:
- two peripheral guide paths (2), provided at a distance from one another with respect to a vertical longitudinal plane (SE), are provided,
- a transport chain (13) is peripherally arranged on each of these guide paths (2),
- each of the two transport chains (13) comprises a plurality of chain links articulated to one another,
- clip chain units (KK) are provided, which are subdivided into a clip part (6) and a chain part (7) which comprises chain links,
- the clip part (6) comprises at least one clip mounting (25a) for fixing an edge (8) of the material web (F) to be stretched, via which the material web (F) can be gripped and conveyed from an entrance zone (E) via a stretching zone (R) to an exit zone (A) whilst releasing the material web (F),
- the guide path (2) comprises a guide rail (15) in each case,
- the clip chain units (KK) comprise at least one stretching force running face (33), oriented on the stretching side, and a chain force running face (31) facing counter thereto, which are oriented parallel and facing one another, via which the clip chain unit (KK) is displaceably guided along the guide rail (15) comprising a chain force running face (31) and a stretching force running face (33) oriented parallel and counter thereto, the chain force running face (31), in the region of the chain force running face height (231) thereof, and the stretching force running face (33), by way of the stretching force running face height (233) thereof, interacting with and being guided by the guide rail (15),
- a support rail (17) is further provided, which absorbs the gravitational force (FG) of the clip chain unit (KK) and comprises a support rail running face (17a),
- the clip mounting (25a), provided on the clip part (6), for fixing the edge (8) of the material web (F) to be stretched is arranged in such a way that the stretching forces (FR) introduced to the clip body (6) via the material web (F) to be stretched act in a stretching plane (Y) which is oriented perpendicularly to the gravitational force (GK) of the clip chain unit (KK),
- on different portions of the guide path (2), centrifugal forces (FF), lateral guidance forces (FS) and transverse forces (FQ) also further act on the clip chain unit (KK),
- the centrifugal forces (FF) acting on the centre of gravity (GS) of the chain clip unit (KK) act in a centrifugal force plane (S) which is parallel to or coincident with the stretching plane (Y),
- the transverse forces (FQ) or the lateral guidance forces (FS) act in a transverse force or lateral guidance plane (Q) parallel to the stretching force plane (Y),
- the clip chain unit (KK) is formed in such a way that the centrifugal force plane (S) and the lateral guidance or transverse force plane (Q) and the stretching force plane (Y) are positioned above the lower edge (15c) of the guide rail (15) or above the lower end of the chain force running face (31) and/or the stretching force running face (33),
- the centrifugal force plane (S) and the lateral guidance or transverse force plane (Q) and the stretching force plane (Y) intersect the guide rail (15) and the chain force running face (31) in the region of the chain force running face height (231) thereof and the stretching force running face (33) in the region of the stretching force running face height (233) thereof, and
- one or more sliding elements (40; 40a, 40b) comprising a bracing face arrangement (39) for bracing the clip chain unit (KK) with respect to the running face (17a) of the support rail (17) are provided on the underside (25f) of the clip chain unit (KK), the plane of gravity (Sz) which extends through the centre of gravity (GS) of the clip chain unit (KK) intersecting the bracing face arrangement (39), with respect to the maximum extension width (39'; x+y) thereof, transversely to the feed direction and intersecting the support rail running face (17).

2. Stretching unit according to claim 1, **characterised in that** the plane of gravity (Sz) extending through the centre of gravity (GS) of the clip chain unit (KK) preferably centrally intersects the bracing face arrangement (39), with respect to the maximum extension width (39'; x+y) thereof transversely to the feed direction and the support rail running face (17), or deviates therefrom by less than 40 %, in particular less than 30 %, 20 % or less than 10 % with respect to the maximum extension width (39'; x+y) or the width of the support rail running face (17a).

3. Stretching unit according to either claim 1 or claim 2, **characterised in that** the stretching force plane (Y), the centrifugal force plane (S) and the transverse force or lateral guidance force plane (Q) intersect the guide rail (15) in a region in which the clip chain unit (KK) is braced on the guide rail (15).

4. Stretching unit according to claim 1, 2 or 3, **characterised in that** the clip chain unit (KK) is formed in such a way that
- the centrifugal force plane (S) extends parallel to the stretching force plane (Y) at a gravity action spacing (WA1),
- the transverse force or lateral guidance force plane (Q) extends parallel to the stretching force plane (Y) at a force action spacing (WA2), and
- a spacing (F) provided between the plane of gravity (S) and the lower edge (15c) of the guide rail (15) is at least twice as large and preferably at least three, four or at least five times as large as the larger of the two action spacings (WA1) or (WA2).

5. Stretching unit according to any of claims 1, 2 or 3, **characterised in that** the clip chain unit (KK) and the guide rail (15) are formed in such a way that
- the centrifugal force plane (S) and the transverse force or lateral guidance force plane (Q) coincide with the stretching force plane (Y), and
- a spacing (F) between the plane of gravity (S) and the lower edge (15c) of the guide rail (15) is dimensioned in such a way that it is at least 1 mm, preferably at least 5 mm, 10 mm, 20 mm, 30 mm, 40 mm, 50 mm or more.

6. Stretching unit according to claim 5, **characterised in that** the maximum extension width (39'; x+y) of the bracing face arrangement (39) and thus the maximum extension width (39'; x+y) of the sliding elements (40; 40a, 40b) are of a measurement corresponding to at least 2.0, 2.5, 3.0 or preferably at least 3.5 times the width of the guide rail (15) and thus to the horizontal spacing between the chain force running face (31) and the stretching force running face (33).

7. Stretching unit according to either claim 5 or claim 6, **characterised in that** the centre-of-gravity plane (Sz)
a) intersects the bracing face arrangement (39) of the at least one sliding element (40; 40a, 40b) centrally, and for this purpose the portions, positioned on either side of the centre-of-gravity plane (Sz), of the one sliding element (14) or of the separate sliding elements (14a, 14b) positioned at least on either side thereof have the same face sizes, or
b) intersects said bracing face arrangement off-centre (x ≠ y), sliding faces of different sizes being provided on either side of the centre-of-gravity plane (Sz) so as to achieve the same contact stress.

8. Stretching unit according to any of claims 5 to 7, **characterised in that** the portions, positioned on either side of the plane of gravity (Sz), of the one sliding element (40) or of the separate sliding elements (40a, 40b) positioned on either side thereof have the same face sizes and/or are exposed to the same contact stress.

9. Stretching unit according to any of claims 1 to 8, **characterised in that** the clip chain unit (KK) is formed in such a way that the forces acting thereon are decoupled, and act on the clip chain unit (KK) in a tilting-moment free and torque-free manner so as to prevent an increase in the contact stress between the clip chain unit (KK) and the support rail (17).

10. Stretching unit according to any of claims 1 to 8, **characterised in that** the clip chain unit (KK) is formed in such a way that the forces acting thereon are decoupled, in such a way that the forces acting on the clip chain unit (KK) only lead to at most a 5 % or 10 % increase in the tilting moments or torques and thus to a corresponding increase in the contact stress between the clip chain unit (KK) and the support rail (17).

11. Stretching unit according to any of claims 1 to 10, **characterised in that** a first cooling device is provided for the support rail (17) and/or a second cooling device is provided for the guide rail (15), which device(s) is/are provided on the entirety or merely on a partial length of the guide path (2).

12. Stretching unit according to any of claims 1 to 11, **characterised in that** the clip chain unit (KK) comprises a U-shaped recess (27), which extends parallel to the guide rail (15) and in which one or more guide rail sliding bearings (29) are preferably replaceably inserted and which comprises the chain force and stretching force running faces (31, 33) which are to face towards one another.

13. Stretching unit according to claim 12, **characterised in that** the guide rail (15) comprises two guide faces, specifically a clip-side guide face (15a) and a chain-side guide face (15b), which each cooperate with one or more sliding bearings (29) which are formed, inserted or provided on the clip chin unit (KK), preferably provided as an integral component.

14. Stretching unit according to either claim 12 or claim 13, **characterised in that** the guide rail sliding bearing (29) comprises flattened regions (32', 32") enlarged by the clear transverse spacing between the chain force running face (31a) and stretching force running face (33a) on the leading face (32a) and/or on the trailing face (32b) thereof, both on the chain force running face (31a) and on the stretching force running face (33a).

15. Stretching unit according to claim 14, **characterised in that** the flattened regions (32', 32") are formed in a partial circle shape having a convex arc structure in a plan view.

16. Stretching unit according to any of claims 1 to 15, **characterised in that** the centre-of-gravity plane (Sz, m-t plane) of the clip chain unit (KK) is arranged in the stretching plane (Y) or at an action spacing (WA1) preferably above the stretching plane (Y) which is less than 30 %, in particular less than 25 %, 20 %, 15 %, 10 %, 8 %, 6 %, 5 %, 4 %, 3 %, 2 % and in particular less than 1 % of the height of the chain force running rail (31) or the stretching force running rail (33).

17. Stretching unit according to any of claims 1 to 15, **characterised in that** the action plane (Q) of the chain longitudinal force (FK) coincides with the stretching plane (Y) or is arranged at an action spacing (WA2) preferably below the stretching plane (Y), the action spacing (WA2) being less than 30 %, in particular less than 25 %, 20 %, 15 %, 10 %, 8 %, 6 %, 5 %, 4 %, 3 %, 2 % and in particular less than 1 % of the height of the chain force running rail (31) or the stretching force running rail (33).

18. Stretching unit according to any of claims 1 to 17, **characterised in that** the support rail (17) is provided with a duct (41) which passes through at least a partial length of the support rail (17) in the longitudinal direction and which is preferably formed as a cooling duct (41) which can be flowed through by a fluid coolant.

19. Stretching unit according to any of claims 1 to 18, **characterised in that** the clip chain unit (KK) is formed in such a way that the forces acting thereon are decoupled and act in a tilting-moment-free or torque-free manner, preventing an increase in the contact stress between the clip chain unit (KK) and the support rail (17) and/or guide rail (15).

20. Stretching unit according to any of claims 1 to 19, **characterised in that** the clip chain unit (KK) is formed in such a way that the forces acting thereon are decoupled, in such a way that the forces acting on the clip chain unit (KK) only lead to at most a 5 % or 10 % increase in the tilting moments or torques and thus to a corresponding increase in the contact stress between the clip chain unit (KK) and the support rail (17) and/or guide rail (15).

21. Stretching unit according to any of claims 1 to 20, **characterised in that** the support rail (17) comprises articulation devices (G, 81, 81'), via which a first and a following second constituent part (170; Tsi, Tsi+1M Tri, TRi+1) of the support rail (17) can be set in different angular positions with respect to one another.

22. Stretching unit according to any of claims 1 to 20, **characterised in that** the support rail (17) is provided with articulated connections (G, 81, 81'), support rail constituent parts (TSi, TSi+1), which can be set in different angular positions with respect to one another, being formed before and after an articulated connection (G, 81, 81') in the forward direction, and **in that** the support rail (17) is interrupted in the region of the articulated connection (G, 81, 81') by a separating gap (SP), the two interrupted constituent parts (TSi, TSi+1) of the duct (122) being interconnected via a bypass line (141, 141a, 141b).

23. Stretching unit according to either claim 21 or claim 22, **characterised in that** the support rail running face (17a) is arranged in the region of the articulated connection (G, 81, 81') across the separating gaps (SP) provided in this region at the same level, in other words which are arranged mutually flush, arrival and departure phases (91, 92) being formed in the region of the separating gap (SP) on the support rail constituent parts (TSi, TSi+1) which adjoin one another there.

24. Stretching unit according to either claim 22 or claim 23, **characterised in that** the support rail constituent parts (TSi, TSi+1) and the articulated connection (G, 81, 81') provided in this region are formed rigid against warping and torsion so as to maintain a mutually flush support rail running face (17a).

25. Stretching unit according to any of claims 22 to 24, **characterised in that**, before or after an articulated connection (G, 81, 81'), the support rail (17) or individual support rail constituent parts (TSi, TSi+1) comprise a support construction (TRi, TRi+1), specifically comprising a lower support part (99) and an upper support part (98) at a distance therefrom, the respective upper and lower support part (99, 98) each being rigidly interconnected via at least one reinforcing rib (100), and the upper and lower support part (99, 98) of two successive support structures (TRi, TRi+1) being arranged extending away via the articulation (G, 81, 81') into the overlapping structure.

26. Stretching unit according to claim 25, **characterised in that**, at each of at least one upper and one lower support part (98, 99), a plate-shaped support plate articulation portion (98', 99') is formed, in which an articulation disc (81, 81') is arranged which passes through a corresponding hole in the overlap region comprising the adjacent preceding or following support part (99, 98).

27. Stretching unit according to any of claims 22 to 26, **characterised in that** the support rail (17) or the support rail constituent parts (TRi, TRi+1) are braced and held on the lower support parts (99) directly or with the interposition of spacers or insulating spacers (42).

28. Stretching unit according to any of claims 1 to 27, **characterised in that** the clip part (6) and/or the transport part (7) consist of or comprise one or more composite materials, in particular long-fibre composite materials, at more than 25 %, in particular more than 30 %, 40 %, 50 %, 60 %, 70 %, 80 % or more than 90 %, by volume or by weight.

29. Stretching unit according to claim 28, **characterised in that** the clip part (6) and/or the transport part (7) comprises at least one composite material comprising at least one matrix material and at least one functional component or property component,
a) the at least one matrix component comprising one or more of the materials of aluminium, magnesium, ceramics, carbon, thermosetting plastics, elastomers and/or thermoplastics, in particular thermosets, polymers, resins, polyester resins, polyurethane resins, polyurethane, epoxy resins, silicone resins, vinyl ester resins, phenol resins, acrylic resins (PMMA), and
b) the property component or functional component comprising or consisting of one or more of the materials of glass fibres, carbon fibres, ceramics fibres, aramid fibres, boron fibres, steel fibres and/or nylon fibres, in particular in a long-fibre configuration.

30. Stretching unit according to any of claims 1 to 29, **characterised in that** the transport chain (13) is guided around at least one chain wheel (51) along a partial periphery, and **in that** the support rail (17) is provided with the support rail running face (17a) in this region too.

31. Stretching unit according to any of claims 1 to 30, **characterised by** the following features:
- an exit chain wheel (AR) is provided in the region of the guide path (2),
- said exit chain wheel (AR) can be set and positioned in different positions,
- a lever (706) - on the radial end of which an exit curve (701) is provided in a relatively adjustable manner, the orientation of which can be changed to a different curve shape (702) by means of the flexible guide rail (15) ending thereat - is arranged concentrically with the axis of the chain wheel (AR) and rotatably,
- for which purpose an adjustment block (705) is attached to the lever (706) which is pivotable about the axis of the chain wheel (AR), in such a way that a tangential connection of the adjacent flexible guide rail (15) to the exit chain wheel (AR) is always maintained in spite of adjustment of the exit curve (701).

32. Stretching unit according to any of claims 1 to 31, **characterised in that** the gravitational force (FG) acting on the centre of gravity (GS) of the clip chain unit (KK) or the centre-of-gravity plane (Sz), extending through this centre of gravity (GS), of the clip chain unit (KK) is positioned in the region of the chain force running face (31) or of the stretching force running face (33) or within the width of the guide rail (15).

## Revendications

1. Installation d'étirage avec un système de transport à chaîne coulissante, comprenant les éléments techniques suivants :
- il est prévu deux voies de guidage (2) en recirculation, prévues à distance l'une de l'autre par rapport à un plan longitudinal vertical (SE),
- une chaîne de transport respective (13) est agencée en recirculation sur ces voies de guidage (2),
- chacune des deux chaînes de transport (13) inclut une pluralité de maillons de chaîne reliés de façon articulée les uns avec les autres,
- il est prévu des unités de chaîne à pince (KK), qui sont subdivisées en une partie formant pince (6) et une partie formant chaîne (7) qui inclut des maillons de chaîne,
- la partie formant pince (6) comprend au moins une monture de pince (25a) pour la fixation d'une bordure (8) de la bande de matériau à étirer (F), au moyen de laquelle la bande de matériau (F) peut être saisie et peut être convoyée depuis une zone d'entrée (E) via une zone d'étirage (R) jusqu'à une zone de sortie (A) avec libération de la bande de matériau (F),
- la voie de guidage (2) inclut respectivement un rail de guidage (15),
- les unités de chaîne à pince (KK) incluent au moins une surface de déplacement et d'appui pour force d'étirage (33) orientée du côté étirage, et une surface de déplacement et d'appui pour force de chaîne (31) tournée en sens opposé à celle-ci, qui sont orientées parallèlement l'une à l'autre et tournées l'une vers l'autre, surface via lesquelles l'unité de chaîne à pince (KK) est guidée de façon déplaçable le long du rail de guidage (15) avec une surface de déplacement et d'appui pour force de chaîne (31) et une surface de déplacement et d'appui pour force d'étirage (33) parallèle à celle-ci et orientée en sens inverse, dans laquelle la surface de déplacement et d'appui pour force de chaîne (31) dans la région de sa hauteur (131) et la surface de déplacement et d'appui pour force d'étirage (33) avec sa hauteur (233) coopèrent avec le rail de guidage (15) et sont guidées de ce fait,
- il est en outre prévu un rail porteur (17) qui encaisse la force pondérale (FG) de l'unité de chaîne à pince (KK), avec une surface de déplacement de rail porteur (17a),
- la monture de pince (25a) prévue sur la partie formant pince (6) est agencée, pour la fixation de la bordure (8) de la bande de matériau à étirer (F), de telle façon que les forces d'étirage (FR) appliquées via la bande de matériau à étirer (A) sur le corps de pince (6) agissent dans un plan d'étirage (Y) qui est orienté perpendiculairement à la force pondérale (GK) de l'unité de chaîne à pince (KK),
- sur différents tronçons de la voie de guidage (2) l'unité de chaîne à pince (KK) est encore sollicitée par des forces d'inertie (FF), des forces de guidage latéral (FS) ainsi que des forces transversales (FQ),
- les forces d'inertie (FF) appliquées au niveau du centre de gravité (GS) de l'unité de chaîne à pince (KK) agissent dans un plan de force d'inertie (S) qui est parallèle au plan d'étirage (Y) ou qui coïncide avec celui-ci,
- les forces transversales (FQ) ou les forces de guidage latérale (FS) agissent dans un plan de force transversale ou de force de guidage latéral (Q) parallèle au plan d'étirage (Y),
- l'unité de chaîne à pince (KK) est réalisée de telle façon que le plan des forces d'inertie (S) et le plan des forces transversales ou des forces de guidage latéral (Q), ainsi que le plan d'étirage (Y) se trouve au-dessus de l'arête inférieure (15c) du rail de guidage (15) ou au-dessous de l'extrémité inférieure de la surface de déplacement et d'appui pour force de chaîne (31) et/ou de la surface de déplacement et d'appui pour force d'étirage (33),
- le plan des forces d'inertie (S) et le plan des forces transversales ou des forces de guidage latéral (Q), ainsi que le plan des forces d'étirage (Y) recoupent le rail de guidage (15) et la surface de déplacement et d'appui pour force de chaîne (31) dans la région de sa hauteur (231), ainsi que la surface de déplacement et d'appui pour force d'étirage (33) dans la région de sa hauteur (233), et
- un ou plusieurs éléments de coulissement (40 ; 40a, 40b) avec un agencement de surface de soutien (39) pour le soutien de l'unité de chaîne à pince (KK) par rapport à la surface de déplacement (17a) du rail porteur (17) est/sont prévu(s) sur la face inférieure (25b) de l'unité de chaîne à pince (KK), de sorte que le plan de gravité (Sz) qui passe par le centre de gravité (GS) de l'unité de chaîne à pince (KK) recoupe l'agencement de surface de soutien (39), par référence à sa largeur d'extension maximale (39' ; x + y) transversalement à la direction d'avance, ainsi que la surface de déplacement et d'appui du rail porteur (17).

2. Installation d'étirage selon la revendication 1, **caractérisée en ce que** le plan de gravité (Sz) qui passe par le centre de gravité (GS) de l'unité de chaîne à pince (KK) recoupe l'agencement de surface de soutien (39), par référence à sa largeur d'extension maximale (39' ; x + y), transversalement à la direction d'avance, et la surface de déplacement et d'appui du rail porteur (17), de préférence au milieu, ou à un écartement de celui-ci de moins de 40 %, en particulier de moins de 30 %, 20 % ou moins de 10 % par référence à la largeur d'extension maximale (39' ; x + y) ou à la largeur de la surface de déplacement et d'appui du rail porteur (17a).

3. Installation d'étirage selon la revendication 1 ou 2, **caractérisée en ce que** le plan de la force d'étirage (Y), le plan des forces d'inertie (S) et le plan de la force transversale ou des forces de guidage latéral (Q) recoupent le rail de guidage (15) dans une région dans laquelle l'unité de chaîne à pince (KK) est soutenue sur le rail de guidage (15).

4. Installation d'étirage selon la revendication 1, 2 ou 3, **caractérisée en ce que** l'unité de chaîne à pince (KK) est ainsi réalisée que
- le plan des forces d'inertie (S) s'étend parallèlement au plan des forces d'étirage (Y) à une distance efficace vis-à-vis de la gravité (WA1),
- le plan de force transversale ou de force de guidage latéral (Q) s'étend parallèlement au plan des forces d'étirage (Y) à une distance efficace (WA2), et
- une distance (F) prévue entre le plan de force de gravité (S) et l'arête inférieure (15c) du rail de guidage (15) est au moins deux fois aussi grande, et de préférence au moins trois fois, quatre fois ou au moins cinq fois aussi grande que la plus grande des deux distances efficaces (WA1) ou (WA2).

5. Installation d'étirage selon l'une des revendications 1, 2 ou 3, **caractérisée en ce que** l'unité de chaîne à pince (KK) et le rail de guidage (15) sont ainsi réalisés que
- le plan des forces d'inertie (S) et le plan de force transversale ou de force de guidage latéral (Q) coïncident avec le plan des forces d'étirage (Y), et
- une distance (F) entre le plan des forces d'inertie (S) et l'arête inférieure (15c) du rail de guidage (15) est ainsi dimensionnée que celle-ci s'élève à au moins 1 mm, de préférence au moins 5 mm, 10 mm, 20 mm, 30 mm, 40 mm, 50 mm ou plus.

6. Installation d'étirage selon la revendication 5, **caractérisée en ce que** la largeur d'extension maximale (39' ; x + y) de l'agencement formant surface de soutien (39) et ainsi la largeur d'extension maximale (39' ; x + y) des éléments coulissants (40 ; 40a, 40b) ont une valeur qui correspond de préférence au moins à 2,0, 2,5, 3,0 ou de préférence au moins 3,5 fois la largeur du rail de guidage (15) et ainsi à la distance horizontale entre la surface de déplacement et d'appui pour les forces de chaîne (31) et la surface de déplacement et d'appui pour les forces d'étirage (33).

7. Installation d'étirage selon la revendication 5 ou 6, **caractérisée en ce que** le plan du centre de gravité (Sz) recoupe l'agencement de surface de soutien (39) dudit au moins un élément coulissant (40 ; 40a, 40b)
a) au milieu, et à cet effet, les tronçons, situés des deux côtés du plan des forces de gravité (Sz) de l'un des éléments coulissants (14) ou des éléments coulissants séparés situés au moins sur les deux côtés de ce plan (14a, 14b), ont des surfaces de même taille, ou
b) de manière décentrée (x ≠ y), et pour atteindre un même pressage de surface sur les deux côtés du plan de centre de gravité (Sz) il est prévu des surfaces de coulissement de tailles différentes.

8. Installation d'étirage selon l'une des revendications 5 à 7, **caractérisée en ce que** les tronçons, situés des deux côtés du plan des forces de gravité (Sz), de l'un des éléments coulissants (40) ou des éléments coulissants séparés situés des deux côtés de ce plan (40a, 40b), ont des surfaces de même taille, et/ou sont soumis à un même pressage de surface.

9. Installation d'étirage selon l'une des revendications 1 à 8, **caractérisée en ce que** l'unité de chaîne à pince (KK) est ainsi réalisée que les forces qui s'y appliquent sont découplées et à cet effet, elles s'appliquent de manière exempte de couples de basculement et de rotation sur l'unité de chaîne à pince (KK) pour éviter une augmentation du pressage de surface entre l'unité de chaîne à pince (KK) et le rail porteur (17).

10. Installation d'étirage selon l'une des revendications 1 à 8, **caractérisée en ce que** l'unité de chaîne à pince (KK) est ainsi réalisée que les forces qui s'y appliquent sont découplées dans une mesure telle que les forces qui s'appliquent à l'unité de chaîne à pince (KK) mènent seulement à une augmentation maximum de 5 % ou de 10 % des couples de basculement ou de rotation et ainsi à une augmentation correspondante du pressage de surface entre l'unité de chaîne à pince (KK) et le rail porteur (17).

11. Installation d'étirage selon l'une des revendications 1 à 10, **caractérisée en ce qu'**il est prévu un premier dispositif de refroidissement pour le rail porteur (17) et/ou un second dispositif de refroidissement pour le rail de guidage (15), lequel/lesquels est/sont prévu(s) sur la totalité ou simplement sur une longueur partielle de la voie de guidage (2).

12. Installation d'étirage selon l'une des revendications 1 à 11, **caractérisée en ce que** l'unité de chaîne à pince (KK) comporte un évidement en forme de U (27) qui s'étend parallèlement au rail de guidage (15) et dans lequel un ou plusieurs paliers coulissants pour rail de guidage (29) sont mis en place, de préférence de manière interchangeable, cet évidement présentant les surfaces de déplacement et d'appui pour force de chaîne et pour forces d'étirage (31, 33) mutuellement en vis-à-vis.

13. Installation d'étirage selon la revendication 12, **caractérisée en ce que** le rail de guidage (15) comprend deux surfaces de guidage, à savoir une surface de guidage (15a) côté pince et une surface de guidage (15b) côté chaîne, lesquelles coopèrent respectivement avec un ou plusieurs paliers coulissants (29), lesquels sont réalisés, mis en place ou prévus sur l'unité de chaîne à pince (KK), de préférence à titre d'élément constitutif intégral.

14. Installation d'étirage selon la revendication 12 ou 13, **caractérisée en ce que** le palier coulissant (29) pour rail de guidage comporte sur son côté avant (32a) dans le sens de déplacement et/ou sur son côté arrière (32b) dans le sens de déplacement, aussi bien sur la surface de déplacement et d'appui pour force de chaîne (31a) que sur la surface de déplacement et d'appui pour force d'étirage (33a) des méplats (32', 32") augmentant la distance transversale libre entre ces deux surfaces (31a, 33a).

15. Installation d'étirage selon la revendication 14, **caractérisée en ce que** les méplats (32', 32") sont formés, en vue de dessus, en forme de cercle partiel avec une structure en arc convexe.

16. Installation d'étirage selon l'une des revendications 1 à 15, **caractérisée en ce que** le plan du centre de gravité (Sz, plan m-t) de l'unité de chaîne à pince (KK) est agencé dans le plan d'étirage (Y) ou à une distance efficace (WA1) de préférence au-dessus du plan d'étirage (Y), qui s'élève à moins de 30 %, en particulier moins de 25 %, 20 %, 15 %, 10 %, 8 %, 6 %, 5 %, 4 %, 3 %, 2 % et en particulier moins de 1 % de la hauteur du rail de déplacement et d'appui pour force de chaîne (31) ou du rail de déplacement et d'appui pour force d'étirage (33).

17. Installation d'étirage selon l'une des revendications 1 à 15, **caractérisée en ce que** le plan efficace (Q) de la force longitudinale de chaîne (FK) coïncide avec le plan d'étirage (Y) ou est agencé à une distance efficace (WA2) de préférence au-dessous du plan d'étirage (Y), et la distance efficace (WA2) est inférieure à 30 %, en particulier inférieure à 25 %, 20 %, 15 %, 10 %, 8 %, 6 %, 5 %, 4 %, 3 %, 2 % et en particulier inférieure à 1 % de la hauteur du rail de déplacement et d'appui pour force de chaîne (31) ou du rail de déplacement et d'appui pour force d'étirage (33).

18. Installation d'étirage selon l'une des revendications 1 à 17, **caractérisée en ce que** le rail porteur (17) est doté d'un canal (41) qui traverse le rail porteur (17) en direction longitudinale au moins sur une longueur partielle, canal qui est de préférence réalisé comme un canal de refroidissement (41) traversé par l'écoulement d'un milieu de refroidissement capable de s'écouler.

19. Installation d'étirage selon l'une des revendications 1 à 18, **caractérisée en ce que** l'unité de chaîne à pince (KK) est ainsi réalisée que les forces qui s'y appliquent sont découplées et sont appliquées de manière dépourvue de couples de basculement ou de rotation en évitant une augmentation du pressage de surface entre l'unité de chaîne à pince (KK) et le rail porteur (17) et/ou le rail de guidage (15).

20. Installation d'étirage selon l'une des revendications 1 à 19, **caractérisée en ce que** l'unité de chaîne à pince (KK) est ainsi réalisée que les forces qui s'y appliquent sont découplées dans une mesure telle que les forces appliquées à l'unité de chaîne à pince (KK) mènent à une augmentation maximum de 5 % ou de 10 % des couples de basculement ou de rotation, et ainsi à une augmentation correspondante du pressage de surface entre l'unité de chaîne à pince (KK) et le rail porteur (17) et/ou le rail de guidage (15).

21. Installation d'étirage selon l'une des revendications 1 à 20, **caractérisée en ce que** le rail porteur (17) inclut des dispositifs articulés (G, 81, 81'), au moyen desquels un premier et un second morceau partiel successif (170 ; Tsi, Tsi+1M Tri, TRi+1) du rail porteur (17) sont susceptibles d'être réglés l'un par rapport à l'autre dans une position angulaire différente.

22. Installation d'étirage selon l'une des revendications 1 à 20, **caractérisée en ce que** le rail porteur (17) est pourvu de liaisons articulées (G, 81, 81'), et, dans la direction d'avance, des morceaux partiels (TSi, TSi+1) de rail porteur sont formés avant et après une liaison articulée (G, 81, 81'), morceaux qui sont susceptibles d'être réglés les uns par rapport aux autres dans une position angulaire différente, et **en ce que** le rail porteur (17) est interrompu, dans la zone de la liaison articulée (G, 81, 81'), par une fente de séparation (SP), et les deux morceaux partiels interrompus (TSi, TSi+1) du canal (122) sont reliés l'un à l'autre via un conduit de by-pass (141, 141a, 141b).

23. Installation d'étirage selon la revendication 21 ou 22, **caractérisée en ce que** la surface de déplacement et d'appui du rail porteur (17a) est agencée au même niveau dans la zone de la liaison articulée (G, 81, 81') jusqu'au-delà des fentes de séparation (SP) prévues dans cette zone, c'est-à-dire en alignement mutuel, et dans la zone de la fente de séparation (SP) des chanfreins d'approche et d'éloignement (91, 92) sont réalisés sur les morceaux partiels (TSi, TSi+1) des rails porteurs mutuellement adjacents à cet endroit.

24. Installation d'étirage selon la revendication 22 ou 23, **caractérisée en ce que** les morceaux partiels (TSi, TSi+1) du rail porteur et la liaison articulée (G, 81, 81') prévue dans cette zone, sont réalisés de manière rigide à la flexion et à la torsion, en maintenant une surface de déplacement et d'appui (17a) pour rail porteur, en alignement mutuel.

25. Installation d'étirage selon l'une des revendications 22 à 24, **caractérisée en ce que** le rail porteur (17) ou des morceaux partiels individuels du rail porteur (TSi, TSi+1) inclu(en)t, avant ou après une liaison articulée (G, 81, 81'), une structure porteuse (TRi, TRi+1), et ceci avec une partie porteuse située en bas (99) et une partie porteuse supérieure (98) à distance de celle-ci, dans laquelle les parties porteuses (99, 98) inférieure et supérieure respectives sont reliées fermement l'une à l'autre respectivement via au moins une nervure de renforcement (100), et la partie porteuse supérieure et la partie porteuse inférieure (99, 98) de deux structures porteuses mutuellement successives (TRi, TRi+1) sont agencées dans la structure en chevauchement jusqu'au-delà de l'articulation (G, 81, 81').

26. Installation d'étirage selon la revendication 25 **caractérisée en ce qu'**une portion d'articulation à plaque porteuse (98', 99') en forme de plaque est réalisée respectivement sur au moins une partie porteuse inférieure et une partie porteuse supérieure (98, 99), portion dans laquelle est agencé un disque d'articulation (81, 81') qui traverse un perçage correspondant dans la zone de chevauchement avec la partie porteuse adjacente (99, 98) située en avant ou en arrière.

27. Installation d'étirage selon l'une des revendications 22 à 26, **caractérisée en ce que** le rail porteur (17) ou les morceaux partiels du rail porteur (TRi, TRi+1) est/sont soutenu(s) et maintenu(s) sur les parties porteuses (99) inférieures soit directement soit avec interposition d'éléments d'écartement ou d'éléments d'écartement isolants (42).

28. Installation d'étirage selon l'une des revendications 1 à 27, **caractérisée en ce que** la partie formant pince (6) et/ou la partie de transport (7) est/sont formée(s) ou inclus(en)t un ou plusieurs matériaux composites, en particulier des matériaux composites avec fibres, en particulier des fibres longues, à proportion volumétrique ou pondérale de plus de 25 %, en particulier plus de 30 %, 40 %, 50 %, 60 %, 70 %, 80 % ou plus de 90 %.

29. Installation d'étirage selon la revendication 28, **caractérisée en ce que** la partie formant pince (6) et/ou la partie de transport (7) inclus(en)t au moins un matériau composite avec au moins un matériau de matrice et avec au moins un composant fonctionnel ou un composant à propriétés particulières, dans laquelle
a) ledit au moins un matériau de matrice inclut ou est constitué d'un ou plusieurs des matériaux suivants : aluminium, magnésium, céramique, carbone, produit thermodurcissable "duromère", élastomère et/ou produit thermoplastique, en particulier plastique thermodurcissable, polymère résine, résine de polyester, résine de polyuréthane, polyuréthane, résine époxy, résine au silicone, résine vinyle ester, résine phénolique, résine acrylique (PMMA), et
b) le composant fonctionnel ou le composant à propriétés particulières inclut ou est constitué d'un ou plusieurs des matériaux suivants : fibres de verre, fibres de carbone, fibres céramiques, fibres aramides, fibres de bore, fibres d'acier et/ou fibres de nylon, en particulier dans une réalisation à fibres longues.

30. Installation d'étirage selon l'une des revendications 1 à 29, **caractérisée en ce que** la chaîne de transport (13) est guidée sur une périphérie partielle autour d'au moins une roue dentée (51), et **en ce que** dans cette région également le rail porteur (17) est doté de la surface de déplacement et d'appui de rail porteur (17a).

31. Installation d'étirage selon l'une des revendications 1 à 30, **caractérisée par** les caractéristiques suivantes :
- une roue dentée de sortie (AR) est prévue dans la zone de la voie de guidage (2),
- cette roue dentée de sortie (AR) est susceptible d'être réglée et positionnée dans des positions différentes,
- un levier (706) est agencé concentriquement à l'axe de la roue dentée (AR) avec possibilité de rotation, avec à l'extrémité radiale du levier une came de sortie (701) susceptible d'être réglée relativement et dont l'orientation est modifiable avec le rail de guidage flexible qui s'y termine (15) pour donner une autre forme de came (700),
- à cet effet, un sabot de réglage (705) est rapporté sur le levier (706) capable de pivoter autour de l'axe de la roue dentée (AR), de telle façon que malgré un réglage de la came de sortie (701) une liaison tangentielle est toujours conservée depuis le rail de guidage flexible adjacent (15) vers la roue dentée de sortie (AR).

32. Installation d'étirage selon l'une des revendications 1 à 31, **caractérisée en ce que** la force pondérale (FG) appliquée au centre de gravité (GS) de l'unité de chaîne à pince (KK), respectivement le plan de gravité (Sz), passant par ce centre de gravité (GS), de l'unité de chaîne à pince (KK), est situé(e) dans la zone de la surface de déplacement et d'appui pour force de chaîne (31) ou de la surface de déplacement et d'appui pour force d'étirage (33), ou encore à l'intérieur de la largeur du rail de guidage (15).
